(19) Europäisches Patentamt
European Patent Office
Office européen des brevets

(11) **EP 4 770 026 A1**

(12) **EUROPEAN PATENT APPLICATION**
published in accordance with Art. 153(4) EPC

(43) Date of publication:
**01.07.2026 Bulletin 2026/27**

(21) Application number: **23957176.3**

(22) Date of filing: **31.10.2023**

(51) International Patent Classification (IPC):
**H04L 27/26** (2006.01)

(52) Cooperative Patent Classification (CPC):
**H04L 27/26**

(86) International application number:
**PCT/CN2023/128852**

(87) International publication number:
**WO 2025/091299 (08.05.2025 Gazette 2025/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **CUI, Shengjiang**
  **Guangdong 523860 (CN)**
• **XU, Weijie**
  **Guangdong 523860 (CN)**
• **ZUO, Zhisong**
  **Guangdong 523860 (CN)**

(74) Representative: **Penza, Giancarlo**
**Bugnion S.p.A.**
**Viale Lancetti, 17**
**20158 Milano (IT)**

(54) **BIT SEQUENCE PREPROCESSING METHODS, OOK SYMBOL GENERATION METHOD, AND APPARATUS**

(57) The present application belongs to the technical field of Internet of Things. Disclosed are bit sequence preprocessing methods, an OOK symbol generation method, and an apparatus. A bit sequence preprocessing method comprises: acquiring a first bit sequence having a length of a first number L; and if the first number L is not an integer multiple of a second number M, processing the first bit sequence into a second bit sequence having a length of a third number L', wherein the second bit sequence is used for being divided into at least one sequence segment having a length of the second number M for OOK modulation, so as to obtain M OOK symbols corresponding to each sequence segment.

Preprocessing

A first bit sequence having a length of a first number L is acquired — 220

In a case where the first number L is not an integer multiple of a second number M, the first bit sequence is processed into a second bit sequence having a length of a third number L' — 240

OOK modulation

The second bit sequence is divided to obtain at least one sequence segment having a length of a second number M — 260

OOK-modulation is performed on each sequence segment to obtain M OOK symbols corresponding to each sequence segment — 280

**FIG. 10**

**Description**

TECHNICAL FIELD

Embodiments of the disclosure relate to the field of the Internet of Things, and in particular to a method for preprocessing a bit sequence, a method for generating an On Off Keying (OOK) symbol, and apparatuses.

BACKGROUND

Multi-carrier On Off Keying (MC-OOK) waveforms are studied in the 3rd Generation Partnership Project (3GPP), and it is supported that M OOK symbols are transmitted by one Orthogonal Frequency Division Multiplexing (OFDM) symbol.

How to ensure the smooth transmission of OOK symbols is an unsolvedtechnical problem.

SUMMARY

The embodiments of the disclosure provide a method for preprocessing a bit sequence, a method for generating an OOK symbol, and apparatuses. The technical schemes are as follows.

In an aspect, the embodiments of the disclosure provide a method for preprocessing a bit sequence, performed by a sending end device and including operations as follows.

A first bit sequence having a length of a first number L is acquired.

In a case where the first number L is not an integer multiple of a second number M, the first bit sequence is processed into a second bit sequence having a length of a third number L'.

The second bit sequence is configured to be divided into at least one sequence segment having a length of the second number M for On Off Keying (OOK) modulation, to obtain M OOK symbols corresponding to each sequence segment.

In another aspect, the embodiments of the disclosure provide a method for generating an OOK symbol, performed by a sending end device and including operations as follows.

A first bit sequence having a length of a first number L is acquired.

The first bit sequence is divided into at least one sequence segment according to a second number M for OOK modulation to obtain an OOK symbol sequence corresponding to each sequence segment, where the OOK symbol sequence includes a first type of symbol and/or a second type of symbol, the first type of symbol corresponds to a bit having a first value, and the second type of symbol corresponds to a bit having a second value.

In a case where a number of bits in a last sequence segment is smaller than the second number M, a third type of symbol is added to the OOK symbol sequence corresponding to the last sequence segment to enable the OOK symbol sequence corresponding to the last sequence segment to include at least M OOK symbols.

The third type of symbol is an OOK symbol different from the first type of symbol and the second type of symbol.

In another aspect, the embodiments of the disclosure provide a method for sending an OOK symbol, performed by a sending end device and including an operation as follows.

At least one set of OOK symbols forming sequence(s) is sent, where each set of OOK symbols forming the sequence includes a second number M of OOK symbols.

The at least one set of OOK symbols forming sequence(s) corresponds to a first bit sequence, a last one among the at least one set of OOK symbols forming sequence(s) includes a third type of symbol, the third type of symbol is an OOK symbol different from a first type of symbol and a second type of symbol, the first type of symbol corresponds to a bit having a first value, and the second type of symbol corresponds to a bit having a second value.

In another aspect, the embodiments of the disclosure provide a method for determining a Transport Block Size (TBS) value, performed by a sending end device and including an operation as follows.

The TBS value is determined to be a numerical value related to a second number M, the second number M being a number of OOK symbols transmitted within a preset duration, and the preset duration being determined by a basic time-domain unit in a cellular communication system or a Wireless Fidelity (WiFi) system.

In another aspect, the embodiments of the disclosure provide a method for preprocessing a bit sequence, performed by a receiving end device and including an operation as follows.

OOK symbols corresponding to a second bit sequence having a length of a third number L' are received.

The second bit sequence is obtained by processing, by a sending end device, a first bit sequence in a case where a first number L corresponding to the first bit sequence is not an integer multiple of a second number M, and the second bit sequence is configured to be divided into at least one sequence segment having a length of the second number M for OOK modulation, to obtain M OOK symbols corresponding to each sequence segment.

In another aspect, the embodiments of the disclosure provide a method for receiving an OOK symbol, performed by a receiving end device and including an operation as follows.

At least one set of OOK symbols forming sequence(s) is received, where each set of OOK symbols forming the sequence includes a second number M of OOK symbols.

The at least one set of OOK symbols forming sequence(s) corresponds to a first bit sequence, a last one among the at least one set of OOK symbols forming sequence(s) includes a third type of symbol, the third type of symbol is an OOK symbol different from a first type of symbol and a second type of symbol, the first type of symbol corresponds to a bit having a first value, and the second type of symbol corresponds to a bit having a second value.

In another aspect, the embodiments of the disclosure provide a method for determining a TBS value, performed by a receiving end device and including an operation as follows.

A TBS mapping relationship is sent, where the TBS mapping relationship is configured to be provided to a sending end device for determining the TBS value to be a numerical value related to a second number M, the second number M being a number of OOK symbols transmitted within a preset duration, and the preset duration being determined by a basic time-domain unit in a cellular communication system or a Wireless Fidelity (WiFi) system.

In another aspect, the embodiments of the disclosure provide an apparatus for preprocessing a bit sequence that includes an acquiring module and a processing module.

The acquiring module is configured to acquire a first bit sequence having a length of a first number L.

The processing module is configured to, in a case where the first number L is not an integer multiple of a second number M, process the first bit sequence into a second bit sequence having a length of a third number L'.

The second bit sequence is configured to be divided into at least one sequence segment having a length of the second number M for On Off Keying (OOK) modulation, to obtain M OOK symbols corresponding to each sequence segment.

In another aspect, the embodiments of the disclosure provide an apparatus for generating an OOK symbol that includes an acquiring module, a modulating module and an adding module.

The acquiring module is configured to acquire a first bit sequence having a length of a first number L.

The modulating module is configured to divide the first bit sequence into at least one sequence segment according to a second number M for OOK modulation to obtain an OOK symbol sequence corresponding to each sequence segment, wherein the OOK symbol sequence includes a first type of symbol and/or a second type of symbol, the first type of symbol corresponds to a bit having a first value, and the second type of symbol corresponds to a bit having a second value.

The adding module is configured to, in a case where a number of bits in a last sequence segment is smaller than the second number M, add a third type of symbol to the OOK symbol sequence corresponding to the last sequence segment to enable the OOK symbol sequence corresponding to the last sequence segment to include at least M OOK symbols.

The third type of symbol is an OOK symbol different from the first type of symbol and the second type of symbol.

In another aspect, the embodiments of the disclosure provide an apparatus for sending an OOK symbol that includes a sending module.

The sending module is configured to send at least one set of OOK symbols forming sequence(s), wherein each set of OOK symbols forming the sequence includes a second number M of OOK symbols.

The at least one set of OOK symbols forming sequence(s) corresponds to a first bit sequence, a last one among the at least one set of OOK symbols forming sequence(s) includes a third type of symbol, the third type of symbol is an OOK symbol different from a first type of symbol and a second type of symbol, the first type of symbol corresponds to a bit having a first value, and the second type of symbol corresponds to a bit having a second value.

In another aspect, the embodiments of the disclosure provide an apparatus for determining an TBS value that includes a determining module.

The determining module is configured to determine the TBS value to be a numerical value related to a second number M, the second number M being a number of OOK symbols transmitted within a preset duration, and the preset duration being determined by a basic time-domain unit in a cellular communication system or a Wireless Fidelity (WiFi) system.

In another aspect, the embodiments of the disclosure provide an apparatus for preprocessing a bit sequence that includes a receiving module.

The receiving module is configured to receive On Off Keying (OOK) symbols corresponding to a second bit sequence having a length of a third number L'.

The second bit sequence is obtained by processing, by a sending end device, a first bit sequence in a case where a first number L corresponding to the first bit sequence is not an integer multiple of a second number M, and the second bit sequence is configured to be divided into at least one sequence segment having a length of the second number M for OOK modulation, to obtain M OOK symbols corresponding to each sequence segment.

In another aspect, the embodiments of the disclosure provide an apparatus for receiving an OOK symbol that includes a receiving module.

The receiving module is configured to receive at least one set of OOK symbols forming sequence(s), where each set of OOK symbols forming the sequence includes a second number M of OOK symbols.

The at least one set of OOK symbols forming sequence(s) corresponds to a first bit sequence, a last one among the at least one set of OOK symbols forming sequence(s) includes a third type of symbol, the third type of symbol is an OOK symbol different from a first type of symbol and a second type of symbol, the first type of symbol corresponds to a bit having a first value, and the second type of symbol corresponds to a bit having a second value.

In another aspect, the embodiments of the disclosure provide an apparatus for determining an TBS value that includes a sending module.

The sending module is configured send a TBS mapping relationship, wherein the TBS mapping relationship is configured to be provided to a sending end device for determining the TBS value to be a numerical value related to a second number M, the second number M being a number of OOK symbols transmitted within a preset duration, and the preset duration being determined by a basic time-domain unit in a cellular communication system or a Wireless Fidelity (WiFi) system.

In another aspect, the embodiments of the disclosure provide a terminal including a processor.

The processor is configured to acquire a first bit sequence having a length of a first number L.

The processor is further configured to, in a case where the first number L is not an integer multiple of a second number M, process the first bit sequence into a second bit sequence having a length of a third number L'.

The second bit sequence is configured to be divided into at least one sequence segment having a length of the second number M for On Off Keying (OOK) modulation, to obtain M OOK symbols corresponding to each sequence segment.

In another aspect, the embodiments of the disclosure provide a terminal including a processor.

The processor is configured to acquire a first bit sequence having a length of a first number L.

The processor is further configured to divide the first bit sequence into at least one sequence segment according to a second number M for OOK modulation to obtain an OOK symbol sequence corresponding to each sequence segment, wherein the OOK symbol sequence includes a first type of symbol and/or a second type of symbol, the first type of symbol corresponds to a bit having a first value, and the second type of symbol corresponds to a bit having a second value.

The processor is further configured to, in a case where a number of bits in a last sequence segment is smaller than the second number M, add a third type of symbol to the OOK symbol sequence corresponding to the last sequence segment to enable the OOK symbol sequence corresponding to the last sequence segment to include at least M OOK symbols.

The third type of symbol is an OOK symbol different from the first type of symbol and the second type of symbol.

In another aspect, the embodiments of the disclosure provide a terminal including a processor and a transmitter connected with the processor.

The transmitter is configured to send at least one set of OOK symbols forming sequence(s), wherein each set of OOK symbols forming the sequence includes a second number M of OOK symbols.

The at least one set of OOK symbols forming sequence(s) corresponds to a first bit sequence, a last one among the at least one set of OOK symbols forming sequence(s) includes a third type of symbol, the third type of symbol is an OOK symbol different from a first type of symbol and a second type of symbol, the first type of symbol corresponds to a bit having a first value, and the second type of symbol corresponds to a bit having a second value.

In another aspect, the embodiments of the disclosure provide a terminal including a processor.

The processor is configured to determine the TBS value to be a numerical value related to a second number M, the second number M being a number of OOK symbols transmitted within a preset duration, and the preset duration being determined by a basic time-domain unit in a cellular communication system or a Wireless Fidelity (WiFi) system.

In another aspect, the embodiments of the disclosure provide a network device including a processor and a receiver connected with the processor.

The receiver is configured to receive On Off Keying (OOK) symbols corresponding to a second bit sequence having a length of a third number L'.

The second bit sequence is obtained by processing, by a sending end device, a first bit sequence in a case where a first number L corresponding to the first bit sequence is not an integer multiple of a second number M, and the second bit sequence is configured to be divided into at least one sequence segment having a length of the second number M for OOK modulation, to obtain M OOK symbols corresponding to each sequence segment.

In another aspect, the embodiments of the disclosure provide a network device including a processor and a receiver connected with the processor.

The receiver is configured to receive at least one set of OOK symbols forming sequence(s), wherein each set of OOK symbols forming the sequence includes a second number M of OOK symbols.

The at least one set of OOK symbols forming sequence(s) corresponds to a first bit sequence, a last one among the at least one set of OOK symbols forming sequence(s) includes a third type of symbol, the third type of symbol is an OOK symbol different from a first type of symbol and a second type of symbol, the first type of symbol corresponds to a bit having a first value, and the second type of symbol corresponds to a bit having a second value.

In another aspect, the embodiments of the disclosure provide a network device including a processor and a transmitter connected with the processor.

The transmitter is configured send a TBS mapping relationship, wherein the TBS mapping relationship is configured to be provided to a sending end device for determining the TBS value to be a numerical value related to a second number M, the second number M being a number of OOK symbols transmitted within a preset duration, and the preset duration being determined by a basic time-domain unit in a cellular communication system or a Wireless Fidelity (WiFi) system.

In another aspect, the embodiments of the disclosure provide a computer-readable storage medium having stored thereon a computer program that is executed by a processor to perform the method for preprocessing a bit sequence, and/or the method for generating an OOK symbol, and/or the method for transmitting an OOK symbol, and/or the method for determining a TBS value, and/or the method for preprocessing a bit sequence, and/or the method for receiving an OOK symbol, and/or the method for determining a TBS value.

In another aspect, the embodiments of the disclosure provide a chip, including a programmable logic circuit and/or program instructions. When running on a terminal or a network device, the chip is configured to perform the method for preprocessing a bit sequence, and/or the method for generating an OOK symbol, and/or the method for transmitting an OOK symbol, and/or the method for determining a TBS value, and/or the method for preprocessing a bit sequence, and/or the method for receiving an OOK symbol, and/or the method for determining a TBS value.

In another aspect, the embodiments of the disclosure provide a computer program product, including computer instructions stored in a computer readable storage medium. A processor of a communication device reads the computer instructions from the computer-readable storage medium and executes the computer instructions to cause the communication device to perform the method for preprocessing a bit sequence, and/or the method for generating an OOK symbol, and/or the method for transmitting an OOK symbol, and/or the method for determining a TBS value, and/or the method for preprocessing a bit sequence, and/or the method for receiving an OOK symbol, and/or the method for determining a TBS value.

In another aspect, the embodiments of the disclosure provide a computer program that is executed by a processor of a communication device to perform the method for preprocessing a bit sequence, and/or the method for generating an OOK symbol, and/or the method for transmitting an OOK symbol, and/or the method for determining a TBS value, and/or the method for preprocessing a bit sequence, and/or the method for receiving an OOK symbol, and/or the method for determining a TBS value.

The technical solutions provided by the embodiments of the disclosure my include the following beneficial effects.

When the first number L corresponding to the first bit sequence is not an integer multiple of the second number M, the first bit sequence is processed into a second bit sequence having a length of the third number L', so that the processed second bit sequence can be divided into at least one sequence segment having a length of the second number M, thereby ensuring that the OOK symbols can be smoothly transmitted even when the number of valid OOK symbols to be transmitted is not an integer multiple of M.

BRIEF DESCRIPTION OF THE DRAWINGS

FIG. 1 shows a schematic diagram of a communication system provided by the related art.

FIG. 2 shows a schematic diagram of radio frequency energy harvesting provided by the related art.

FIG. 3 shows a schematic diagram of a backscatter communication process provided by the related art.

FIG. 4 shows a schematic diagram of resistive load modulation provided by the related art.

FIG. 5 shows a schematic diagram of encoding modes provided by the related art.

FIG. 6 shows a schematic structural diagram of a cellular communication system provided by an embodiment of the disclosure.

FIG. 7 shows a schematic structural diagram of a WiFi system provided by an embodiment of the disclosure.

FIG. 8 shows a flowchart of generating an OOK symbol provided by an embodiment of the disclosure.

FIG. 9 shows a flowchart of generating an OOK symbol provided by an embodiment of the disclosure.

FIG. 10 shows a flowchart of a method for preprocessing a bit sequence provided by an embodiment of the disclosure.

FIG. 11 shows a flowchart of generating an OOK symbol provided by an embodiment of the disclosure.

FIG. 12 is a flowchart of generating an OOK symbol according to an embodiment of the disclosure.

FIG. 13 shows a flowchart of generating an OOK symbol provided by an embodiment of the disclosure.

FIG. 14 shows a flowchart of a method for preprocessing a bit sequence provided by an embodiment of the disclosure.

FIG. 15 shows a flowchart of a method for preprocessing a bit sequence provided by an embodiment of the disclosure.

FIG. 16 shows a schematic diagram of a method for preprocessing a bit sequence provided by an embodiment of the disclosure.

FIG. 17 shows a schematic diagram of a method for preprocessing a bit sequence provided by an embodiment of the disclosure.

FIG. 18 shows a schematic diagram of a method for preprocessing a bit sequence provided by an embodiment of the disclosure.

FIG. 19 shows a schematic diagram of a method for preprocessing a bit sequence provided by an embodiment of the disclosure.

FIG. 20 shows a flowchart of a method for preprocessing a bit sequence provided by an embodiment of the disclosure.

FIG. 21 shows a schematic diagram of a method for preprocessing a bit sequence provided by an embodiment of the disclosure.

FIG. 22 shows a schematic diagram of a method for preprocessing a bit sequence provided by an embodiment of the disclosure.

FIG. 23 shows a flowchart of a method for preprocessing a bit sequence provided by an embodiment of the disclosure.

FIG. 24 shows a flowchart of a method for preprocessing a bit sequence provided by an embodiment of the disclosure.

FIG. 25 shows a flowchart of a method for preprocessing a bit sequence provided by an embodiment of the disclosure.

FIG. 26 shows a schematic diagram of a method for preprocessing a bit sequence provided by an embodiment of the disclosure.

FIG. 27 shows a flowchart of a method for preprocessing a bit sequence provided by an embodiment of the disclosure.

FIG. 28 shows a flowchart of a method for preprocessing a bit sequence provided by an embodiment of the disclosure.

FIG. 29 shows a flowchart of a method for preprocessing a bit sequence provided by an embodiment of the disclosure.

FIG. 30 shows a schematic diagram of a method for preprocessing a bit sequence provided by an embodiment of the disclosure.

FIG. 31 shows a flowchart of a method for preprocessing a bit sequence provided by an embodiment of the disclosure.

FIG. 32 shows a flowchart of a method for preprocessing a bit sequence provided by an embodiment of the disclosure.

FIG. 33 shows a flowchart of a method for preprocessing a bit sequence provided by an embodiment of the disclosure.

FIG. 34 shows a flowchart of a method for preprocessing a bit sequence provided by an embodiment of the disclosure.

FIG. 35 shows a flowchart of a method for preprocessing a bit sequence provided by an embodiment of the disclosure.

FIG. 36 shows a flowchart of a method for preprocessing a bit sequence provided by an embodiment of the disclosure.

FIG. 37 shows a schematic diagram of a method for preprocessing a bit sequence provided by an embodiment of the disclosure.

FIG. 38 shows a flowchart of a method for preprocessing a bit sequence provided by an embodiment of the disclosure.

FIG. 39 shows a flowchart of generating an OOK symbol provided by an embodiment of the disclosure.

FIG. 40 shows a schematic diagram of a method for generating an OOK symbol provided by an embodiment of the disclosure.

FIG. 41 shows a flowchart of a method for sending an OOK symbol provided by an embodiment of the disclosure.

FIG. 42 shows a flowchart of a method for determining an TBS value provided by an embodiment of the disclosure.

FIG. 43 shows a flowchart of a method for determining an TBS value provided by an embodiment of the disclosure.

FIG. 44 shows a flowchart of a method for determining an TBS value provided by an embodiment of the disclosure.

FIG. 45 shows a flowchart of a method for determining an TBS value provided by an embodiment of the disclosure.

FIG. 46 shows a flowchart of a method for preprocessing a bit sequence provided by an embodiment of the disclosure.

FIG. 47 shows a flowchart of a method for preprocessing a bit sequence provided by an embodiment of the disclosure.

FIG. 48 shows a flowchart of a method for preprocessing a bit sequence provided by an embodiment of the disclosure.

FIG. 49 shows a flowchart of a method for preprocessing a bit sequence provided by an embodiment of the disclosure.

FIG. 50 shows a flowchart of a method for preprocessing a bit sequence provided by an embodiment of the disclosure.

FIG. 51 shows a flowchart of a method for preprocessing a bit sequence provided by an embodiment of the disclosure.

FIG. 52 shows a flowchart of a method for preprocessing a bit sequence provided by an embodiment of the disclosure.

FIG. 53 shows a flowchart of a method for preprocessing a bit sequence provided by an embodiment of the disclosure.

FIG. 54 shows a flowchart of a method for preprocessing a bit sequence provided by an embodiment of the disclosure.

FIG. 55 shows a flowchart of a method for preprocessing a bit sequence provided by an embodiment of the disclosure.

FIG. 56 shows a flowchart of a method for preprocessing a bit sequence provided by an embodiment of the disclosure.

FIG. 57 shows a flowchart of a method for preprocessing a bit sequence provided by an embodiment of the disclosure.

FIG. 58 shows a flowchart of a method for preprocessing a bit sequence provided by an embodiment of the disclosure.

FIG. 59 shows a flowchart of a method for receiving an OOK symbol provided by an embodiment of the disclosure.

FIG. 60 shows a flowchart of a method for determining an TBS value provided by an embodiment of the disclosure.

FIG. 61 shows a structural block diagram of an apparatus for preprocessing a bit sequence provided by an embodiment of the disclosure.

FIG. 62 shows a structural block diagram of an apparatus for generating an OOK symbol provided by an embodiment of the disclosure.

FIG. 63 shows a structural block diagram of an apparatus for sending an OOK symbol provided by an embodiment of the disclosure.

FIG. 64 shows a structural block diagram of an apparatus for determining an TBS value provided by an embodiment of the disclosure.

FIG. 65 shows a structural block diagram of an apparatus for preprocessing a bit sequence provided by an embodiment of the disclosure.

FIG. 66 shows a structural block diagram of an apparatus for receiving an OOK symbol provided by an embodiment of the disclosure.

FIG. 67 shows a structural block diagram of an apparatus for determining an TBS value provided by an embodiment of the disclosure.

FIG. 68 shows a schematic structural diagram of a communication device provided by an embodiment of the disclosure.

DETAILED DESCRIPTION

Hereinafter, the technical solutions in the embodiments of the disclosure will be described with reference to the accompanying drawings in the embodiments of the disclosure, and it is apparent that the described embodiments are part of the embodiments of the disclosure, but not all the embodiments. Based on the embodiments in the disclosure, all other embodiments obtained by those skilled in the art without creative efforts fall within the scope of protection of the disclosure.

The technical solutions provided by the embodiments of the disclosure may be applicable to various communication systems, such as a Global System of Mobile communication (GSM) system, a Code Division Multiple Access (CDMA) system, and a Wideband Code Division Multiple Access (WCDMA) system, a General Packet Radio Service (GPRS), a Long Term Evolution (LTE) system, an Advanced Long Term Evolution (LTE-A) system, a New Radio (NR) system, an evolution system of the NR system, an LTE-based access to unlicensed spectrum (LTE-U) system, an NR-based access to unlicensed spectrum (NR-U) system, a Non-Terrestrial Network (NTN) system, a Universal Mobile Telecommunication System (UMTS), a Wireless Local Area Network (WLAN), a Wi-Fi system, a 5th-Generation (5G) system, and a cellular passive Internet of Things (IoT) system, may also be applied to a subsequent evolution system of the 5G NR system, and may further be applied to the B5G, the 6G and and subsequent evolution system thereof.

It is to be understood that in some embodiments of the disclosure, "5G" may also be referred to as "5G NR" or "NR". It is to be understood that in the embodiments of the disclosure, the term "correspond" may mean that there is a direct correspondence or an indirect correspondence between two items, may also mean that there is an association relationship between the two items, and may also be a relationship such as indication and being indicated, configuration and being configured, etc. In the embodiments of the disclosure, the "pre-defined" may be achieved by prestoring corresponding codes, tables or other means used for indicating relevant information in devices (e.g., including terminal devices and network devices), and the specific implementation thereof is not limited in the disclosure. For example, "pre-defined" may refer to what is defined in a protocol. In the embodiments of the disclosure, the "protocol" may be a standard protocol in the communication field. For example, the protocol may include an LTE protocol, an NR protocol, an IoT protocol and related protocols applied in future communication systems, which are not limited in the disclosure.

The terminal device involved in the embodiments of the disclosure may be an active device, and the active device refers to a device having its own power supply and capable of actively generating and transmitting signals, such as a mobile phone, a computer, a smart watch, a smart bracelet, and the like; the terminal device may also be a passive device, and the passive device refers to a device that does not require a power supply or can operate by receiving energy from other devices, and may be referred to as a zero-power device, a zero-power terminal, a low power device, a low power terminal, or the like; the terminal device may also be a device that obtains energy from the environment, which can be referred to as an ambient IoT device; and the terminal device may be a device deployed at a fixed location, referred to as a zero-power Station (STA), a low power STA, or the like, may be a terminal having a Low Power Wake-Up Receiver (LP-WUR) in a cellular system, or may be a STA having a Wake-Up Receiver (WUR) in a WiFi system.

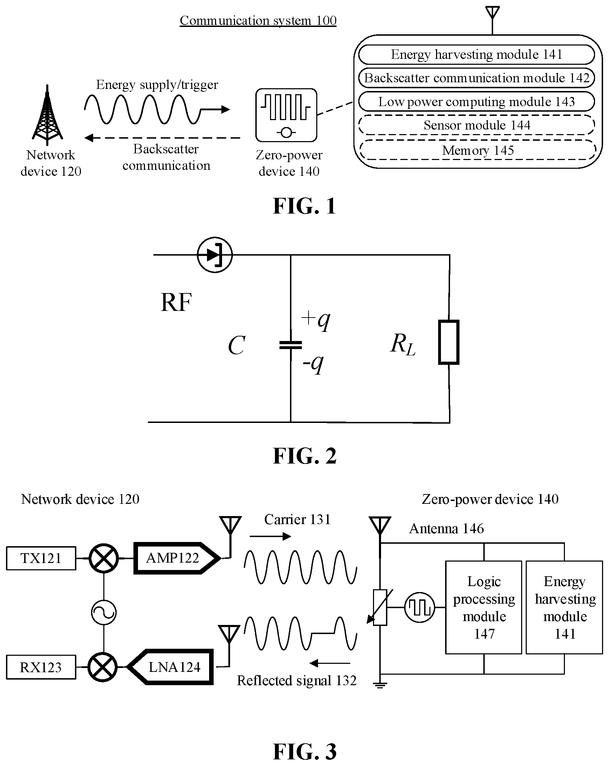

FIG. 1 shows a schematic diagram of a communication system 100 provided by the related art, which includes a network device 120 and a zero-power device 140.

The network device 120 is configured to send a wireless power supply signal and a downlink communication signal to the zero-power device 140, and to receive a backscatter signal from the zero-power device 140. The zero-power device 140, also referred to as an ambient IoT device or an AMP device, includes an energy harvesting module 141, a backscatter communication module 142, and a low power computing module 143. The energy harvesting module 141 may harvest energy carried by radio waves (wireless signals) in space for driving the low-power computing module 143 of the zero-power device 140 and implementing backscatter communication. After obtaining energy, the zero-power device 140 may receive the control signaling of the network device 120, and send data to the network device 120 based on backscattering according to the control signaling. The sent data may come from data stored by the zero-power device 140 itself (e.g., identity identifier or pre-written information such as manufacturing date, brand, manufacturer, etc. of a commodity).

The zero-power device 140 may also include a sensor module 144 and a memory 145. The sensor module 144 may include various types of sensors, and the zero-power device 140 may report, based on the zero-power mechanism, data collected by various types of sensors. The memory 145 is used to store some basic information (such as article identifier, etc.) or to obtain sensing data such as ambient temperature and ambient humidity.

The zero-power device 140 itself does not need a battery, and at the same time, the low power computing module 143 can perform simple operation such as simple signal demodulation, decoding, encoding, and modulation, thus the zero-power module only needs a minimalist hardware design, so that the zero-power device 140 is very low in cost and small in volume.

The network device 120 includes, but is not limited to: a cellular network device such as 5G/6G network device, a base station device; a WiFi/WLAN network device such as an Access Point (AP), router, mobile AP such as mobile phone and the like.

The zero-power device 140 includes, but is not limited to, a handheld device, a wearable device, a vehicle-mounted device, an Internet of Things device, and the like, and may be at least one of a mobile phone, a tablet computer, an electronic book reader, a laptop computer, a desktop computer, a television, a game machine, an Augmented Reality (AR) terminal, a Virtual Reality (VR) terminal, and a Mixed Reality (MR) terminal, a wearable device, a handle, an electronic tag, a controller, and the like.

Next, the key technologies of zero-power communication are introduced.

·Radio Frequency (RF) Power Harvesting

FIG. 2 shows a schematic diagram of radio frequency energy harvesting provided by the related art. The RF power harvesting is based on the principle of electromagnetic induction, using an RF module to pass electromagnetic induction and maintain a parallel connection relationship with a capacitor C and a load resistor $R_L$ to implement the collection of space electromagnetic wave energy and obtain the energy needed to drive the zero-power device, such as driving low power demodulation module, modulation module, sensor, memory readout and the like. Therefore, the zero-power device does not require a traditional battery.

·Backscatter Communication

FIG. 3 shows a schematic diagram of a backscatter communication process provided by the related art. The zero-power device 140 receives the wireless signal carrier wave 131 transmitted by a transmitting module (TX) 121 of the network device 120 using an AMPlifier (AMP) 122, modulates the wireless signal carrier wave 131, loads information to be transmitted using the logic processing module 147, and collects RF power using the energy harvesting module 141. The zero-power device 140 uses the antenna 146 to radiate the modulated reflected signal 132. This information transmission process is referred to as backscatter communication. A Receive (RX) 123 of the network device 120 receives the modulated reflected signal 132 using a Low Noise Amplifier (LNA) 124. Backscattering and load modulation functions are inseparable. The load modulation completes the modulation process by adjusting and controlling circuit parameters of an oscillation loop of the zero-power device 140 according to the beat of the data stream, so that parameters such as a magnitude of an impedance of an electronic tag are changed accordingly.

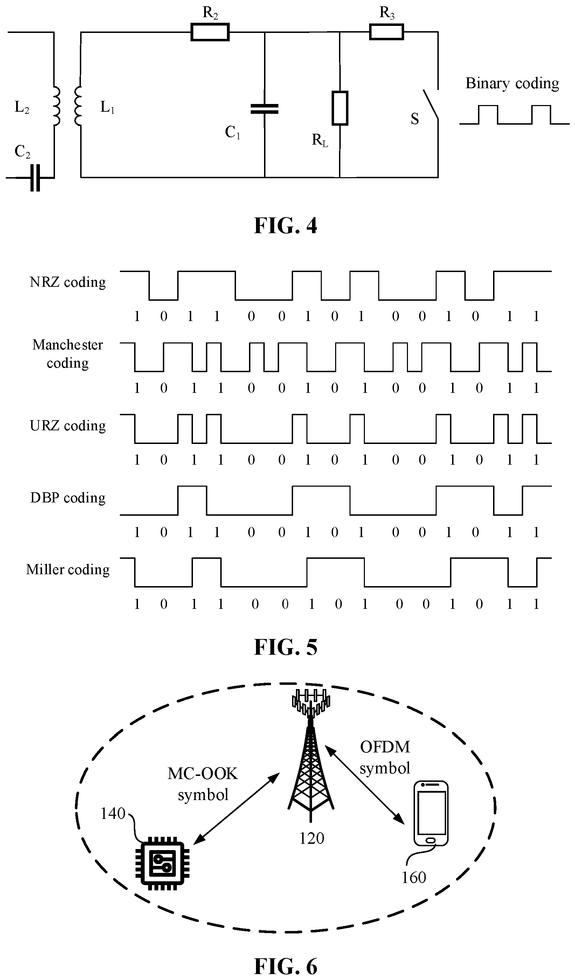

The load modulation technology mainly includes resistive load modulation and capacitive load modulation. FIG. 4 shows a schematic diagram of resistive load modulation provided by the related art. In the resistive load modulation, a load resistor $R_L$ is connected in parallel to a third resistor $R_3$, the switch S controlled based on binary coding is turned on or off, the one or off the third resistor $R_3$ will cause the voltage on the circuit to change, and the load resistor $R_L$ and the first capacitor $C_1$ maintain the parallel connection relationship, the load resistor $R_L$ and the second resistor $R_2$ maintain a serial connection relationship, the second resistor $R_2$ and the first inductance $L_1$ maintain the serial connection relationship. The first inductor $L_1$ couples with the second inductor $L_2$, and the second inductor $L_2$ and the second capacitor $C_2$ maintain the serial connection relationship. The Amplitude Shift Keying (ASK) can be implemented, that is, signal modulation and transmission are implemented by adjusting the amplitude of the backscatter signal of the zero-power device. Similarly, in capacitive load modulation, the resonant frequency of the circuit can be changed by turning on and off the capacitor, and Frequency Shift Keying (FSK) modulation can be realized, that is, by adjusting the working frequency of the backscatter signal of the zero-power device to implement signal modulation and transmission.

With the help of load modulation, the zero-power device modulates the information of the incoming signal, and implements the process of backscatter communication. Zero-power devices have significant advantages: they do not actively transmit signals, so they do not require complex radio frequency links, such as Power Amplifiers (PAs), radio frequency filters and the like, There is no need to actively generate high-frequency signals, so there is no need for high-frequency crystal oscillators; and with backscatter communication, signal transmission does not need to consume the power of the zero-power device per se.

·Extremely low power active transmission technology

Zero-power devices can also adopt very low power active transmission techniques. Different from backscattering, when a zero-power device uses extremely low power active transmission technology for data transmission, the zero-power device needs to use a relatively simple and low-power oscillator to generate a radio frequency carrier, and then modulate the information to be sent onto the radio frequency carrier. Based on the current research, the power consumption of very low power active transmitters can be as low as hundreds of microwatts, so ultra-low power data transmission can be achieved.

Next, the encoding modes of zero-power communication is introduced.

FIG. 5 shows a schematic diagram of encoding modes provided by the related art. Data transmitted by the electronic tag can use different forms of codes to represent binary "1" and "0". Radio frequency identification systems typically use one of the following coding modes: Not Return to Zero (NRZ) coding, Manchester coding, Unipolar Return to Zero (URZ) coding, Differential Binary Phase (DBP) coding, Miller coding, and differential coding. That is, different pulse signals can be used to represent 0 and 1.

·In the NRZ coding, a binary "1" is represented by a high level and a binary "0" is represented by a low level. The NRZ coding in FIG. 5 shows a level diagram of encoding binary data 101100101001011 using the NRZ mode.

·The Manchester coding is also known as the split-phase coding. In the Manchester coding, the binary value is represented by the change of level (rise or fall) in half a bit period within the bit length, the negative jump in half a bit period represents binary "1", and the positive jump in half a bit period represents binary "0". The error of data transmission refers to the fact that when the data bits transmitted by multiple electronic tags simultaneously have different values, the received rising and falling edges cancel each other out, resulting in an uninterrupted carrier signal throughout the bit length. For the Manchester coding, there can be no state without change within the bit length. The interrogator can use this error to determine the specific location of the collision. The Manchester coding is beneficial to finding errors in data transmission. When load modulation or backscatter modulation of carrier wave is used, the coding is usually used for data transmission from an electronic tag to an interrogator. The Manchester coding in FIG. 5 shows a level diagram of encoding binary data 101100101001011 using the Manchester method.

·In the URZ encoding, a high level in the first half bit period represents a binary "1", while the low level signal lasting for the entire bit period represents a binary "1". The URZ coding in FIG. 5 shows a level diagram of encoding binary data 101100101001011 using the URZ method.

·In the DBP coding, in a half bit period, the existence of any edge indicates a binary "0", and the absence of the edge indicates a binary "1", and in addition, the levels are inverted at the beginning of each bit period. For the receiver, the bit beat is relatively easy to reconstruct. The DBP coding in FIG. 5 shows a level diagram of encoding binary data 101100101001011 using the DBP method.

·In the Miller coding, an arbitrary edge in a half bit period represents a binary "1", while a level that remains unchanged over the next bit period represents a binary "0". Alternating levels occur at the beginning of the bit period, and the bit beat is easier for the receiver to reconstruct. The Miller encoding in FIG. 5 shows a level diagram of encoding binary data 101100101001011 using the Miller method.

·In the differential coding, each binary "1" to be transmitted causes a change in signal level, while for binary "0", the signal level remains unchanged.

Next, the classification of zero-power devices is introduced.

Based on the energy source and usage mode of zero-power devices, zero-power devices can be divided into types as follows.

·Passive zero-power devices

The zero-power device does not require a built-in battery. When the zero-power device is close to the network device, the zero-power device is in the near-field range formed by the antenna radiation of the network device. For example, the network device is an interrogator of a Radio Frequency Identification (RFID) system. Therefore, the antenna of the zero-power device generates an induced current through electromagnetic induction, and the induced current drives the low power chip circuit of the zero-power device. In this way, the demodulation of forward link signals and the modulation of backward link signals are implemented. For backscatter links, zero-power devices can transmit signals using backscatter or very low-power active transmission methods. Passive zero-power devices do not need built-in batteries to drive forward links or backward links, and are truly zero-power devices. Passive zero-power devices do not require batteries, and radio frequency circuits and baseband circuits thereof are very simple. For example, they do not require LNA, PA, crystal oscillators, Analog to Digital Converters (ADCs) and other devices. They are small in size, light in weight, and very cheap, have long service life and many other advantages.

·Semi-passive zero-power devices

The semi-passive zero-power device itself is not equipped with a conventional battery, and can use a radio frequency energy harvesting module to harvest radio wave energy, and at the same time store the harvested energy in an energy storage unit, which is exemplarily a capacitor. After the energy storage unit obtains energy, it can drive the low-power chip circuit of the zero-power device. In this way, the demodulation of forward link signals and the modulation of backward link signals are implemented. For backscatter links, zero-power devices can transmit signals using backscatter or very low-power active transmission methods.

The semi-passive zero-power device does not need a built-in battery to drive either a forward link or a backward link. The energy stored by the capacitor that is used in the operation comes from the radio energy collected by the radio frequency energy harvesting module, and the semi-passive zero-power device is a real zero-power device. The semi-passive zero-power device inherits many advantages of the passive zero-power device, such as small size, light weight, very cheap price, long service life and so on.

·Active zero-power devices

Zero-power devices used in some scenarios can also be active zero-power devices, and such zero-power devices can have built-in batteries. Batteries are used to drive low-power chip circuits for zero-power devices. In this way, the demodulation of forward link signals and the modulation of backward link signals are implemented. However, for backscatter links, zero-power devices can use backscatter or very low-power active transmission methods to transmit signals. Therefore, the zero-power consumption of active zero-power devices is mainly reflected in the fact that the signal transmission of the backward link does not need to consume the power of the zero-power device itself, but uses backscattering. In the active zero-power device, the built-in battery supplies power to the RFID chip, increasing the reading and writing distance of the tag and improving the reliability of communication. Therefore, it can be applied in some scenarios that have relatively high requirements on communication distance, reading delay, etc.

Next, the classification of zero-power devices based on transmitter type is introduced.

(1) Backscatter-based zero-power devices

Such zero-power devices perform uplink data transmission using backscattering as described above. Such zero-power devices do not have an active transmitter for active transmission, but only a backscatter transmitter. Therefore, when the zero-power device transmits uplink data, the network device needs to provide a carrier wave, and the zero-power device performs backscattering based on the carrier wave to implement uplink data transmission.

(2) Zero-power devices based on active transmitters

This type of zero-power device uses an active transmitter with active transmission capability for uplink data transmission. Therefore, when this type of zero-power device sends uplink data, it can send uplink data by using its own active transmitter without requiring the network device to provide carrier wave. Active transmitters suitable for zero-power devices may be, for example, ultra-low power ASK transmitters, ultra-low power FSK transmitters, etc. Based on current implementations, the overall power consumption of such transmitters can be reduced to 400-600 microwatts when transmitting signals of 100 microwatts.

(3) Zero-power devices with both backscatter and active transmitter

Such zero-power devices can support both backscatter and active transmitters. The zero-power device may determine whether to use the backscatter mode or the active transmitter for active transmission according to different situations (such as different battery levels, different available environmental energy sources), or based on the scheduling of the network device.

Next, the cellular Internet of Things is introduced.

The cellular Internet of Things is booming. For example, 3GPP has standardized IoT technologies such as Narrow Band-Internet of Things (NB-IoT), Machine-Type Communications (MTC), and RedCap, but there are still many scenarios where communication needs of the Internet of Things cannot be met. These scenarios are for example as follows.

·Harsh communication environment

Some IoT scenarios may face extreme environments such as high temperature, extremely low temperature, high humidity, high pressure, high radiation or high-speed movement. These extreme environments are for example ultra-high voltage substations, high-speed train track monitoring, environmental monitoring in alpine zones, industrial production lines, etc. In these scenarios, IoT terminal devices will not work due to the working environment limitations of conventional power supplies. In addition, the extreme working environment is not conducive to the maintenance of IoT terminal equipment, such as battery replacement.

·Requirements on extremely small size terminal forms

Some IoT communication scenarios, such as food traceability, commodity circulation, and smart wearables, require terminals to have extremely small sizes to facilitate use in these scenarios. For example, IoT terminal devices used for commodity management in the circulation process usually use the form of electronic tags and are embedded into commodity packaging in a very compact form. For another example, lightweight wearable IoT terminal devices can improve user experience while meeting user needs.

·Demand on extremely low-cost IoT communication

Numerous IoT communication scenarios require the cost of IoT terminal devices to be low enough to enhance competitiveness relative to other alternative technologies. For example, in logistics or warehousing scenarios, in order to facilitate the management of a large number of circulating items, IoT terminal devices can be attached to each item, so as to implement precise management during the entire logistics process and cycle through the communication between the IoT terminal devices and the logistics network. These scenarios require the price of IoT terminal devices to be competitive enough.

Therefore, in order to cover these unmet IoT communication needs, the cellular IoT also needs to develop ultra-low-cost, extremely small-size, battery-free/maintenance-free IoT, which are precisely what zero-power IoT delivers.

The zero-power IoT is also known as ambient IoT, or passive IoT. Ambient IoT devices refer to IoT devices that use various environmental energy, such as wireless radio frequency energy, light energy, solar energy, thermal energy, mechanical energy and other environmental energy to drive themselves. Such devices may have no energy storage capacity or have very limited energy storage capacity (such as using capacitors with a capacitance of tens of microfarads). Compared with existing IoT devices, ambient IoT devices have many advantages such as no conventional batteries, no maintenance, small size, low complexity, low cost, and long life cycle.

The zero-power IoT can be used in at least the following four types of scenarios:

(1) object recognition, such as logistics, product management in production line, and supply chain management;
(2) environmental monitoring, such as monitoring of temperature, humidity and harmful gas monitoring of working environment and natural environment;
(3) positioning, such as indoor positioning, intelligent object search, production line item positioning;
(4) intelligent control, such as intelligent control of various electrical appliances in smart homes (turning on and off air conditioners, adjusting temperature), and intelligent control of various facilities in agricultural greenhouses (automatic watering, fertilization).

Ambient IoT devices

In NR systems and WIFI systems, battery-free and low cost of devices can support low-cost mass deployment and maintenance-free operation of IoT devices. How to support ambient IoT devices (also referred to as AMP IoT devices) in NR systems and WiFi systems is studying in current standards. The energy required for their operation comes from environmental energy collection. The environmental energy sources can be wireless signals, solar energy, thermal energy etc. Such devices are similar to passive or semi-passive devices in zero-power communication.

A research project on ambient IoT devices was carried out in the RAN of the 3GPP, and ambient IoT devices were roughly divided into three device types: device A, device B and device C, each with corresponding complexity and communication capabilities.

· Device A: a device that does not have energy storage capabilities and cannot independently transmit signals, that is, it adopts backscattering transmission mode;

· Device B: a device that has energy storage capabilities and cannot independently transmit signals, that is, the backscatter signal can be amplified by using the stored energy in the backscattering transmission mode; and

· Device C: a device that has energy storage capabilities and can independently transmit signals, that is, it has active transmission capabilities.

The device A has the lowest complexity and power consumption, and the power consumption can be as low as $1\mu W$, but its communication distance is limited, generally only a few meters. The device A requires the network device to provide carrier signals for backscattering transmission. The device C generally has a large-capacity capacitor to store energy from the environment. The power consumption can support several hundred $\mu W$, active signal transmission is supported, and the device C has a large communication distance. Because the device C can actively transmit, it does not need the network device to provide a carrier signal. The complexity and power consumption of the device B are between those of the device A and the device C.

In addition, environmental energy harvesting supported by zero-power terminals can also have many types, such as wireless radio frequency, solar energy, thermal energy, mechanical energy and other energy. The zero-power terminal based on wireless radio frequency energy harvesting may need the network to provide wireless RF energy supply signals.

Next, the determination of the Transport Block Size (TBS) in the 3GPP will be introduced.

According to the resource and data transmission configuration of the network device, a total number of Resource Elements (RE) used for transmitting data information is first determined.

A UE determines the total number of REs allocated for PDSCH ($N_{RE}$) by $N_{RE} = \min\ (156, N'_{RE}) \cdot n_{PRB}$, where $n_{PRB}$ is the total number of allocated PRBs for the UE.

Then, the number $N_{info}$ of transmitted information bits is determined based on the configurations including bit rate, modulation order, layer and the like.

Unquantized intermediate variable ($N_{info}$) is obtained by $N_{info} = N_{RE}\ R\ Q_m\ v$.

Herein, $N_{info}$ represents intermediate information bits, $N_{RE}$ represents the total number of REs, R represents the bit rate, $Q_m$ represents the modulation order, v represents the number of layers transmitted.

When $N_{info} \leq 3824$, $N'_{info}$ is obtained by quantization using the following formula:

quantized intermediate number of information bits $N'_{info} = \max\ (24, 2^n \lfloor \frac{N_{info}}{2^n} \rfloor)$ where

$$\text{n} = \max\ (3, \lfloor \log_2(N_{info}) \rfloor - 6)\ .$$

Herein, $\lfloor * \rfloor$ represents rounding down.

Then, a TBS value that is closest to and not smaller than $N'_{info}$ is selected from a TBS table. See Table 1 below.

Table 1

| Index | TBS | Index | TBS | Index | TBS | Index | TBS |
|---|---|---|---|---|---|---|---|
|  | 22 | 31 | 336 | 61 | 1288 | 91 | 3624 |
| 2 | 32 | 32 | 352 | 62 | 1320 | 92 | 3752 |
| 3 | 40 | 33 | 368 | 63 | 1352 | 93 | 3824 |
| 4 | 48 | 34 | 384 | 64 | 1416 |  |  |
| 5 | 56 | 35 | 408 | 65 | 1480 |  |  |
| 6 | 64 | 36 | 432 | 66 | 1544 |  |  |
| 7 | 72 | 37 | 456 | 67 | 1608 |  |  |
| 8 | 80 | 38 | 480 | 68 | 1672 |  |  |
| 9 | 88 | 39 | 504 | 69 | 1736 |  |  |
| 10 | 96 | 40 | 528 | 70 | 1800 |  |  |
| 11 | 104 | 41 | 552 | 71 | 1864 |  |  |
| 12 | 112 | 42 | 576 | 72 | 1928 |  |  |

(continued)

| Index | TBS | Index | TBS | Index | TBS | Index | TBS |
|---|---|---|---|---|---|---|---|
| 13 | 120 | 43 | 608 | 73 | 2024 | | |
| 14 | 128 | 44 | 640 | 74 | 2088 | | |
| 15 | 136 | 45 | 672 | 75 | 2152 | | |
| 16 | 144 | 46 | 704 | 76 | 2216 | | |
| 17 | 152 | 47 | 736 | 77 | 2280 | | |
| 18 | 160 | 48 | 768 | 78 | 2408 | | |
| 19 | 168 | 49 | 808 | 79 | 2472 | | |
| 20 | 176 | 50 | 848 | 80 | 2536 | | |
| 21 | 184 | 51 | 888 | 81 | 2600 | | |
| 22 | 192 | 52 | 928 | 82 | 2664 | | |
| 23 | 208 | 53 | 984 | 83 | 2728 | | |
| 24 | 224 | 54 | 1032 | 84 | 2792 | | |
| 25 | 240 | 55 | 1064 | 85 | 2856 | | |
| 26 | 256 | 56 | 1128 | 86 | 2976 | | |
| 27 | 272 | 57 | 1160 | 87 | 3104 | | |
| 28 | 288 | 58 | 1192 | 88 | 3240 | | |
| 29 | 304 | 59 | 1224 | 89 | 3368 | | |
| 30 | 320 | 60 | 1256 | 90 | 3496 | | |

When $N_{info} > 3824$, $\overline{N'_{info}}$, is obtained by quantization using the following formula: quantized intermediate number of information bits $N'_{info} = \max (3840, 2^n * round (\frac{N_{info}-24}{2^n}))$, where $n=\lfloor \log_2 (N_{info} - 24) \rfloor - 5$ and ties in the round function are broken towards the next largest integer.

$$\text{if } R \le 1/4$$

$$TBS = 8\,C \left\lceil \frac{N'_{info}+24}{8\,C} \right\rceil - 24, \text{ where } C = \left\lceil \frac{N'_{info}+24}{3816} \right\rceil$$

$$\text{else}$$

$$\text{If } N'_{info} > 8424$$

$$TBS = 8\,C \left\lceil \frac{N'_{info}+24}{8\,C} \right\rceil - 24, \text{ where } C = \left\lceil \frac{N'_{info}+24}{8424} \right\rceil$$

$$\text{else}$$

$$TBS = 8 \left\lceil \frac{N'_{info}+24}{8} \right\rceil - 24$$

$$\text{end if}$$

Herein, *round* (*) represents rounding to the nearest integer, and $\lceil * \rceil$ represents rounding up.

FIG. 6 shows a schematic structural diagram of a cellular communication system provided by an exemplary embodiment of the disclosure. The cellular communication system includes a network device 120, an ambient IoT device 140 and terminal device 160.

The network device 120 may be an access network device in a cellular communication system, such as a base station. Transmission is performed between the network device 120 and the terminal device 160 by Orthogonal Frequency-Division Multiplexing (OFDM) symbols. Transmission between the ambient IoT device 140 and the network device 120 is performed by OOK symbols. Transmission between the ambient IoT device 140 and the terminal device 160 is performed by OOK symbols.

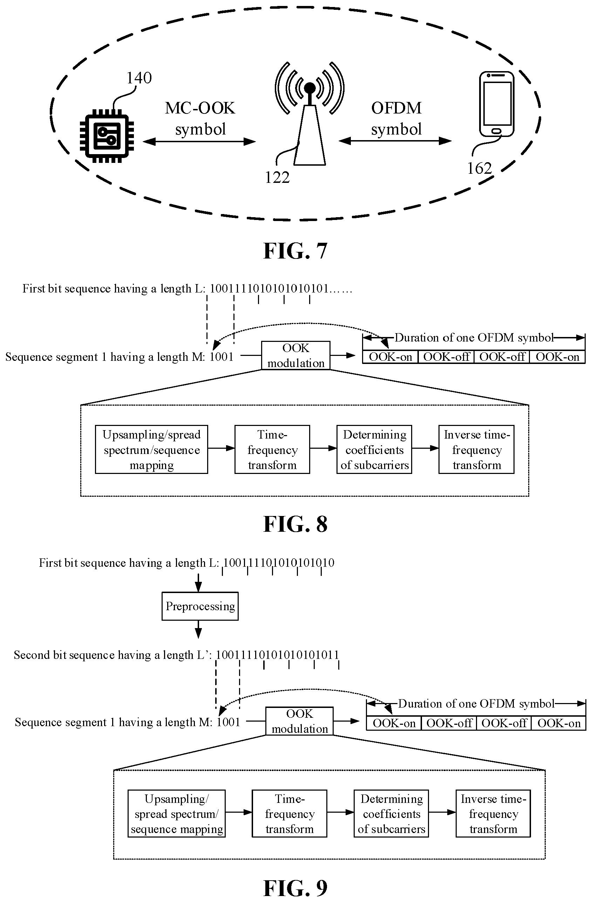

FIG. 7 shows a schematic structural diagram of a WiFi system provided by an exemplary embodiment of the disclosure. The WiFi system includes an AP 122, an ambient IoT device 140, and a Station (STA) 162.

Transmission between the AP 122 and the STA 162 is performed by OFDM symbols. Transmission between the ambient IoT device 140 and the AP 122 is performed by OOK symbols. Transmission between the ambient IoT device 140 and the STA 162 is performed by OOK symbols.

The methods provided by the embodiments of the disclosure can be applied to uplink data transmission (from ambient IoT device to network device/AP), downlink data transmission (from network device/AP to ambient IoT device), and sidelink data transmission. The sidelink data transmission includes at least one of four forms: from the ambient IoT device to another terminal device, or from another terminal device to the ambient IoT device, or from the ambient IoT device to ambient IoT device, or from another terminal device to other terminal device.

In some embodiments, the methods provided by the embodiments of the disclosure can be applied to an LP-WUR/WUS scenario, in addition to being applied to an ambient IoT device. That is, a Low Power Wake-Up Signal (LP-WUS) signal transmitted by the network device to the LP-WUR may also be used by the methods provided in the embodiments of the disclosure.

Next, the process of obtaining OOK symbols by OOK modulation is introduced.

In some embodiments, referring to FIG. 8, the sending end device acquires a first bit sequence having a length L to be transmitted, and determines a number M of OOK symbols to be transmitted in a preset duration.

The preset duration is determined by a basic time-domain unit in a cellular communication system or a WiFi system. In some embodiments, the preset duration is t OFDM symbols in which M OOK symbols may be transmitted. M is a number of OOK symbols transmitted in the t OFDM symbols. The value of t is a positive integer. In the embodiment of the disclosure, description is made by taking an example that M OOK symbols are transmitted in 1 OFDM symbol.

In some embodiments, M may be agreed by a protocol, configured by a network device, or determined by a terminal device based on a preset mapping relationship, thus enabling variable-rate transmission of OOK symbols.

The first bit sequence having a length L is divided into at least one sequence segment having a length M. When L is an integer multiple of M, the length of each sequence segment obtained based on division of the first bit sequence having the length L is M. For example, a first bit sequence having a length of a first number L is {1, 0, 0, 1, 1, 1, 1, 0, 1, 0, 1, 0, 1, 0, 1, 0, 1, 0, 1 ......} and M = 4, then the first bit sequence having the length of the third number L is divided into a plurality of sequence segments, and the length of each sequence segment is 4, for example, the obtained sequence segment 1 is {1, 0, 0, 1}.

Next, the OOK modulation is performed on each sequence segment having a length M, to obtain M OOK symbols.

The OOK modulation includes at least one of upsampling/spreading/sequence mapping, time-frequency transform, determining coefficients of subcarriers, or inverse time-frequency transform.

Upsampling/spreading/sequence mapping is the process of converting each bit (also called logical bit) or element in a sequence into a sequence of length K, where K is a positive integer greater than 1. Taking spreading processing as an example, spreading processing refers to a process in which each bit or element in a sequence is repeated K times. For example, if the sequence is {1, 0, 0, 1} and the spreading factor K = 4, the second sequence is {1, 1, 1, 1, 0, 0, 0, 0, 0, 0, 0, 0, 1, 1, 1, 1}.

The time-frequency transform, also known as Discrete Fourier Transform (DFT), refers to the processing process of transforming a sequence in the time domain into frequency-domain data of several sampling points.

Determining the coefficients of subcarriers refers to the process of determining the coefficients of multiple subcarriers during transmission according to the frequency-domain data of several sampling points. That is, the process of modulating the frequency-domain data obtained after time-frequency transform onto multiple subcarriers.

The inverse time-frequency transform, also known as Inverse Discrete Fourier Transform (IDFT), refers to the process of converting frequency-domain data of several sampling points into time-domain data of several sampling points.

Optionally, the OOK modulation process further includes at least one of phase randomization, symbol randomization, or addition of a Cyclic Prefix (CP)/Guard Interval (GI).

The phase randomization is a process of processing the second bit sequence or intermediate data using a phase randomization factor or phase randomization sequence. The intermediate data is intermediate process data generated during the process of OOK-modulating the second bit sequence. Adding phase randomization to the OOK modulation process can flatten the energy of the spectrum and improve frequency selectivity and anti-interference ability.

The symbol randomization is to eliminate the spectral lines in the Power Spectral Density (PSD) after processing OOK symbols to meet the communication requirements in some communication systems (such as 802.11) that the spectral lines need to be eliminated, so that ambient IOT devices are deployed in these communication systems.

Addition of the CP/GI is to reduce or eliminate multipath transmission interference received in the transmission process of OOK symbols by adding CP/GI symbol by symbol or entirely, thereby improving the reception quality of OOK symbols.

Exemplarily, a sequence segment 1 is OOK-modulated to obtain 4 OOK symbols. Respective ones of the 4 OOK symbols are in one-to-one correspondence with 4 bits of the sequence segment 1, for example, the first bit of the sequence segment 1 corresponds to the first one of the 4 OOK symbols, the value of the first bit is 1, and the first OOK symbol is a symbol "OOK-on".

In some embodiments, the length L of the first bit sequence is not always an integer multiple of M. For example, as shown in FIG. 9, when the first bit sequence is {1, 0, 0, 1, 1, 1, 1, 0, 1, 0, 1, 0, 1, 0, 1, 0, 1, 0}, that is, when L = 18, in the case where M = 4, L is not an integer multiple of M, and when the first bit sequence is divided at this time, the last sequence segment is obtained as {1, 0}. At this time, if the last sequence segment is OOK-modulated, 4 OOK symbols cannot be obtained.

In view of the above problem, an embodiment of the disclosure proposes a method for preprocessing a bit sequence, where when L is not an integer multiple of M, a first bit sequence having a length L is preprocessed to obtain a second bit sequence having a length L', so that all sequence segments or each sequence segment obtained by dividing the second bit sequence can be OOK-modulated to obtain M OOK symbols. For example, as shown in FIG. 9, when the first bit sequence is {1, 0, 0, 1, 1, 1, 1, 0, 1, 0, 1, 0, 1, 0, 1, 0, 1, 1}, that is, when L' = 20, in the case where M = 4, L' is an integer multiple of M, then the last sequence segment is obtained as {1, 0, 1, 1}. At this time, if the last sequence segment is OOK-modulated, 4 OOK symbols can be obtained.

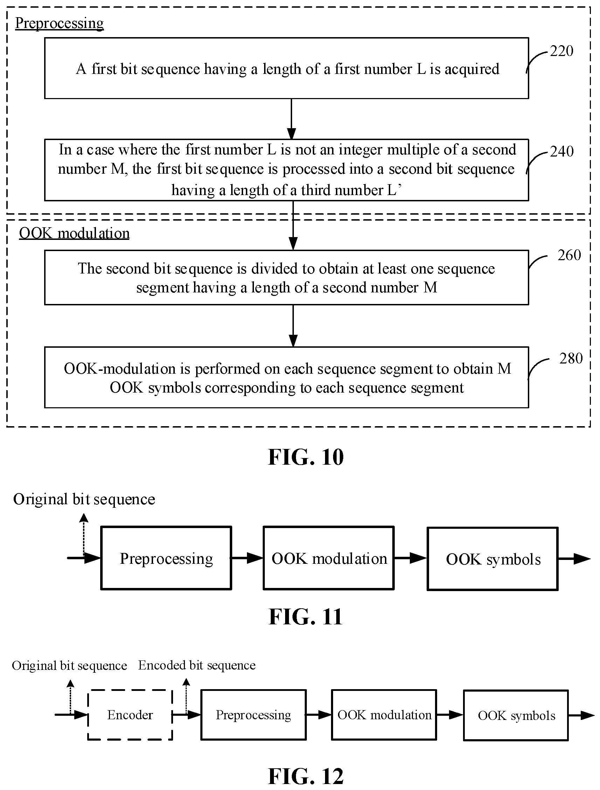

FIG. 10 shows a flowchart of a method for preprocessing a bit sequence provided by an exemplary embodiment of the disclosure. The method is performed by a sending end device, which may be a network device or an AP or an ambient IoT device or a terminal device, and the method includes operations as follows.

In operation 220, a first bit sequence having a length of a first number L is acquired.

The first number L is a number of bits in the first bit sequence. For example, assuming that the first bit sequence is {1, 0, 1, 1, 1, 1, 1, 0, 1, 0, 1, 0, 1, 0, 1, 0, 1, 0}, then L is 18.

In some embodiments, the first bit sequence is any one of:

· an original bit sequence for which encoding is not required;
· an original bit sequence before encoding;
· an encoded bit sequence after encoding is performed on the original bit sequence; and
· an encoded bit sequence after at least one stage encoding of multi-stage encoding is performed on the original bit sequence.

Optionally, the first bit sequence is the original bit sequence for which encoding is not required. Exemplarily, as shown in FIG. 11, the sending device can perform OOK modulation to obtain OOK symbols without encoding the original bit sequence. The first bit sequence is the original bit sequence.

Optionally, the first bit sequence is the original bit sequence before encoding. Exemplarily, as shown in FIG. 12, the sending end device first encodes the original bit sequence based on an encoder, and then performs OOK modulation based on the encoded encoded bit sequence to obtain OOK symbols. Optionally, the first bit sequence is the original bit sequence before encoding.

In some embodiments, the original bit sequence may be a bit sequence including a Cyclic Redundancy Check (CRC).

Optionally, the first bit sequence is the encoded bit sequence after encoding is performed on the original bit sequence. Exemplarily, as shown in FIG. 12, the sending end device first encodes the original bit sequence based on an encoder, and then performs OOK modulation based on the encoded encoded bit sequence to obtain OOK symbols. Optionally, the first bit sequence is an encoded bit sequence output after encoding by an encoder.

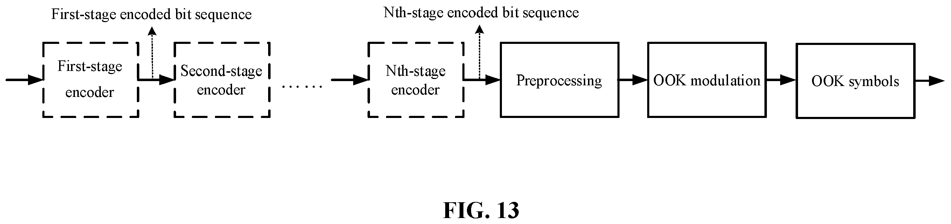

Optionally, the first bit sequence is an encoded bit sequence after at least one stage encoding of multi-stage encoding is performed on the original bit sequence. Exemplarily, as shown in FIG. 13, the sending end device first encodes the original bit sequence based on an n-stage encoder, and then performs OOK modulation based on the encoded encoded bit sequence to obtain OOK symbols. After the original bit sequence passes through the first-stage encoder, the first-stage encoded bit sequence is obtained; after passing through a second-stage encoder, a second-stage encoded bit sequence is obtained; until passing through the n-th-stage encoder, the n-th-stage encoded bit sequence is obtained. Optionally, the first bit sequence is at least one of: a first-stage encoded bit sequence up to an n-th-stage encoded bit sequence.

In some embodiments, a CRC bit sequence may be included in the encoded bit sequence. Exemplarily, as shown in FIG. 13, the first-stage encoded bit sequence is obtained by adding a CRC bit sequence to the original bit sequence.

In operation 20, in a case where the first number L is not an integer multiple of a second number M, the first bit sequence is processed into a second bit sequence having a length of a third number L'.

Optionally, the first number L is smaller than the third number L'. Optionally, the first number L is greater than the third number L'.

The second number M is a number of OOK symbols transmitted in a preset duration. The preset duration is determined by a basic time-domain unit in a cellular communication system or a WiFi system. In some embodiments, the preset duration is t OFDM symbols in which M OOK symbols may be transmitted. M is a number of OOK symbols transmitted in the t OFDM symbols. The value of t is a positive integer. In the embodiment of the disclosure, description is made by taking an example that M OOK symbols are transmitted in 1 OFDM symbol.

In some embodiments, M may be agreed by a protocol, configured by a network device, or determined by a terminal device based on a preset mapping relationship.

In some embodiments, M has a plurality of candidate values, for example, M = {1, 2, 4, 6, 8}.

The third number L' is a number of bits in the second bit sequence. For example, if the second bit sequence is {1, 0, 1, 0}, then L' is 4.

In some embodiments, the second bit sequence is configured to be divided into at least one sequence segment having a length of the second number M for OOK modulation, to obtain M OOK symbols corresponding to each sequence segment. That is, the third number L' is an integer multiple of the second number M. For example, if the second bit sequence is {1, 0, 1, 0} and M = 2, the second bit sequence can be divided into two sequence segments each having a length of 2, and respective sequence segments are {1, 0}, {1, 0}.

It should be understood that in the case where the first number L is not an integer multiple of the second number M, when the first bit sequence having the length of the first number L is segmented, the first bit sequence having the length of the first number L cannot be divided into a plurality of sequence segments having the length of the second number M. That is, the length of the last sequence segment will be smaller than the second number M. At this time, the last sequence segment cannot be OOK-modulated. For example, assuming that the first bit sequence is {1, 0, 0, 1, 1, 1, 1, 0, 1, 0, 1}, then L = 11. In the case of M = 4, the first bit sequence is divided into segments, and sequence segment 1 is {1, 0, 0, 1}, sequence segment 2 is {1, 1, 1, 0}, and sequence segment 3 is {1, 0, 1}.

The embodiment of the disclosure provides a method of processing a first bit sequence in a case where the first number L is not an integer multiple of the second number M, so that the processed bit sequence can guarantee to meet the requirement of OOK modulation.

In some embodiments, the method for processing a first bit sequence described above may have a variety of alternative designs.

**Alternative design 1:** performing bit padding on the first bit sequence

The first bit sequence is padded as a second bit sequence having a length that is an integer multiple of the second number M. Optionally, at least one padding bit is added to a head of the first bit sequence to obtain the second bit sequence having a length that is an integer multiple of the second number M. Optionally, at least one padding bit is added to a tail of the first bit sequence to obtain the second bit sequence having a length that is an integer multiple of the second number M. In the embodiment of the disclosure, description is made by taking an example that at least one padding bit is added to the tail of the first bit sequence.

**Alternative design 2:** performing bit selection on the first bit sequence

A second bit sequence having a length that is an integer multiple of the second number M is selected based on the first bit sequence. Optionally, cyclic selection of a partial bit sequence in the first bit sequence is performed to obtain the second bit sequence having a length that is an integer multiple of the second number M. Optionally, truncated selection of a partial bit sequence in the first bit sequence is performed to obtain the second bit sequence having a length that is an integer multiple of the second number M.

In operation 260, the second bit sequence is divided to obtain at least one sequence segment having a length of a second number M.

In some embodiments, since the length corresponding to the second bit sequence is the third number L', when the third number L' is an integer multiple of the second number M, the length of each sequence segment obtained by dividing the second bit sequence having the length of the third number L' is the second number M. For example, assuming that the second bit sequence having the length of the third number L' is {1, 0, 0, 1, 1, 1, 1, 0, 1, 0, 1, 0, 1, 0, 1, 0, 1 ......} and M = 4, then the second bit sequence having the length of the third number L' is divided into a plurality of sequence segments, and the length of each sequence segment is 4, for example, the obtained sequence segment 1 is {1, 0, 0, 1}.

In operation 280, OOK modulation is performed on each sequence segment to obtain M OOK symbols corresponding to each sequence segment.

The OOK modulation is a process of modulating a sequence in digital form into a wireless signal of Multi-carrier OOK (MC-OOK) waveform. The OOK modulation is performed on each sequence segment having a length of the second number M, to obtain M OOK symbols corresponding to each sequence segment.

To sum up, according to the method provided by the embodiment of the disclosure, when the first number L corresponding to the first bit sequence is not an integer multiple of the second number M, the first bit sequence is processed into a second bit sequence having a length of the third number L ', so that the processed second bit sequence can be divided into at least one sequence segment having a length of the second number M, thereby ensuring that the OOK symbols can be smoothly transmitted even when the number of valid OOK symbols to be transmitted is not an integer multiple of M.

**For alternative design 1 (bit padding)**

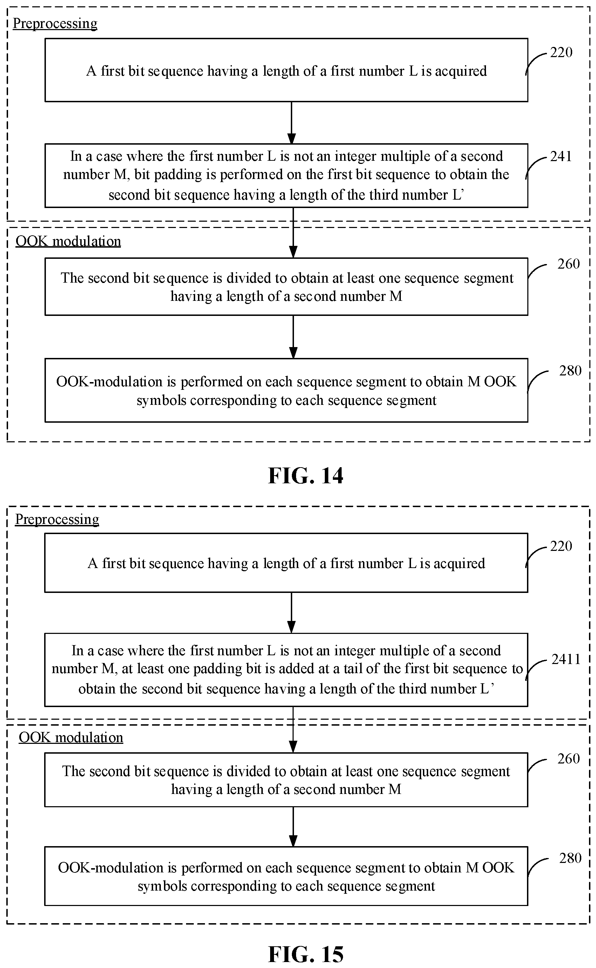

In some embodiments, as shown in FIG. 14, the above operation 240 may be replaced with the following sub-operation.

**In operation 241,** in a case where the first number L is not an integer multiple of the second number M, bit padding is performed on the first bit sequence, to obtain the second bit sequence having a length of the third number L'.

In some embodiments, in the case where the first number L is not an integer multiple of the second number M, bit padding is performed on the first bit sequence having the length of the first number L, so that the first bit sequence having the length of the first number L is padded into the second bit sequence having a length of the third number L'. The third number L' is an integer multiple of the second number M.

Exemplary, assuming that the first bit sequence is {1, 0, 0, 1, 1, 1, 1, 0, 1, 0, 1}, then L = 11; and in the case of M = 4, L is not an integer multiple of M, then bit padding is performed on the first bit sequence to obtain the second bit sequence {1, 0, 0, 1, 1, 1, 1, 0, 1, 0, 1, 1}, and at this time L' = 12.

Optionally, in a case where the first number L is smaller than the third number L', bit padding is performed on the first bit sequence to obtain the second bit sequence having a length of the third number L'.

In a further embodiment based on the embodiment shown in FIG. 14, as shown in FIG. 15, the above operation 241 may be replaced with the following sub-operation.

**In operation 2411,** in a case where the first number L is not an integer multiple of the second number M, at least one padding bit is added to a tail of the first bit sequence, to obtain the second bit sequence having a length of the third number L'.

In some embodiments, the first bit sequence is divided according to the second number M to obtain multiple sequence segments. In a case where the first number L is not an integer multiple of the second number M, the length of the last sequence segment obtained by division of the first bit sequence will be smaller than the second number M, and at least one padding bit is added to the last sequence segment obtained by division of the first bit sequence division to make the length of the last sequence segment obtained by division of the first bit sequence to be equal to M, thereby enabling OOK modulation.

In some embodiments, the at least one padding bit added to the tail of the first bit sequence includes any one of:

· a bit sequence having all values of 1;
· a bit sequence having all values of 0;
· a bit sequence having values arranged according to a fixed law; and
· a bit sequence determined based on the second number M.

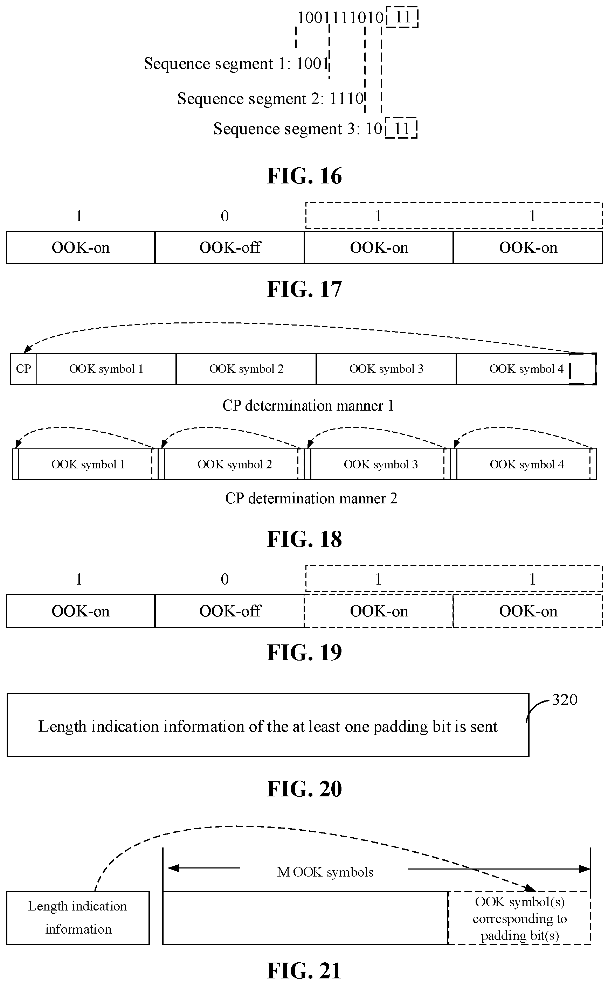

Optionally, the at least one padding bit added to the tail of the first bit sequence includes a bit sequence having all values of 1. That is, the value of the at least one padding bit added at the end of the first bit sequence is always fixed, for example, the value of each of the at least one padding bit added at the end of the first bit sequence is 1. Assuming that the first bit sequence is {1, 0, 0, 1, 1, 1, 1, 0, 1, 0} and M = 4, then it is necessary to add 2 padding bits at this time, so that the length of the obtained second bit sequence is an integer multiple of 4. Exemplarily, as shown in FIG. 16, the two added padding bits are {1, 1}.

Optionally, the at least one padding bit added to the tail of the first bit sequence includes a bit sequence having all values of 0. That is, the value of the at least one padding bit added at the end of the first bit sequence is always fixed, for example, the value of each of the at least one padding bit added at the end of the first bit sequence is 0. Assuming that the first bit sequence is {1, 0, 0, 1, 1, 1, 1, 0, 1, 0} and M = 4, then it is necessary to add 2 padding bits at this time, so that the length of the obtained second bit sequence is an integer multiple of 4. Exemplarily, the two added padding bits are {0, 0}.

Optionally, the at least one padding bit added to the tail of the first bit sequence includes a bit sequence having values arranged according to a fixed law. Optionally, the fixed law includes at least one bit having a value of 1 and at least one bit having a value of 0. Assuming that the first bit sequence is {1, 0, 0, 1, 1, 1, 1, 0, 1, 0} and M = 4, then it is necessary to add 2 padding bits at this time, so that the length of the obtained second bit sequence is an integer multiple of 4. Exemplarily, the two added padding bits are {1, 0}.

In some embodiments, the fixed law may be agreed by a protocol, configured by a network device, or determined by a terminal device based on a preset mapping relationship.

It should be understood that the fixed law corresponds to a fixed bit length, for example, if the fixed rule is {1, 0}, the corresponding length is 2 bits. When the bit length of the padding bits required to be added at the tail of the first bit sequence is greater than the bit length corresponding to the fixed law, it is necessary to perform cyclic addition based on the fixed law. For example, the fixed law is {1, 0}, and when the bit length of the padding bits required to be added is 5, the 5 padding bits to be added are {1, 0, 1, 0, 1}. When the bit length of the padding bits required to be added at the tail of the first bit sequence is smaller than the bit length corresponding to the fixed law, it is necessary to perform truncated addition based on the fixed law. For example, the fixed law is {1, 0, 1, 1}, and in a case where the bit length of the padding bits required to be added is 3, the 5 added padding bits are {1, 0, 1}.

In some embodiments, there are two cases in which at least one padding bit is cyclically added based on the fixed law.

In a first case, a bit sequence corresponding to the fixed law is cyclically added as a whole. Assuming that the fixed law is {1, 0}, {1, 0} is cyclically added as a whole, for example, an added padding bit sequence {1, 0, 1, 0, 1, 0} is obtained

In a second case, respective bits in the bit sequence corresponding to the fixed law are cyclically added respectively. Assuming that the fixed law is {1, 0}, which includes two bits, then the two bits are cyclically added respectively, for example, an added padding bit sequence {1, 1, 1, 0, 0, 0} is obtained.

Optionally, the at least one padding bit added to the tail of the first bit sequence includes a bit sequence determined based on the second number M.

In some embodiments, M has a plurality of candidate values, for example, M = {1, 2, 4, 6, 8}. Optionally, the at least one padding bit added to the tail of the first bit sequence includes a bit sequence determined based on a value of M at the time of communication. For example, M=2 at the time of communication, then the at least one padding bit added to the tail of the first bit sequence includes a bit sequence determined based on M=2. Optionally, the at least one padding bit added to the tail of the first bit sequence includes a bit sequence determined based on a maximum value of candidate values of M. For example, $M_{max}$=8, then the at least one padding bit added to the tail of the first bit sequence includes a bit sequence determined based on $M_{max}$=8.

In some embodiments, the sending end device may transmit the at least one padding bit added at the tail of the first bit sequence in a plurality of manners as follows.

In a transmission manner 1, an OOK symbol corresponding to the at least one padding bit is transmitted.

In some embodiments, when the at least one padding bit added at the tail of the first bit sequence is determined based on the value of M at the time of communication, all OOK symbols corresponding to the at least one padding bit added at the tail of the first bit sequence are transmitted. Exemplarily, as shown in FIG. 17, two padding bits are added to the tail of the first bit sequence {1, 0} to obtain the second bit sequence {1, 0, 1, 1}. After the second bit sequence {1, 0, 1, 1} is OOK-modulated, the obtained OOK symbol sequence is {OOK-on, OOK-off, OOK-on, OOK-on}. Herein, the OOK symbol sequence corresponding to the first bit sequence {1, 0} is {OOK-on, OOK-off}, and the OOK symbol sequence corresponding to the two padding bits is {OOK-on, OOK-on}. The OOK symbol sequence corresponding to the two padding bits is transmitted.

In some embodiments, in a case where the at least one padding bit added at the tail of the first bit sequence is determined based on the maximum value of candidate values of M, a part of OOK symbols corresponding to the at least one padding bit added at the tail of the first bit sequence is transmitted. For example, assuming that the first bit sequence is {1, 0}, based on $M_{max}$= 8, the padding bit sequence added at the tail of the first bit sequence is {1, 1, 1, 1, 1, 1}. M = 4 at the time of communication, then the first two padding bits in the padding bit sequence are transmitted.

In a transmission manner 2, the OOK symbol corresponding to the at least one padding bit is transmitted, and the OOK symbol corresponding to the at least one padding bit is used for determining a Cyclic Prefix (CP).

In some embodiments, the OOK symbol corresponding to at least one padding bit may be used for determining the CP.

Optionally, as shown in the manner 1 of FIG. 18, in a case where one time-domain segment includes M OOK symbols, the CP is determined based on an OOK symbol at the tail of the time-domain segment. In a case where the OOK symbol 4 is an OOK symbol corresponding to the padding bit, the OOK symbol 4 may be used for determining the CP.

Optionally, as shown in the manner 2 of FIG. 18, when one time domain segment includes M OOK symbols, the CP is determined on a OOK symbol by OOK symbol basis. In a case where the OOK symbol 4 is an OOK symbol corresponding to the padding bit, the OOK symbol 4 may be used for determining the CP.

In a transmission manner 3, the OOK symbol corresponding to the at least one padding bit is transmitted, and the OOK symbol corresponding to the at least one padding bit is not used for determining the CP.

Optionally, as shown in the manner 1 of FIG. 18, in a case where one time-domain segment includes M OOK symbols, the CP is determined based on an OOK symbol corresponding to a non-padding bit in one time-domain segment.

For example, the CP is determined based on the OOK symbol 2.

In a transmission manner 4, puncturing processing is performed on the OOK symbol corresponding to each padding bit.

Exemplarily, as shown in FIG. 19, two padding bits are added to the tail of the first bit sequence {1, 0} to obtain the second bit sequence {1, 0, 1, 1}. After the second bit sequence {1, 0, 1, 1} is OOK-modulated, the obtained OOK symbol sequence is {OOK-on, OOK-off, OOK-on, OOK-on}. Herein, the OOK symbol sequence corresponding to the first bit sequence {1, 0} is {OOK-on, OOK-off}, and the OOK symbol sequence corresponding to the two padding bits is {OOK-on, OOK-on}. The OOK symbol sequence corresponding to the two padding bits is punctured, that is, the OOK symbol sequence corresponding to the two padding bits is not transmitted.

In a transmission manner 5, puncturing processing is performed on the OOK symbol corresponding to each padding bit, and the OOK symbol corresponding to each padding bit is not used for determining the CP.

Optionally, as shown in the manner 1 of FIG. 18, in a case where one time-domain segment includes M OOK symbols, the CP is determined based on an OOK symbol corresponding to a non-padding bit in one time-domain segment. For example, the CP is determined based on the OOK symbol 2.

In a transmission manner 6, puncturing processing is performed on the OOK symbol corresponding to each padding bit, and the OOK symbol corresponding to the at least one padding bit is used for determining the CP.

Exemplarily, as shown in the manner 1 of FIG. 18, in a case where one time-domain segment includes M OOK symbols, the CP is determined based on an OOK symbol at the tail of the time-domain segment. In a case where the OOK symbol 4 is an OOK symbol corresponding to the padding bit, the OOK symbol 4 may be used for determining the CP. After the CP is determined based on the OOK symbol 4, puncturing processing is performed on the OOK symbols corresponding to the two padding bits.

To sum up, according to the method provided by the embodiment of the disclosure, when the first number L corresponding to the first bit sequence is not an integer multiple of the second number M, at least one padding bit is added to the tail of the first bit sequence to obtain the second bit sequence having a length of the third number L', so that the processed second bit sequence can be divided into at least one sequence segment having a length of the second number M, thereby ensuring that the OOK symbols can be smoothly transmitted even when the number of valid OOK symbols to be transmitted is not an integer multiple of M.

In some embodiments, when the sending end device transmits an OOK symbol corresponding to at least one padding bit added at the tail of the first bit sequence, if the receiving end device cannot determine which OOK symbol(s) correspond to the padding bit(s), an error may occur when parsing data, for example, the receiving end device cannot distinguish between information corresponding to the padding bit and information corresponding to the non-padding bit.

In order to avoid the above problem, in a further embodiment based on the embodiment shown in FIG. 14 or FIG. 15 described above, as shown in FIG. 20, the above method further includes an operation 320.

In operation 320, length indication information of the at least one padding bit is sent.

The length indication information is used to indicate the length of at least one padding bit, so that the receiving end device can distinguish information corresponding to the padding bit and information corresponding to the non-padding bit.

In some embodiments, the length indication information is sent separately. That is, the length indication information and the plurality of OOK symbols obtained after OOK modulation are sent separately. Exemplarily, as shown in FIG. 21, the length indication information is sent separately independently of the M OOK symbols, and is used to indicate the length of at least one padding bit.

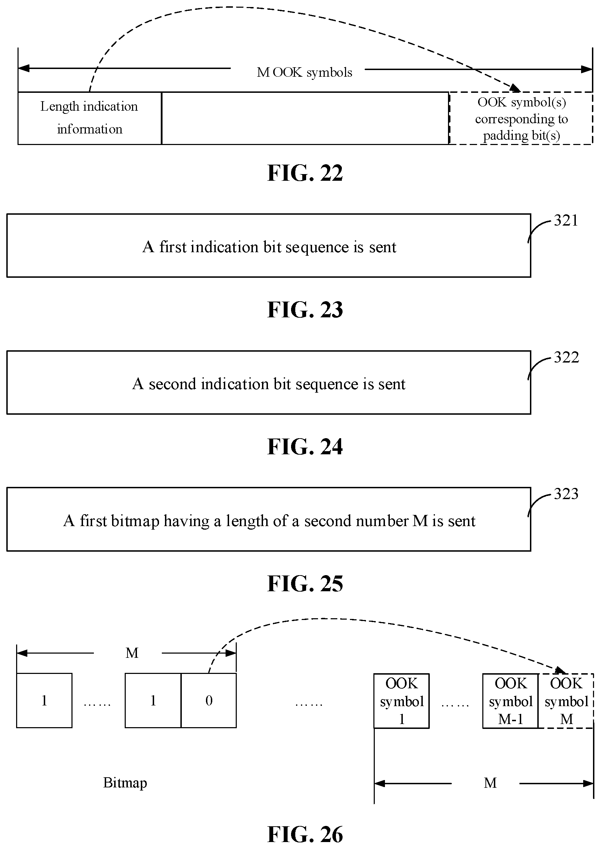

In some embodiments, the length indication information is sent by being carried in a plurality of OOK symbols obtained after OOK modulation. Exemplarily, as shown in FIG. 22, the length indication information is carried in M OOK symbols obtained after OOK modulation, and is used to indicate the length of at least one padding bit. That is, a length indication bit sequence corresponding to the length indication information is a subset of the bit sequences corresponding to the M OOK symbols, or it is understood that the length indication bit sequence corresponding to the length indication information is a sub-sequence of the bit sequence corresponding to the M OOK symbols. Optionally, positions of the length indication bit sequence corresponding to the length indication information in the bit sequence corresponding to the M OOK symbols are fixed, and optionally, the positions of the length indication bit sequence corresponding to the length indication information in the bit sequence corresponding to the M OOK symbols may be agreed by a protocol, configured by a network device, or configured by a terminal device.

In some embodiments, M has a plurality of candidate values, for example, M = {1, 2, 4, 6, 8}. Optionally, a length of the length indication bit sequence corresponding to the length indication information is determined based on the value of M at the time of communication. For example, the length of the length indication bit sequence corresponding to the length indication information is: $l = \lceil \log_2 M \rceil$. Optionally, the length of the length indication bit sequence corresponding to the length indication information is determined based on a maximum value of the candidate values of M. For example, the length of the length indication bit sequence corresponding to the length indication information is: $l = \lceil \log_2 M_{\max} \rceil$. $\lceil * \rceil$

represents rounding up.

In some embodiments, the manners for sending the length indication information include at least the following two manners.

## Explicit manner

In some embodiments, as shown in FIG. 23, the above operation 320 may be replaced with the following sub-operation.

**In operation 321,** a first indication bit sequence is sent.

In some embodiments, values of the first indication bit sequence are equal to a length of the at least one padding bit. For example, assuming that the first bit sequence is {1, 0, 0, 1, 1, 1, 1, 0, 1, 0} and M = 4, then it is necessary to add 2 padding bits at this time, so that the length of the obtained second bit sequence is an integer multiple of 4. Exemplarily, the two added padding bits are {1, 0}. Then, the first indication bit sequence may be {1, 0}, and the values of the first indication bit sequence are 10, which are equal to 2.

In some embodiments, in a case where one sequence segment corresponds to M OOK symbols, the length of the padding bit(s) may be 1 to M - 1. Assuming that $M = 2^n$, then the length of the first indication bit sequence is greater than or equal to n.

In some embodiments, the first indication bit sequence is sent separately. That is, the first indication bit sequence and the plurality of OOK symbols obtained after OOK modulation are sent separately.

In some embodiments, the first indication bit sequence is sent by being carried in a plurality of OOK symbols obtained after OOK modulation.

In some embodiments, as shown in FIG. 24, the above operation 320 may also be replaced with the following sub-operation.

**In operation 322,** a second indication bit sequence is sent.

In some embodiments, values of the second indication bit sequence have a mapping relationship with the length of the at least one padding bit. In some embodiments, the mapping relationship may be agreed by a protocol, configured by a network device, or determined by a terminal device.

In some embodiments, in a case where one sequence segment corresponds to M OOK symbols, the length of the padding bit(s) may be 1 to M - 1. Then, the second indication bit sequence corresponds to at least M - 1 values, and each value of the M - 1 values has a one-to-one mapping relationship with the length of at least one padding bit. For example, when the value of the second indication bit sequence is 1, the length of the corresponding padding bit is 1; when the value of the second indication bit sequence is 2, the length of the corresponding padding bits is 2; until when the value of the second indication bit sequence is the value M - 1, the length of the corresponding padding bits is M - 1.

Optionally, for the mapping relationship between values of the second indication bit sequence and the length of the at least one padding bit, reference is made to a Table 2 below.

Table 2

| Values of the second indication bit sequence | Length of padding bits |
| --- | --- |
| 001 | 1 |
| 010 | 2 |
| 011 | 3 |
| ...... | ...... |

In some embodiments, M has a plurality of candidate values, for example, M = {1, 2, 4, 6, 8}. Optionally, a number of the second indication bit sequences is determined based on the value of M at the time of communication. Optionally, the number of the second indication bit sequences is determined based on a maximum value of candidate values of M.

In some embodiments, the second indication bit sequence is sent separately. That is, the second indication bit sequence and the plurality of OOK symbols obtained after OOK modulation are sent separately.

In some embodiments, the second indication bit sequence is sent by being carried in a plurality of OOK symbols obtained after OOK modulation.

In some embodiments, as shown in FIG. 25, the above operation 320 may also be replaced with the following sub-operation.

**In operation 323,** a first bitmap having a length of a second number M is sent.

In some embodiments, the first bitmap is sent separately. That is, the first bitmap and the plurality of OOK symbols obtained after OOK modulation are sent separately.

In some embodiments, a number of bits having a first value in the first bitmap is used to indicate the length of at least one padding bit.

Optionally, the number of bits having a value of 1 in the first bitmap is used to indicate the length of at least one padding bit. For example, assuming that M = 4, the first bitmap is {1, 0, 0, 0}, and the number of bits having a value of 1 is 1, it means that the length of at least one padding bit is 1. It should be understood that when M = 4 and the length of at least one padding bit is 1, the first bitmap may also be {0, 1, 0, 0}, or {0, 0, 1, 0}, or {0, 0, 0, 1}.

Optionally, the number of bits having a value of 0 in the first bitmap is used to indicate the length of at least one padding bit. For example, assuming that M = 4, the first bitmap is {1, 0, 0, 0}, and the number of bits having a value of 0 is 3, it means that the length of at least one padding bit is 3. It should be understood that when M = 4 and the length of at least one padding bit is 3, the first bitmap may also be {0, 1, 0, 0}, or {0, 0, 1, 0}, or {0, 0, 0, 1}.

In some embodiments, a position of the bit having the first value in the first bitmap is associated with a position of the at least one padding bit in the second bit sequence. For example, as shown in FIG. 26, the position of the bit having the first value in the bitmap is the last bit, and the position of at least one padding bit in the second bit sequence is also the last bit.

Optionally, when the first value is 1, a position of a bit having a value of 1 in the first bitmap is associated with a position of at least one padding bit in the second bit sequence. For example, when M = 4 and the length of at least one padding bit is 1, the first bitmap is {0, 0, 0, 1}.

Optionally, when the first value is 0, a position of a bit having a value of 0 in the first bitmap is associated with a position of at least one padding bit in the second bit sequence. For example, when M = 4 and the length of at least one padding bit is 1, the first bitmap is {1, 1, 1, 0}.

**Implicit manner**

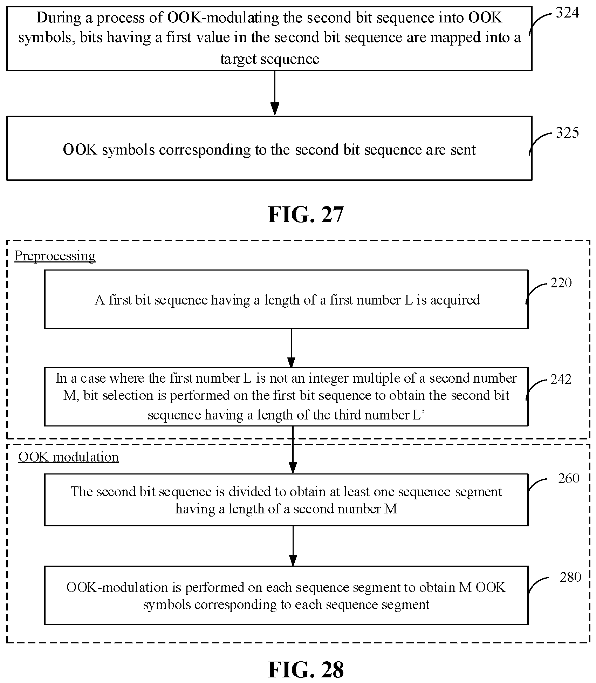

In some embodiments, as shown in FIG. 27, the above operation 320 may also be replaced with the following sub-operations.

**In operation 324,** during a process of OOK-modulating the second bit sequence into OOK symbols, bits having a first value in the second bit sequence are mapped into a target sequence.

Optionally, during the process of OOK-modulating the second bit sequence into OOK symbols, bits having a value of 1 in the second bit sequence are mapped into the target sequence.

Optionally, during the process of OOK-modulating the second bit sequence into OOK symbols, bits having a value of 0 in the second bit sequence are mapped into the target sequence.

In some embodiments, the target sequence is at least one of the following sequences:

· Pseudo-Noise (PN) sequence;
· Zadoff-Chu (ZC) sequence;
· Maximum-length (M) sequence.

Optionally, during the process of OOK-modulating the second bit sequence into OOK symbols, bits having a value of 1 in the second bit sequence are mapped into the PN sequence. Or, during the process of OOK-modulating the second bit sequence into OOK symbols, bits having a value of 1 in the second bit sequence are mapped into the ZC sequence. Or, during the process of OOK-modulating the second bit sequence into OOK symbols, bits having a value of 1 in the second bit sequence are mapped into the M sequence.

Optionally, during the process of OOK-modulating the second bit sequence into OOK symbols, bits having a value of 0 in the second bit sequence are mapped into the PN sequence. Or, during the process of OOK-modulating the second bit sequence into OOK symbols, bits having a value of 0 in the second bit sequence are mapped into the ZC sequence. Or, during the process of OOK-modulating the second bit sequence into OOK symbols, bits having a value of 0 in the second bit sequence are mapped into the M sequence.

In some embodiments, the target sequence is used to indicate the length of at least one padding bit. Optionally, a number of target sequences is x. Optionally, the number of target sequences is determined based on a value of M at the time of communication. For example, x is a positive integer greater than or equal to $\log_2 M$. Optionally, the number of the target sequences is determined based on a maximum value of candidate values of M.

Optionally, the target sequence or values of the target sequence is/are used to indicate the length of the at least one padding bit. That is, the length of the at least one padding bit is associated with the target sequence, or with the values of the target sequence.

Optionally, an index of the target sequence is used to indicate the length of the at least one padding bit. For example, a plurality of target sequences have a mapping relationship with the length of at least one padding bit. In some embodiments, the mapping relationship may be agreed by a protocol, configured by a network device, or determined by a terminal device.

In some embodiments, in a case where one sequence segment corresponds to M OOK symbols, the length of the padding bit(s) may be 1 to M - 1. Then, there are correspondingly M - 1 target sequences, and each one of the M - 1 target sequences has a one-to-one mapping relationship with the length of at least one padding bit.

For example, for the mapping relationship between a plurality of target sequences and the length of at least one padding bit, reference is made to Table 3 below.

Table 3

| Index of the target sequence | Length of padding bits |
|---|---|
| Target sequence 1 | 1 |
| Target sequence 2 | 2 |
| Target sequence 3 | 3 |
| ...... | ...... |

In some embodiments, M has a plurality of candidate values, for example, M = {1, 2, 4, 6, 8}. Optionally, a number of the target sequences is determined based on the value of M at the time of communication. Optionally, the number of the target sequences is determined based on a maximum value of candidate values of M.

Optionally, a cyclic shift value corresponding to the target sequence is used to indicate the length of the at least one padding bit. Different cyclic shift values of the same target sequence are used to represent lengths of different padding bits.

In some embodiments, in a case where one sequence segment corresponds to M OOK symbols, the length of the padding bit(s) may be 1 to M - 1. Then, one same target sequence needs to correspond to M - 1 cyclic shift values, and each of the M - 1 cyclic shift values has a one-to-one mapping relationship with the length of at least one padding bit. For example, when the cyclic shift value has a value of 1, the length of the corresponding padding bit is 1; when the cyclic shift value has a value of 2, the length of the corresponding padding bits is 2; until when the cyclic shift value has a value of M - 1, the length of the corresponding padding bits is M - 1.

For example, for the mapping relationship between the cyclic shift values of the target sequence and the length of at least one padding bit, reference is made to Table 4 below.

Table 4

| Cyclic shift value of target Sequence | Length of padding bits |
|---|---|
| Q1 | 1 |
| Q2 | 2 |
| Q3 | 3 |
| ...... | ...... |

In some embodiments, M has a plurality of candidate values, for example, M = {1, 2, 4, 6, 8}. Optionally, a number of cyclic shift values of the target sequence is determined based on the value of M at the time of communication. Optionally, the number of cyclic shift values of the target sequence is determined based on a maximum value of candidate values of M.

In operation 325, OOK symbols corresponding to the second bit sequence are sent.

The sending end device sends OOK symbols corresponding to the second bit sequence obtained by OOK modulation to the receiving end device. Herein, bits having a first value in the second bit sequence are mapped into a target sequence, and the target sequence is used to indicate a length of the at least one padding bit.

Optionally, the manner of implicitly sending the length indication information may also be: during the process of OOK-modulating the second bit sequence into OOK symbols, phase randomization is performed on the second bit sequence or intermediate data using a target phase randomization sequence; and the OOK symbols corresponding to the second bit sequence are sent. The intermediate data is intermediate process data generated during the process of OOK-modulating the second bit sequence.

In some embodiments, the target phase randomization sequence is used to indicate the length of at least one padding bit.

Optionally, values of the target phase randomization sequence are used to indicate the length of the at least one padding bit. That is, the length of the at least one padding bit is associated with the values of the target phase randomization sequence.

Optionally, an index of the target phase randomization sequence is used to indicate the length of the at least one padding bit. For example, a plurality of target phase randomization sequences have a mapping relationship with the length of at least one padding bit. In some embodiments, the mapping relationship may be agreed by a protocol, configured by a network device, or determined by a terminal device.

In some embodiments, in a case where one sequence segment corresponds to M OOK symbols, the length of the padding bit(s) may be 1 to M - 1. Then, there are correspondingly M - 1 target phase randomization sequences, and each one of the M - 1 target phase randomization sequences has a one-to-one mapping relationship with the length of at least one padding bit.

For example, for the mapping relationship between a plurality of target phase randomization sequences and the length of at least one padding bit, reference is made to Table 5 below.

Table 5

| Index of the target phase randomization sequence | Length of padding bits |
|---|---|
| Target phase randomization sequence 1 | 1 |
| Target phase randomization sequence 2 | 2 |
| Target phase randomization sequence 3 | 3 |
| ...... | ...... |

In summary, in the method provided by the present embodiment, the sending end device sends the length indication information for indicating at least one padding bit, so that the receiving end device can distinguish information corresponding to the padding bit and information corresponding to the non-padding bit, thereby ensuring that the receiving end can accurately parse information corresponding to valid OOK symbols through the length indication information even when a number of the valid OOK symbols to be transmitted is not an integer multiple of M.

**For alternative design 2 (bit selection)**

In some embodiments, as shown in FIG. 28, the above operation 240 may be replaced with the following sub-operation.

**In operation 242,** in a case where the first number L is not an integer multiple of the second number M, bit selection is performed on the first bit sequence, to obtain the second bit sequence having a length of the third number L'.

In some embodiments, in the case where the first number L is not an integer multiple of the second number M, bit selection is performed on the first bit sequence having the length of the first number L, so that the second bit sequence having a length of the third number L' is obtained by selection based on the first bit sequence having the length of the first number L. The third number L' is an integer multiple of the second number M.

In some embodiments, the first number L may be smaller than the third number L'.

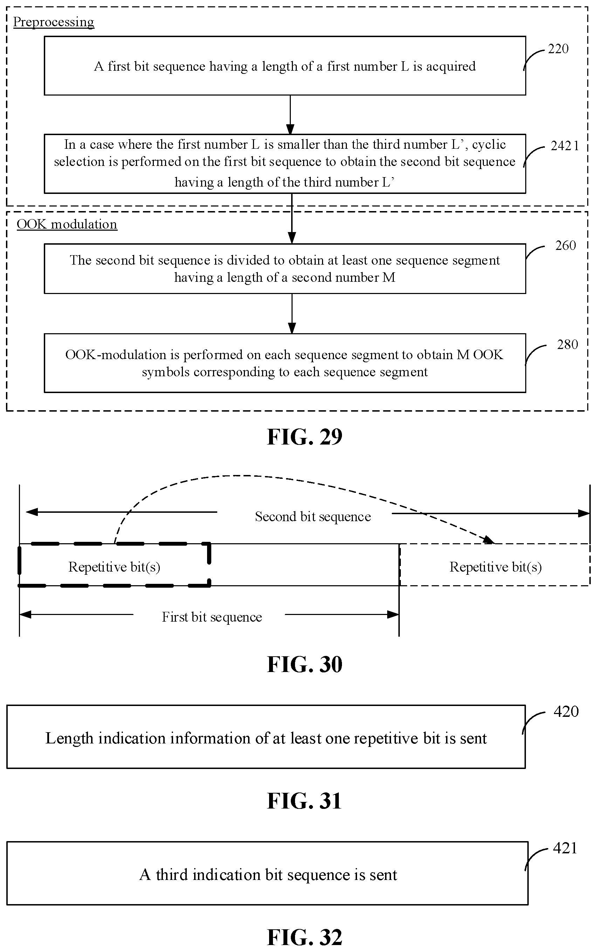

In a further embodiment based on the embodiment shown in FIG. 28, as shown in FIG. 29, the above operation 242 may be replaced with the following sub-operation.

**In operation 2421,** in a case where the first number L is smaller than the third number L', cyclic selection is performed on the first bit sequence to obtain the second bit sequence having a length of the third number L'.

In some embodiments, in the case where the first number L is smaller than the third number L', at least one repetitive bit is cyclically selected from the first bit sequence to obtain the second bit sequence having a length of the third number L'.

In some embodiments, in the case where the first number L is smaller than the third number L' and the first number L is not an integer multiple of the second number M, at least one repetitive bit is cyclically selected from the first bit sequence, so that the first bit sequence having a length of the fist number L is extended to obtain the second bit sequence having a length of the third number L'. A bit sequence corresponding to the at least one repetitive bit selected cyclically is a subsequence in the first bit sequence, or it is understood that the bit sequence corresponding to the at least one repetitive bit selected cyclically is a sub-sequence in the first bit sequence.

Exemplary, as shown in FIG. 30, assuming that the first bit sequence is {1, 0, 0, 1, 1, 1, 1, 0, 1, 0, 1}, then L = 11; and in the case of M = 4, L is not an integer multiple of M, then cyclic selection is performed on the first bit sequence to obtain the second bit sequence {1, 0, 0, 1, 1, 1, 1, 0, 1, 0, 1, 1}, and at this time L' = 12. The repeatedly selected bit sequence {1} is a subsequence in the first bit sequence.

Optionally, a length of the bit sequence corresponding to the at least one repetitive bit cyclically selected in the first bit sequence is determined based on the second number M.

In some embodiments, M has a plurality of candidate values, for example, M = {1, 2, 4, 6, 8}. Optionally, the length of the bit sequence corresponding to the at least one repetitive bit cyclically selected in the first bit sequence is determined based on a value of M at the time of communication. Optionally, the length of the bit sequence corresponding to the at least one repetitive bit cyclically selected in the first bit sequence is determined based on a maximum value of candidate values of M.

In some embodiments, the sending end device may transmit the at least one repetitive bit cyclically selected in the first bit sequence in a plurality of manners as follows.

In a transmission manner 1, an OOK symbol corresponding to the at least one repetitive bit is transmitted.

In some embodiments, in the case where the length of the bit sequence corresponding to the at least one repetitive bit cyclically selected in the first bit sequence is determined based on the value of M at the time of communication, all OOK symbols corresponding to the at least one repetitive bit cyclically selected in the first bit sequence are transmitted.

In some embodiments, in the case where the length of the bit sequence corresponding to the at least one repetitive bit cyclically selected in the first bit sequence is determined based on a maximum value of candidate values of M, a part of OOK symbols corresponding to the at least one repetitive bit cyclically selected in the first bit sequence is transmitted. For example, assuming that the first bit sequence is {1, 0}, based on $M_{max}= 8$, a sequence of repetitive bits cyclically selected in the first bit sequence is {1, 0, 1, 0, 1, 0}. M = 4 at the time of communication, then the first two repetitive bits in the sequence of repetitive bits are transmitted.

In a transmission manner 2, the OOK symbol corresponding to the at least one repetitive bit is transmitted, and the OOK symbol corresponding to the at least one repetitive bit is used for determining a Cyclic Prefix (CP).

In some embodiments, the OOK symbol corresponding to at least one repetitive bit may be used for determining the CP.

Optionally, as shown in the manner 1 of FIG. 18, in a case where one time-domain segment includes M OOK symbols, the CP is determined based on an OOK symbol at the tail of the time-domain segment. In a case where the OOK symbol 4 is an OOK symbol corresponding to the repetitive bit, the OOK symbol 4 may be used for determining the CP.

Optionally, as shown in the manner 2 of FIG. 18, when one time domain segment includes M OOK symbols, the CP is determined on a OOK symbol by OOK symbol basis. In a case where the OOK symbol 4 is an OOK symbol corresponding to the repetitive bit, the OOK symbol 4 may be used for determining the CP.

In a transmission manner 3, the OOK symbol corresponding to the at least one repetitive bit is transmitted, and the OOK symbol corresponding to the at least one repetitive bit is not used for determining a Cyclic Prefix (CP).

Optionally, as shown in the manner 1 of FIG. 18, in a case where one time-domain segment includes M OOK symbols, the CP is determined based on an OOK symbol corresponding to a non-repetitive bit in one time-domain segment. For example, the CP is determined based on the OOK symbol 2.

In a transmission manner 4, puncturing processing is performed on the OOK symbol corresponding to each repetitive bit.

In some embodiments, the OOK symbol corresponding to each repetitive bit is not transmitted.

In a transmission manner 5, puncturing processing is performed on the OOK symbol corresponding to each repetitive bit, and the OOK symbol corresponding to each repetitive bit is not used for determining the CP.

Optionally, as shown in the manner 1 of FIG. 18, in a case where one time-domain segment includes M OOK symbols, the CP is determined based on an OOK symbol corresponding to a non-repetitive bit in one time-domain segment. For example, the CP is determined based on the OOK symbol 2.

In a transmission manner 6, puncturing processing is performed on the OOK symbol corresponding to each repetitive bit, and the OOK symbol corresponding to the at least one repetitive bit is used for determining the CP.

Exemplarily, as shown in the manner 1 of FIG. 18, in a case where one time-domain segment includes M OOK symbols, the CP is determined based on an OOK symbol at the tail of the time-domain segment. In a case where the OOK symbol 4 is an OOK symbol corresponding to the repetitive bit, the OOK symbol 4 may be used for determining the CP. After the CP is determined based on the OOK symbol 4, puncturing processing is performed on the OOK symbols corresponding to the repetitive bits.

To sum up, according to the method provided by the embodiment of the disclosure, when the first number L is smaller than the third number L', cyclic selection is performed on the first bit sequence to obtain the second bit sequence having a length of the third number L', so that the processed second bit sequence can be divided into at least one sequence segment having a length of the second number M, thereby ensuring that the OOK symbols can be smoothly transmitted even when the number of valid OOK symbols to be transmitted is not an integer multiple of M.

In some embodiments, when the sending end device transmits an OOK symbol corresponding to at least one repetitive bit cyclically selected in the first bit sequence, if the receiving end device cannot determine which OOK symbol(s) correspond to the repetitive bit(s), an error may occur when parsing data, for example, the receiving end device cannot distinguish between information corresponding to the repetitive bit and information corresponding to the non-repetitive bit.

In order to avoid the above problem, in a further embodiment based on the embodiment shown in FIG. 29 described above, as shown in FIG. 31, the above method further includes an operation 420.

In operation 420, length indication information of the at least one repetitive bit is sent.

The length indication information is used to indicate the length of at least one repetitive bit, so that the receiving end device can distinguish information corresponding to the repetitive bit and information corresponding to the non-repetitive bit.

In some embodiments, the length indication information is sent separately. That is, the length indication information and the plurality of OOK symbols obtained after OOK modulation are sent separately.

In some embodiments, the length indication information is sent by being carried in a plurality of OOK symbols obtained after OOK modulation. That is, a length indication bit sequence corresponding to the length indication information is a subset of the bit sequences corresponding to the plurality of OOK symbols, or it is understood that the length indication bit sequence corresponding to the length indication information is a sub-sequence of the bit sequence corresponding to the plurality of OOK symbols. Optionally, positions of the length indication bit sequence corresponding to the length indication information in the bit sequence corresponding to the the plurality of OOK symbols are fixed, and optionally, the positions of the length indication bit sequence corresponding to the length indication information in the bit sequence corresponding to the plurality of OOK symbols may be agreed by a protocol, configured by a network device, or configured by a terminal device.

In some embodiments, M has a plurality of candidate values, for example, M = {1, 2, 4, 6, 8}. Optionally, a length of the length indication bit sequence corresponding to the length indication information is determined based on the value of M at the time of communication. For example, the length of the length indication bit sequence corresponding to the length indication information is: $l = \lceil \log_2 M \rceil$. Optionally, the length of the length indication bit sequence corresponding to the length indication information is determined based on a maximum value of the candidate values of M. For example, the length of the length indication bit sequence corresponding to the length indication information is: $l = \lceil \log_2 M_{max} \rceil$. $\lceil * \rceil$ represents rounding up.

In some embodiments, the manners for sending the length indication information include at least the following two manners.

**Explicit manner**

In some embodiments, as shown in FIG. 32, the above operation 420 may be replaced with the following sub-operation.

**In operation 421,** a third indication bit sequence is sent.

In some embodiments, values of the third indication bit sequence are equal to a length of the at least one repetitive bit. For example, assuming that the first bit sequence is {1, 0, 0, 1, 1, 1, 1, 0, 1, 0} and M = 4, then it is necessary to cyclically select 2 repetitive bits at this time, so that the length of the obtained second bit sequence is an integer multiple of 4. Exemplarily, the 2 bits cyclically selected are {1, 0}. Then, the third indication bit sequence may be {1, 0}, and the values of the third indication bit sequence are 10, which are equal to 2.

In some embodiments, in a case where one sequence segment corresponds to M OOK symbols, the length of the repetitive bit(s) may be 1 to M - 1. Assuming that M = $2^n$, then the length of the third indication bit sequence is greater than or equal to n.

In some embodiments, the third indication bit sequence is sent separately. That is, the third indication bit sequence and the plurality of OOK symbols obtained after OOK modulation are sent separately.

In some embodiments, the third indication bit sequence is sent by being carried in a plurality of OOK symbols obtained after OOK modulation.

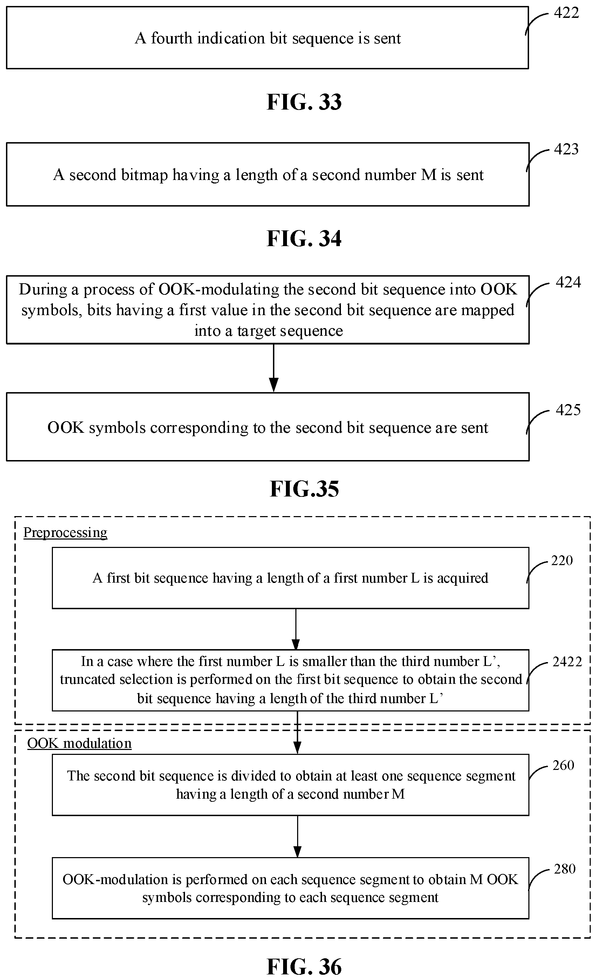

In some embodiments, as shown in FIG. 33, the above operation 420 may also be replaced with the following sub-operation.

**In operation 422,** a fourth indication bit sequence is sent.

In some embodiments, values of the fourth indication bit sequence have a mapping relationship with the length of the at least one repetitive bit. In some embodiments, the mapping relationship may be agreed by a protocol, configured by a network device, or determined by a terminal device.

In some embodiments, in a case where one sequence segment corresponds to M OOK symbols, the length of the repetitive bit(s) may be 1 to M - 1. Then, the fourth indication bit sequence corresponds to at least M - 1 values, and each value of the M - 1 values has a one-to-one mapping relationship with the length of at least one repetitive bit. For example, when the value of the fourth indication bit sequence is 1, the length of the corresponding repetitive bit is 1; when the value of the fourth indication bit sequence is 2, the length of the corresponding repetitive bits is 2; until when the value of the fourth indication bit sequence is the value M - 1, the length of the corresponding repetitive bits is M - 1.

Optionally, for the mapping relationship between values of the fourth indication bit sequence and the length of the at least one repetitive bit, reference is made to a Table 6 below.

Table 6

| Values of the fourth indication bit sequence | Length of repetitive bits |
| --- | --- |
| 001 | 1 |
| 010 | 2 |
| 011 | 3 |
| ...... | ...... |

In some embodiments, M has a plurality of candidate values, for example, M = {1, 2, 4, 6, 8}. Optionally, a number of the fourth indication bit sequences is determined based on the value of M at the time of communication. Optionally, the number of the fourth indication bit sequences is determined based on a maximum value of candidate values of M.

In some embodiments, the fourth indication bit sequence is sent separately. That is, the fourth indication bit sequence and the plurality of OOK symbols obtained after OOK modulation are sent separately.

In some embodiments, the fourth indication bit sequence is sent by being carried in a plurality of OOK symbols obtained after OOK modulation.

In some embodiments, as shown in FIG. 34, the above operation 420 may also be replaced with the following sub-operation.

**In operation 423,** a second bitmap having a length of a second number M is sent.

In some embodiments, the second bitmap is sent separately. That is, the second bitmap and the plurality of OOK symbols obtained after OOK modulation are sent separately.

In some embodiments, a number of bits having a first value in the second bitmap is used to indicate the length of at least one repetitive bit.

Optionally, the number of bits having a value of 1 in the second bitmap is used to indicate the length of at least one repetitive bit. For example, assuming that M = 4, the second bitmap is {1, 0, 0, 0}, and the number of bits having a value of 1 is 1, it means that the length of at least one repetitive bit is 1. It should be understood that when M = 4 and the length of at least one repetitive bit is 1, the second bitmap may also be {0, 1, 0, 0}, or {0, 0, 1, 0}, or {0, 0, 0, 1}.

Optionally, the number of bits having a value of 0 in the second bitmap is used to indicate the length of at least one repetitive bit. For example, assuming that M = 4, the second bitmap is {1, 0, 0, 0}, and the number of bits having a value of 0 is 3, it means that the length of at least one repetitive bit is 3. It should be understood that when M = 4 and the length of at least one repetitive bit is 3, the second bitmap may also be {0, 1, 0, 0}, or {0, 0, 1, 0}, or {0, 0, 0, 1}.

In some embodiments, a position of the bit having the first value in the second bitmap is associated with a position of the at least one repetitive bit in the second bit sequence. For example, as shown in FIG. 26, the position of the bit having the first value in the bitmap is the last bit, and the position of at least one repetitive bit in the second bit sequence is also the last bit.

Optionally, when the first value is 1, a position of a bit having a value of 1 in the second bitmap is associated with a position of at least one repetitive bit in the second bit sequence. For example, when M = 4 and the length of at least one repetitive bit is 1, the second bitmap is {0, 0, 0, 1}.

Optionally, when the first value is 0, a position of a bit having a value of 0 in the second bitmap is associated with a position of at least one repetitive bit in the second bit sequence. For example, when M = 4 and the length of at least one repetitive bit is 1, the second bitmap is {1, 1, 1, 0}.

**Implicit manner**

In some embodiments, as shown in FIG. 35, the above operation 420 may also be replaced with the following sub-operations.

**In operation 424,** during a process of OOK-modulating the second bit sequence into OOK symbols, bits having a first value in the second bit sequence are mapped into a target sequence.

Optionally, during the process of OOK-modulating the second bit sequence into OOK symbols, bits having a value of 1 in the second bit sequence are mapped into the target sequence.

Optionally, during the process of OOK-modulating the second bit sequence into OOK symbols, bits having a value of 0 in the second bit sequence are mapped into the target sequence.

In some embodiments, the target sequence is at least one of the following sequences:

· Pseudo-Noise (PN) sequence;
· Zadoff-Chu (ZC) sequence;
· Maximum-length (M) sequence.

Optionally, during the process of OOK-modulating the second bit sequence into OOK symbols, bits having a value of 1 in the second bit sequence are mapped into the PN sequence. Or, during the process of OOK-modulating the second bit sequence into OOK symbols, bits having a value of 1 in the second bit sequence are mapped into the ZC sequence. Or, during the process of OOK-modulating the second bit sequence into OOK symbols, bits having a value of 1 in the second bit sequence are mapped into the M sequence.

Optionally, during the process of OOK-modulating the second bit sequence into OOK symbols, bits having a value of 0 in the second bit sequence are mapped into the PN sequence. Or, during the process of OOK-modulating the second bit sequence into OOK symbols, bits having a value of 0 in the second bit sequence are mapped into the ZC sequence. Or, during the process of OOK-modulating the second bit sequence into OOK symbols, bits having a value of 0 in the second bit sequence are mapped into the M sequence.

In some embodiments, the target sequence is used to indicate the length of at least one repetitive bit. Optionally, a number of target sequences is x. Optionally, the number of target sequences is determined based on a value of M at the time of communication. For example, x is a positive integer greater than or equal to $\log_2 M$. Optionally, the number of the target sequences is determined based on a maximum value of candidate values of M.

Optionally, the target sequence or values of the target sequence is/are used to indicate the length of the at least one padding bit. That is, the length of the at least one padding bit is associated with the target sequence, or with the values of the target sequence.

Optionally, an index of the target sequence is used to indicate the length of the at least one repetitive bit. For example, a plurality of target sequences have a mapping relationship with the length of at least one repetitive bit. In some embodiments, the mapping relationship may be agreed by a protocol, configured by a network device, or determined by a terminal device.

In some embodiments, in a case where one sequence segment corresponds to M OOK symbols, the length of the repetitive bit(s) may be 1 to M - 1. Then, there are correspondingly M - 1 target sequences, and each one of the M - 1 target sequences has a one-to-one mapping relationship with the length of at least one repetitive bit.

For example, for the mapping relationship between a plurality of target sequences and the length of at least one repetitive bit, reference is made to Table 7 below.

Table 7

| Index of the target sequence | Length of repetitive bits |
|---|---|
| Target sequence 1 | 1 |
| Target sequence 2 | 2 |
| Target sequence 3 | 3 |
| ...... | ...... |

In some embodiments, M has a plurality of candidate values, for example, M = {1, 2, 4, 6, 8}. Optionally, a number of the target sequences is determined based on the value of M at the time of communication. Optionally, the number of the target sequences is determined based on a maximum value of candidate values of M.

Optionally, a cyclic shift value corresponding to the target sequence is used to indicate the length of the at least one repetitive bit. Different cyclic shift values of the same target sequence are used to represent lengths of different repetitive bits.

In some embodiments, in a case where one sequence segment corresponds to M OOK symbols, the length of the repetitive bit(s) may be 1 to M - 1. Then, one same target sequence needs to correspond to M - 1 cyclic shift values, and each of the M - 1 cyclic shift values has a one-to-one mapping relationship with the length of at least one repetitive bit. For example, when the cyclic shift value has a value of 1, the length of the corresponding repetitive bit is 1; when the cyclic shift value has a value of 2, the length of the corresponding repetitive bits is 2; until when the cyclic shift value has a value of M - 1, the length of the corresponding repetitive bits is M - 1.

For example, for the mapping relationship between the cyclic shift values of the target sequence and the length of at least one repetitive bit, reference is made to Table 8 below.

Table 8

| Cyclic shift value of target Sequence | Length of repetitive bits |
|---|---|
| B1 | 1 |
| B2 | 2 |
| B3 | 3 |

(continued)

| Cyclic shift value of target Sequence | Length of repetitive bits |
|---|---|
| ...... | ...... |

In some embodiments, M has a plurality of candidate values, for example, M = {1, 2, 4, 6, 8}. Optionally, a number of cyclic shift values of the target sequence is determined based on the value of M at the time of communication. Optionally, the number of cyclic shift values of the target sequence is determined based on a maximum value of candidate values of M.

In operation 425, OOK symbols corresponding to the second bit sequence are sent.

The sending end device sends OOK symbols corresponding to the second bit sequence obtained by OOK modulation to the receiving end device. Herein, bits having a first value in the second bit sequence are mapped into a target sequence, and the target sequence is used to indicate a length of the at least one padding bit.

Optionally, the manner of implicitly sending the length indication information may also be: during the process of OOK-modulating the second bit sequence into OOK symbols, phase randomization is performed on the second bit sequence or intermediate data using a target phase randomization sequence; and the OOK symbols corresponding to the second bit sequence are sent. The intermediate data is intermediate process data generated during the process of OOK-modulating the second bit sequence.

In some embodiments, the target phase randomization sequence is used to indicate the length of at least one repetitive bit.

Optionally, values of the target phase randomization sequence are used to indicate the length of the at least one repetitive bit. That is, the length of the at least one repetitive bit is associated with the values of the target phase randomization sequence.

Optionally, an index of the target phase randomization sequence is used to indicate the length of the at least one repetitive bit. For example, a plurality of target phase randomization sequences have a mapping relationship with the length of at least one repetitive bit. In some embodiments, the mapping relationship may be agreed by a protocol, configured by a network device, or determined by a terminal device.

In some embodiments, in a case where one sequence segment corresponds to M OOK symbols, the length of the repetitive bit(s) may be 1 to M - 1. Then, there are correspondingly M - 1 target phase randomization sequences, and each one of the M - 1 target phase randomization sequences has a one-to-one mapping relationship with the length of at least one repetitive bit.

For example, for the mapping relationship between a plurality of target phase randomization sequences and the length of at least one repetitive bit, reference is made to Table 9 below.

Table 9

| Index of the target phase randomization sequence | Length of repetitive bits |
|---|---|
| Target phase randomization sequence 1 | 1 |
| Target phase randomization sequence 2 | 2 |
| Target phase randomization sequence 3 | 3 |
| ...... | ...... |

In summary, in the method provided by the present embodiment, by sending the length indication information for indicating the length of at least one repetitive bit to the sending end device, the receiving end device can distinguish information corresponding to the repetitive bit and information corresponding to the non-repetitive bit, thereby ensuring that the receiving end can accurately parse information corresponding to valid OOK symbols through the length indication information even when a number of the valid OOK symbols to be transmitted is not an integer multiple of M.

In some embodiments, the first number L may be greater than the third number L'.

In a further embodiment based on the embodiment shown in FIG. 28, as shown in FIG. 36, the above operation 242 may be replaced with the following sub-operation.

**In operation 2422,** in a case where the first number L is greater than the third number L', truncated selection is performed on the first bit sequence to obtain the second bit sequence having a length of the third number L'.

In some embodiments, in the case where the first number L is greater than the third number L', a segment of the bit sequence is selected by truncation from the first bit sequence as the second bit sequence having a length of the third number L'. The bit sequence selected by truncation is a subsequence in the first bit sequence, or it is understood that the bit sequence selected by truncation is a sub-sequence in the first bit sequence.

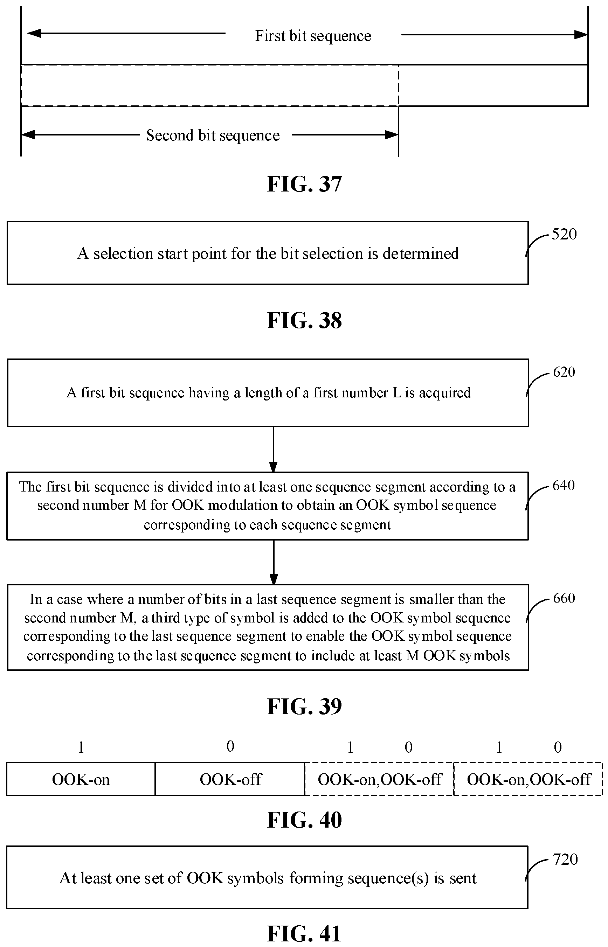

Exemplary, as shown in FIG. 37, assuming that the first bit sequence is {1, 0, 0, 1, 1, 1, 1, 0, 1, 0, 1}, then L = 11; and in the case of M = 4, L is not an integer multiple of M, then truncated selection is performed on the first bit sequence to obtain the second bit sequence {1, 0, 0, 1, 1, 1, 1, 0}, and at this time L' = 8. The second bit sequence selected by truncation is a subsequence in the first bit sequence.

Optionally, the length of the second bit sequence selected by truncation in the first bit sequence is determined based on the second number M.

In some embodiments, M has a plurality of candidate values, for example, M = {1, 2, 4, 6, 8}. Optionally, the length of the second bit sequence selected by truncation in the first bit sequence is determined based on the value of M at the time of communication. Optionally, the length of the second bit sequence selected by truncation in the first bit sequence is determined based on a maximum value of candidate values of M.

To sum up, according to the method provided by the embodiment of the disclosure, when the first number L is greater than the third number L', truncated selection is performed on the first bit sequence to obtain the second bit sequence having a length of the third number L', so that the processed second bit sequence can be divided into at least one sequence segment having a length of the second number M, thereby ensuring that the OOK symbols can be smoothly transmitted even when the number of valid OOK symbols to be transmitted is not an integer multiple of M.

In a further embodiment based on the embodiment shown in FIG. 28 or FIG. 29 or FIG. 36 described above, as shown in FIG. 38, the above method further includes an operation 520.

In operation 520, a selection start point for bit selection is determined.

The selection start point for the bit selection is determined based on indication information of a network device; or, the selection start point for the bit selection is determined based on an agreed rule of a communication protocol.

Optionally, the selection start point is determined based on the indication information of the network device, or the selection start point is determined based on the agreed rule of the communication protocol.

In some embodiments, the selection start point is used to indicate a selection start point for bit selection performed on the first bit sequence.

In some embodiments, the selection start point is used to indicate a selection start point for cyclic selection performed on the first bit sequence.

In some embodiments, the selection start point for cyclic selection performed on the first bit sequence is determined based on the indication information of the network device. For example, the indication information of the network device indicates that a sequence start point of the first bit sequence is used as the selection start point for cyclic selection performed on the first bit sequence.

In some embodiments, the selection start point for cyclic selection performed on the first bit sequence is determined based on the agreed rule of the communication protocol. For example, the agreed rule of the communication protocol indicate that a target bit position of the first bit sequence is used as the selection start point for cyclic selection performed on the first bit sequence.

In some embodiments, the selection start point is used to indicate a selection start point for truncated selection performed on the first bit sequence.

In some embodiments, the selection start point for truncated selection performed on the first bit sequence is determined based on the indication information of the network device. For example, the indication information of the network device indicates that a sequence start point of the first bit sequence is used as the selection start point for truncated selection performed on the first bit sequence.

In some embodiments, the selection start point for truncated selection performed on the first bit sequence is determined based on the agreed rule of the communication protocol. For example, the agreed rule of the communication protocol indicate that a target bit position of the first bit sequence is used as the selection start point for truncated selection performed on the first bit sequence.

Optionally, the selection start point is indicated using a Start and Length Indicator (SLIV).

In summary, in the method provided by the present embodiment, by determining the selection start point for the bit selection, the sending end device can perform bit selection on the first bit sequence based on an accurate selection start point.

In some embodiments, the embodiments of the disclosure also proposes a method for generating an OOK symbol, which can solve the problem that M OOK symbols cannot be obtained when a last sequence segment is OOK-modulated due to the fact that a number of bits in the last sequence segment obtained by dividing the first bit sequence having a length L will be smaller than M when L is not an integer multiple of M.

FIG. 39 shows a flowchart of a method for generating an OOK symbol provided by an exemplary embodiment of the disclosure. The method is performed by a sending end device, which may be a network device or an AP or an ambient IoT device or a terminal device, and the method includes operations as follows.

In operation 620, a first bit sequence having a length of a first number L is acquired.

The first number L is a number of bits in the first bit sequence. For example, assuming that the first bit sequence is {1, 0, 1, 1, 1, 1, 1, 0, 1, 0, 1, 0, 1, 0, 1, 0, 1, 0}, then L is 18.

In some embodiments, the first bit sequence is any one of:

· an original bit sequence for which encoding is not required;

· an original bit sequence before encoding;

· an encoded bit sequence after encoding is performed on the original bit sequence; and

· an encoded bit sequence after at least one stage encoding of multi-stage encoding is performed on the original bit sequence.

In some embodiments, for the first bit sequence, reference is made to the introduction made in the operation 220 above.

In operation 640, the first bit sequence is divided into at least one sequence segment according to a second number M for OOK modulation to obtain an OOK symbol sequence corresponding to each sequence segment.

The second number M is a number of OOK symbols transmitted in a preset duration. The preset duration is determined by a basic time-domain unit in a cellular communication system or a WiFi system. In some embodiments, the preset duration is t OFDM symbols in which M OOK symbols may be transmitted. M is a number of OOK symbols transmitted in the t OFDM symbols. The value of t is a positive integer. In the embodiment of the disclosure, description is made by taking an example that M OOK symbols are transmitted in 1 OFDM symbol.

In some embodiments, M may be agreed by a protocol, configured by a network device, or determined by a terminal device based on a preset mapping relationship.

In some embodiments, M has a plurality of candidate values, for example, M = {1, 2, 4, 6, 8}.

In some embodiments, the first bit sequence is divided into at least one sequence segment according to the second number M. For example, assuming that the first bit sequence is {1, 0, 0, 1, 1, 1, 1, 0, 1, 0, 1}. In the case of M = 4, the first bit sequence is divided into segments, and sequence segment 1 is {1, 0, 0, 1}, sequence segment 2 is {1, 1, 1, 0}, and sequence segment 3 is {1, 0, 1}.

OOK modulation is performed on at least one sequence segment obtained based on the division of the first bit sequence, to obtain the OOK symbol sequence corresponding to each sequence segment.

It should be understood that it is possible to perform OOK modulation on all sequence segments simultaneously, to obtain the OOK symbol sequence corresponding to each sequence segment.

Alternatively, it is possible to group all sequence segments and sequentially perform OOK modulation in units of groups to obtain an OOK symbol sequence corresponding to each sequence segment. For example, it is assumed that there are four sequence segments, including sequence segment 1, sequence segment 2, sequence segment 3 and sequence segment 4. The sequence segment 1 and sequence segment 2 are OOK-modulated as a group to obtain an OOK symbol sequence 1 corresponding to the sequence segment 1 and an OOK symbol sequence 2 corresponding to the sequence segment 2; and the sequence segment 3 and the sequence segment 4 are OOK-modulated as a group to obtain an OOK symbol sequence 3 corresponding to the sequence segment 3 and an OOK symbol sequence 4 corresponding to the sequence segment 4.

Alternatively, it is possible to sequentially perform OOK modulation on each sequence segment in units of each sequence segment to obtain an OOK symbol sequence corresponding to each sequence segment. For example, it is assumed that there are four sequence segments, including sequence segment 1, sequence segment 2, sequence segment 3, and sequence segment 4. OOK modulation is performed sequentially, that is, OOK modulation is performed on the sequence segment 1 to obtain the OOK symbol sequence 1 corresponding to the sequence segment 1; OOK modulation is performed on the sequence segment 2 to obtain the OOK symbol sequence 2 corresponding to the sequence segment 2; OOK modulation is performed on the sequence segment 3 to obtain the OOK symbol sequence 3 corresponding to the sequence segment 3; and OOK modulation is performed on the sequence segment 4 to obtain the OOK symbol sequence 4 corresponding to the sequence segment 4.

In some embodiments, the OOK symbol includes a first type of symbol corresponding to a bit having a first value and/or a second type of symbol corresponding to a bit having a second value. The first type of symbol and the second type of symbol are different types of symbols, and the first value and the second value are also different. For example, the first value corresponding to the first type of symbol is 1, and the second value corresponding to the second type of symbol is 0; or, the first value corresponding to the first type of symbol is 0, and the second value corresponding to the second type of symbol is 1.

Optionally, the OOK symbol sequence includes only the first type of symbol; or, the OOK symbol sequence includes only the second type of symbol. For example, the OOK symbol sequence is {OOK-on, OOK-on, OOK-on, OOK-on, OOK-on, OOK-on}; or, the OOK symbol sequence is {OOK-off, OOK-off, OOK-off, OOK-off, OOK-off, OOK-off}.

Optionally, the OOK symbol sequence includes a first type of symbol and a second type of symbol. For example, the OOK symbol sequence is {OOK-on, OOK-off, OOK-off, OOK-on, OOK-off, OOK-on}.

In operation 660, In a case where a number of bits in a last sequence segment is smaller than the second number M, a third type of symbol is added to the OOK symbol sequence corresponding to the last sequence segment to enable the OOK symbol sequence corresponding to the last sequence segment to include at least M OOK symbols.

In some embodiments, in a case where the first number L is not an integer multiple of the second number M, the number of bits in the last sequence segment obtained by dividing the first bit sequence according to the second number M will be smaller than the second number M. Then, a third type of symbol is added to the OOK symbol sequence corresponding to the last sequence segment to enable the OOK symbol sequence corresponding to the last sequence segment to include at least M OOK symbols.

In some embodiments, the third type of symbol is an OOK symbol different from the first type of symbol and the second type of symbol. Optionally, the third type of symbol is obtained by performing OOK modulation based on a bit sequence having a third value. It should be understood that each of the first type of symbol, the second type of symbol and the third type of symbol corresponds to a same time-domain length. Or, it is understood that a time-domain length corresponding to a bit having the first value is the same as a time-domain length corresponding to a bit sequence having the third value.

For example, as shown in FIG. 40, assuming that the last sequence segment is {1, 0}, the last sequence segment is OOK-modulated to obtain an OOK symbol sequence that is {OOK-on, OOK-off}. In the case of M = 4, it is necessary to add a third type of symbol to the OOK symbol sequence, such as adding {OOK-on, OOK-off; OOK-on, OOK-off}. It should be understood that in the added third type of symbols, "OOK-on, OOK-off", as a combination, has the same time domain length as the time domain length of one "OOK-on" symbol or the time domain length of one "OOK-off" symbol in the original OOK symbol sequence.

In some embodiments, the third type of symbol may be considered as an abnormal type of symbol. In one way of understanding, the abnormal type of symbol can be understood as a symbol of waveform abnormality; and in one way of understanding, the abnormal type of symbol can be understood as a symbol of length abnormality.

In some embodiments, M has a plurality of candidate values, for example, M = {1, 2, 4, 6, 8}. Optionally, the number of the third type of symbols is determined based on the value of M at the time of communication. Optionally, the number of the third type of symbols is determined based on a maximum value of candidate values of M.

In some embodiments, the bit sequence corresponding to the third type of symbol may be agreed by a protocol, configured by a network device, or determined by a terminal device.

In summary, in the method provided by the present embodiment, by adding the third type of symbol to the OOK symbol sequence corresponding to the last sequence segment, the OOK symbol sequence corresponding to the last sequence segment is enabled to include at least M OOK symbols, so that it is ensured that OOK symbols can be smoothly transmitted even when the number of valid OOK symbols to be transmitted is not an integer multiple of M.

In a further embodiment based on the embodiment shown in FIG. 39, the embodiment of the disclosure further provides a method for sending an OOK symbol.

FIG. 41 shows a flowchart of a method for sending an OOK symbol provided by an exemplary embodiment of the disclosure. The method is performed by a sending end device, which may be a network device or an AP or an ambient IoT device or a terminal device, and the method includes operations as follows.

**In operation 720,** at least one set of OOK symbols forming sequence(s) is sent.

In some embodiments, each set of OOK symbols forming the sequence includes a second number M of OOK symbols.

The second number M is a number of OOK symbols transmitted in a preset duration. The preset duration is determined by a basic time-domain unit in a cellular communication system or a WiFi system. In some embodiments, the preset duration is t OFDM symbols in which M OOK symbols may be transmitted. M is a number of OOK symbols transmitted in the t OFDM symbols. The value of t is a positive integer. In the embodiment of the disclosure, description is made by taking an example that M OOK symbols are transmitted in 1 OFDM symbol.

In some embodiments, M may be agreed by a protocol, configured by a network device, or determined by a terminal device based on a preset mapping relationship.

In some embodiments, M has a plurality of candidate values, for example, M = {1, 2, 4, 6, 8}.

In some embodiments, at least one set of OOK symbols forming sequence(s) corresponds to a first bit sequence having a length of a first number L.

The first number L is a number of bits in the first bit sequence. For example, assuming that the first bit sequence is {1, 0, 1, 1, 1, 1, 1, 0, 1, 0, 1, 0, 1, 0, 1, 0, 1, 0}, then L is 18.

In some embodiments, the first bit sequence is any one of:

· an original bit sequence for which encoding is not required;
· an original bit sequence before encoding;
· an encoded bit sequence after encoding is performed on the original bit sequence; and
· an encoded bit sequence after at least one stage encoding of multi-stage encoding is performed on the original bit sequence.

In some embodiments, for the first bit sequence, reference is made to the introduction made in operation 220 above.

**EP 4 770 026 A1**

In some embodiments, a last one among the at least one set of OOK symbols forming sequence(s) includes a third type of symbol, the third type of symbol is an OOK symbol different from a first type of symbol and a second type of symbol, the first type of symbol corresponds to a bit having a first value, and the second type of symbol corresponds to a bit having a second value. Optionally, the third type of symbol corresponds to a bit sequence having a third value. It should be understood that each of the first type of symbol, the second type of symbol and the third type of symbol corresponds to a same time-domain length. Or, it is understood that a time-domain length corresponding to a bit having the first value is the same as a time-domain length corresponding to a bit sequence having the third value.

In some embodiments, the bit sequence corresponding to the third type of symbol may be agreed by a protocol, configured by a network device, or determined by a terminal device.

In summary, in the method provided by the present embodiment, by adding the third type of symbol to the OOK symbol sequence corresponding to the last sequence segment, the OOK symbol sequence corresponding to the last sequence segment is enabled to include at least M OOK symbols, so that it is ensured that OOK symbols can be smoothly transmitted even when the number of valid OOK symbols to be transmitted is not an integer multiple of M.

In some embodiments, the embodiments of the disclosure also propose a method for determining a TBS value, which can accurately transmit OOK symbols by determining the TBS value to be a numerical value related to M. The embodiment of the disclosure can be combined with any of the above-described embodiments to be implemented as new embodiments.

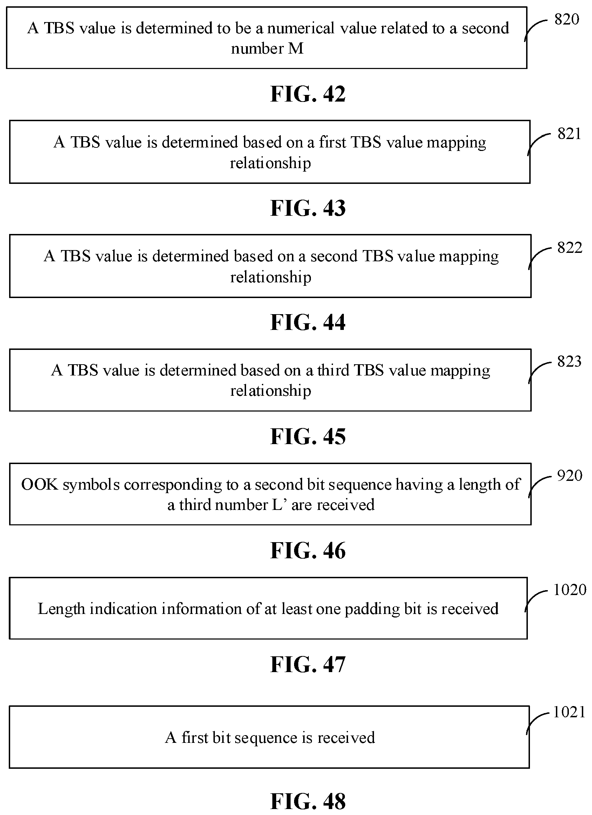

FIG. 42 shows a flowchart of a method for determining an TBS value provided by an exemplary embodiment of the disclosure. The method is performed by a sending end device, which may be a network device or an AP or an ambient IoT device or a terminal device, and the method includes an operation as follows.

**In operation 820,** the TBS value is determined to be a numerical value related to the second number M.

The second number M is a number of OOK symbols transmitted in a preset duration. The preset duration is determined by a basic time-domain unit in a cellular communication system or a WiFi system. In some embodiments, the preset duration is t OFDM symbols in which M OOK symbols may be transmitted. M is a number of OOK symbols transmitted in the t OFDM symbols. The value of t is a positive integer. In the embodiment of the disclosure, description is made by taking an example that M OOK symbols are transmitted in 1 OFDM symbol.

In some embodiments, M may be agreed by a protocol, configured by a network device, or determined by a terminal device based on a preset mapping relationship.

In some embodiments, M has a plurality of candidate values, for example, M = {1, 2, 4, 6, 8}.

In some embodiments, the numerical value related to the second number M includes at least one of the following:

an integer multiple of the second number M;
an integer multiple of one-half of the second number M.

Optionally, the TBS value is determined to be an integer multiple of the second number M. This ensures that the OOK symbols can be smoothly transmitted even when the number of valid OOK symbols to be transmitted is not an integer multiple of M.

Optionally, in a case where the original bit sequence is encoded using a Manchester encoder, the TBS value is determined to be an integer multiple of one-half of the second number M. Exemplarily, as shown in FIG. 12 or FIG. 13, the encoder is a Manchester encoder.

In summary, in the method provided by the present embodiment, by determining the TBS value to be a numerical value related to M, it is ensured that the OOK symbols can be smoothly transmitted even when the number of valid OOK symbols to be transmitted is not an integer multiple of M.

In a further embodiment based on the embodiment shown in FIG. 42, as shown in FIG. 43, the above operation 820 may be replaced with the following sub-operation.

**In operation 821,** the TBS value is determined based on a first TBS value mapping relationship.

In some embodiments, candidate TBS values in the first TBS value mapping relationship are all numerical values related to the second number M.

Optionally, the candidate TBS values in the first TBS value mapping relationship are all an integer multiple of the second number M.

Optionally, the candidate TBS values in the first TBS value mapping relationship are all an integer multiple of one-half of the second number M.

Optionally, the candidate TBS values in the first TBS value mapping relationship are all an integer multiple of one-half of the second number M and an integer multiple of the second number M.

For example, for the first TBS value mapping relationship, reference is made to the Table 10 below.

Table 10

| Index | TBS |
|-------|-----|
| 1 | M |
| 2 | 2M |
| 3 | 3M |
| ...... | ...... |

In a further embodiment based on the embodiment shown in FIG. 42, as shown in FIG. 44, the above operation 820 may also be replaced with the following sub-operation.

**In operation 822,** the TBS value is determined based on a second TBS value mapping relationship.

In some embodiments, the TBS value is greater than or equal to the first number L, and the TBS value is a minimum integer multiple of the second number M. The first number L is a length of the first bit sequence to be transmitted.

In some embodiments, the first bit sequence is any one of:

· an original bit sequence for which encoding is not required;
· an original bit sequence before encoding;
· an encoded bit sequence after encoding is performed on the original bit sequence; and
· an encoded bit sequence after at least one stage encoding of multi-stage encoding is performed on the original bit sequence.

In some embodiments, for the first bit sequence, reference is made to the introduction made in the operation 220 above.

In some embodiments, not all candidate TBS values in the second TBS value mapping relationship are numerical values related to the second number M.

Optionally, a part of the candidate TBS values in the second TBS value mapping relationship is an integer multiple of the second number M, and another part is a numerical value not related to the second number M.

Optionally, a part of the candidate TBS values in the second TBS value mapping relationship is an integer multiple of one-half of the second number M, and another part is a numerical value not related to the second number M.

Optionally, a part of the candidate TBS values in the second TBS value mapping relationship is an integer multiple of one-half of the second number M and an integer multiple of the second number M, and another part is a numerical value not related to the second number M.

For example, for the second TBS value mapping relationship, reference is made to the Table 11 below.

Table 11

| Index | TBS |
|-------|-----|
| 1 | K |
| 2 | M |
| 3 | 2M |
| ...... | ...... |

Herein, K is an arbitrary numerical value that is not related to M.

In a further embodiment based on the embodiment shown in FIG. 42, as shown in FIG. 45, the above operation 820 may also be replaced with the following sub-operation.

**In operation** 823, the TBS value is determined based on a third TBS value mapping relationship.

In some embodiments, the TBS value is greater than or equal to the first number L, and the TBS value is a minimum integer multiple of the fourth number. The first number L is a length of the first bit sequence to be transmitted. The fourth number is a quotient of the second number M and the fifth number P, and the fifth number P is related to an encoding mode adopted by the first bit sequence. For example, assuming that the first bit sequence is encoded by the Manchester coding, thus the fifth number P = 2, and the fourth number $P = \frac{M}{2}$, then the TBS value is a minimum integer multiple of $\frac{M}{2}$.

In some embodiments, not all candidate TBS values in the third TBS value mapping relationship are numerical values related to the second number M.

Optionally, a part of the candidate TBS values in the third TBS value mapping relationship is an integer multiple of the second number M, and another part is a numerical value not related to the second number M.

Optionally, a part of the candidate TBS values in the third TBS value mapping relationship is an integer multiple of the fourth number, and another part is a numerical value not related to the second number M. Optionally, a part of the candidate TBS values in the third TBS value mapping relationship is an integer multiple of one-half of the second number M, and another part is a numerical value not related to the second number M.

Optionally, a part of the candidate TBS values in the third TBS value mapping relationship is an integer multiple of the fourth number and an integer multiple of the second number M, and another part is a numerical value unrelated to the second number M. Optionally, a part of the candidate TBS values in the third TBS value mapping relationship is an integer multiple of one-half of the second number M and an integer multiple of the second number M, and another part is a numerical value unrelated to the second number M.

For example, for the third TBS value mapping relationship, reference is made to the Table 12 below.

Table 12

| Index | TBS |
|-------|-----|
| 1 | M/2 |
| 2 | M |
| 3 | K |
| ...... | ...... |

Herein, K is an arbitrary numerical value that is not related to M.

In a further embodiment based on the embodiment shown in FIG. 43 or FIG. 44 or FIG. 45 described above, one of the following alternatives applies.

Optionally, difference numbers M correspond to a same TBS value mapping relationship. For example, both M = 2 and M = 4 correspond to the first TBS value mapping relationship.

Optionally, a part of the different second numbers M corresponds to a same TBS value mapping relationship, and another part of the different second numbers M corresponds to different TBS value mapping relationships. For example, both M = 2 and M = 4 correspond to the first TBS value mapping relationship. M = 6 corresponds to the second TBS value mapping relationship. M = 8 corresponds to the third TBS value mapping relationship.

Optionally, difference numbers M correspond to different TBS value mapping relationships. For example, M = 2 corresponds to the first TBS value mapping relationship. M = 4 corresponds to the second TBS value mapping relationship. M = 6 corresponds to the third TBS value mapping relationship. By analogy, each second number M corresponds to a respective TBS value mapping relationship.

In summary, tin the method provided by the present embodiment, by determining the TBS value, it is ensured that the OOK symbols can be smoothly transmitted even when the number of valid OOK symbols to be transmitted is not an integer multiple of M.

FIG. 46 shows a flowchart of a method for preprocessing a bit sequence provided by an exemplary embodiment of the disclosure. The method is performed by a receiving end device, which may be a network device or an AP or an ambient IoT device or a terminal device, and the method includes an operation as follows.

In operation 920, OOK symbols corresponding to a second bit sequence having a length of a third number L' are received.

In some embodiments, the second bit sequence is obtained by processing the first bit sequence by the sending end device in a case where the first number L corresponding to the first bit sequence is not an integer multiple of the second number M.

The first number L is a number of bits in the first bit sequence. For example, assuming that the first bit sequence is {1, 0, 1, 1, 1, 1, 1, 0, 1, 0, 1, 0, 1, 0, 1, 0, 1, 0}, then L is 18.

In some embodiments, the first bit sequence is any one of:

· an original bit sequence for which encoding is not required;
· an original bit sequence before encoding;
· an encoded bit sequence after encoding is performed on the original bit sequence; and
· an encoded bit sequence after at least one stage encoding of multi-stage encoding is performed on the original bit sequence.

In some embodiments, for the first bit sequence, reference is made to the introduction made in the operation 220 above.

Optionally, the first number L is smaller than the third number L'. Optionally, the first number L is greater than the third number L'.

The second number M is a number of OOK symbols transmitted in a preset duration. The preset duration is determined by a basic time-domain unit in a cellular communication system or a WiFi system. In some embodiments, the preset duration is t OFDM symbols in which M OOK symbols may be transmitted. M is a number of OOK symbols transmitted in the t OFDM symbols. The value of t is a positive integer. In the embodiment of the disclosure, description is made by taking an example that M OOK symbols are transmitted in 1 OFDM symbol.

In some embodiments, M may be agreed by a protocol, configured by a network device, or determined by a terminal device based on a preset mapping relationship.

In some embodiments, M has a plurality of candidate values, for example, M = {1, 2, 4, 6, 8}.

The third number L' is a number of bits in the second bit sequence. For example, if the second bit sequence is {1, 0, 1, 0}, then L' is 4.

In some embodiments, the second bit sequence is configured to be divided into at least one sequence segment having a length of the second number M for OOK modulation, to obtain M OOK symbols corresponding to each sequence segment. That is, the third number L' is an integer multiple of the second number M. For example, if the second bit sequence is {1, 0, 1, 0} and M = 2, the second bit sequence can be divided into two sequence segments each having a length of 2, and respective sequence segments are {1, 0}, {1, 0}.

It should be understood that in the case where the first number L is not an integer multiple of the second number M, when the first bit sequence having the length of the first number L is segmented, the first bit sequence having the length of the first number L cannot be divided into a plurality of sequence segments having the length of the second number M. That is, the length of the last sequence segment will be smaller than the second number M. At this time, the last sequence segment cannot be OOK-modulated. For example, assuming that the first bit sequence is {1, 0, 0, 1, 1, 1, 1, 0, 1, 0, 1}, then L = 11. In the case of M = 4, the first bit sequence is divided into segments, and sequence segment 1 is {1, 0, 0, 1}, sequence segment 2 is {1, 1, 1, 0}, and sequence segment 3 is {1, 0, 1}.

In some embodiments, the method for processing a first bit sequence described above may have a variety of alternative designs. For details, reference can be made to the alternative designs 1 and 2 described in operation 240 above.

In summary, in the method provided by the present embodiment, by receiving the OOK symbol corresponding to the second bit sequence having the length of the third number L', valid OOK symbols to be transmitted can be accurately received even when the number of valid OOK symbols to be transmitted is not an integer multiple of M.

**For alternative design 1 (bit padding)**

In some embodiments, the second bit sequence having the third number L' is obtained by performing bit padding on the first bit sequence by the sending end device.

In some embodiments, in the case where the first number L is not an integer multiple of the second number M, bit padding is performed by the sending end device on the first bit sequence having the length of the first number L, so that the first bit sequence having the length of the first number L is padded into the second bit sequence having a length of the third number L'. The third number L' is an integer multiple of the second number M.

Exemplary, assuming that the first bit sequence is {1, 0, 0, 1, 1, 1, 1, 0, 1, 0, 1}, then L = 11; and in the case of M = 4, L is not an integer multiple of M, then bit padding is performed by the sending end device on the first bit sequence to obtain the second bit sequence {1, 0, 0, 1, 1, 1, 1, 0, 1, 0, 1, 1}, and at this time L' = 12.

Optionally, in a case where the first number L is smaller than the third number L', bit padding is performed by the sending end device on the first bit sequence to obtain the second bit sequence having a length of the third number L'.

In some embodiments, the second bit sequence having the third number L' is obtained by adding at least one padding bit to a tail of the first bit sequence by the sending end device.

In some embodiments, the first bit sequence is divided by the sending end device according to the second number M to obtain multiple sequence segments. In a case where the first number L is not an integer multiple of the second number M, the length of the last sequence segment obtained by division of the first bit sequence will be smaller than the second number M, and at least one padding bit is added to the last sequence segment obtained by division of the first bit sequence division to make the length of the last sequence segment obtained by division of the first bit sequence to be equal to M, thereby enabling OOK modulation.

In some embodiments, the at least one padding bit added to the tail of the first bit sequence includes any one of:

· a bit sequence having all values of 1;
· a bit sequence having all values of 0;
· a bit sequence having values arranged according to a fixed law; and

· a bit sequence determined based on the second number M.

In some embodiments, for the at least one padding bit added to the tail of the first bit sequence, reference is made to the introduction in the operation 2411 above.

FIG. 47 shows a flowchart of a method for preprocessing a bit sequence provided by an exemplary embodiment of the disclosure. The method is performed by a receiving end device, which may be a network device or an AP or an ambient IoT device or a terminal device, and the method includes an operation as follows.

In operation 1020, length indication information of the at least one padding bit is received.

The length indication information is used to indicate the length of at least one padding bit, so that the receiving end device can distinguish information corresponding to the padding bit and information corresponding to the non-padding bit.

In some embodiments, the length indication information is sent by the sending end device separately. That is, the length indication information and the plurality of OOK symbols obtained after OOK modulation are sent separately. Exemplarily, as shown in FIG. 21, the length indication information is sent separately independently of the M OOK symbols, and is used to indicate the length of at least one padding bit.

In some embodiments, the length indication information is sent by the sending end device by being carried in a plurality of OOK symbols obtained after OOK modulation. Exemplarily, as shown in FIG. 22, the length indication information is carried in M OOK symbols obtained after OOK modulation, and is used to indicate the length of at least one padding bit. That is, a length indication bit sequence corresponding to the length indication information is a subset of the bit sequence corresponding to the M OOK symbols, or it is understood that the length indication bit sequence corresponding to the length indication information is a sub-sequence of the bit sequence corresponding to the M OOK symbols. Optionally, positions of the length indication bit sequence corresponding to the length indication information in the bit sequence corresponding to the M OOK symbols are fixed, and optionally, the positions of the length indication bit sequence corresponding to the length indication information in the bit sequence corresponding to the M OOK symbols may be agreed by a protocol, configured by a network device, or configured by a terminal device.

In some embodiments, M has a plurality of candidate values, for example, M = {1, 2, 4, 6, 8}. Optionally, a length of the length indication bit sequence corresponding to the length indication information is determined based on the value of M at the time of communication. For example, the length of the length indication bit sequence corresponding to the length indication information is: $l = \lceil \log_2 M \rceil$. Optionally, the length of the length indication bit sequence corresponding to the length indication information is determined based on a maximum value of the candidate values of M. For example, the length of the length indication bit sequence corresponding to the length indication information is: $l = \lceil \log_2 M_{\max} \rceil$. $\lceil * \rceil$ represents rounding up.

In some embodiments, as shown in FIG. 48, the above operation 1020 may be replaced with the following sub-operation.

**In operation 1021,** a first indication bit sequence is received.

In some embodiments, values of the first indication bit sequence are equal to a length of the at least one padding bit. For example, assuming that the first bit sequence is {1, 0, 0, 1, 1, 1, 1, 0, 1, 0} and M = 4, then it is necessary to add 2 padding bits at this time, so that the length of the obtained second bit sequence is an integer multiple of 4. Exemplarily, the two added padding bits are {1, 0}. Then, the first indication bit sequence may be {1, 0}, and the values of the first indication bit sequence are 10, which are equal to 2.

In some embodiments, in a case where one sequence segment corresponds to M OOK symbols, the length of the padding bit(s) may be 1 to M - 1. Assuming that M = $2^n$, then the length of the first indication bit sequence is greater than or equal to n.

In some embodiments, the first indication bit sequence is sent by the sending end device separately. That is, the first indication bit sequence and the plurality of OOK symbols obtained after OOK modulation are sent separately.

In some embodiments, the first indication bit sequence is sent by the sending end device by being carried in a plurality of OOK symbols obtained after OOK modulation.

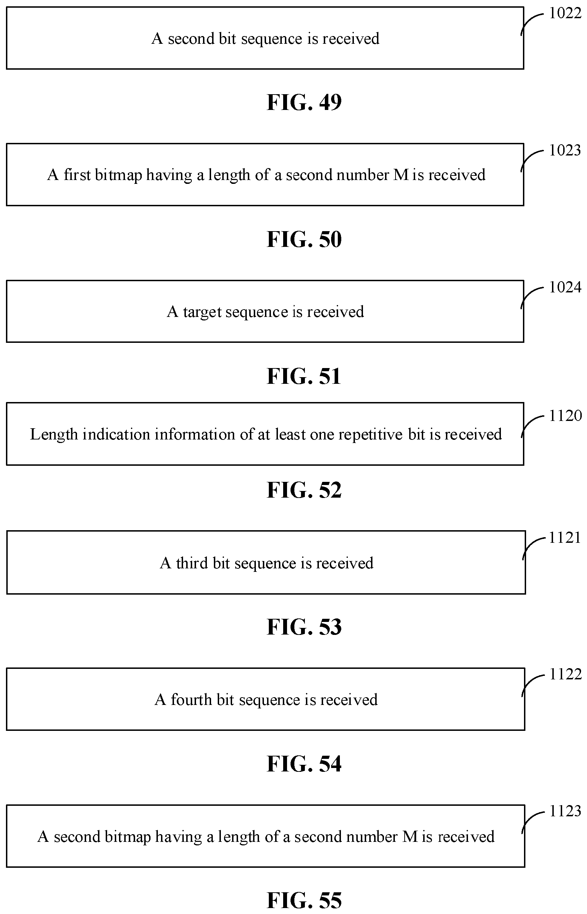

In some embodiments, as shown in FIG. 49, the above operation 1020 may also be replaced with the following sub-operations.

**In operation 1022,** a second indication bit sequence is received.

In some embodiments, values of the second indication bit sequence have a mapping relationship with the length of the at least one padding bit. In some embodiments, the mapping relationship may be agreed by a protocol, configured by a network device, or determined by a terminal device.

In some embodiments, in a case where one sequence segment corresponds to M OOK symbols, the length of the padding bit(s) may be 1 to M - 1. Then, the second indication bit sequence corresponds to at least M - 1 values, and each value of the M - 1 values has a one-to-one mapping relationship with the length of at least one padding bit. For example, when the value of the second indication bit sequence is 1, the length of the corresponding padding bit is 1; when the value of the second indication bit sequence is 2, the length of the corresponding padding bits is 2; until when the value of the second indication bit sequence is the value M - 1, the length of the corresponding padding bits is M - 1.

Optionally, for the mapping relationship between values of the second indication bit sequence and the length of the at least one padding bit, reference is made to a Table 2 above.

In some embodiments, M has a plurality of candidate values, for example, M = {1, 2, 4, 6, 8}. Optionally, a number of the second indication bit sequences is determined based on the value of M at the time of communication. Optionally, the number of the second indication bit sequences is determined based on a maximum value of candidate values of M.

In some embodiments, the second indication bit sequence is sent by the sending end device separately. That is, the second indication bit sequence and the plurality of OOK symbols obtained after OOK modulation are sent separately.

In some embodiments, the second indication bit sequence is sent by the sending end device by being carried in a plurality of OOK symbols obtained after OOK modulation.

In some embodiments, as shown in FIG. 50, the above operation 1020 may also be replaced with the following sub-operations.

**In operation 1023,** a first bitmap having a length of a second number M is received.

In some embodiments, the first bitmap is sent by the sending end device separately. That is, the first bitmap and the plurality of OOK symbols obtained after OOK modulation are sent separately.

In some embodiments, a number of bits having a first value in the first bitmap is used to indicate the length of at least one padding bit.

Optionally, the number of bits having a value of 1 in the first bitmap is used to indicate the length of at least one padding bit. For example, assuming that M = 4, the first bitmap is {1, 0, 0, 0}, and the number of bits having a value of 1 is 1, it means that the length of at least one padding bit is 1. It should be understood that when M = 4 and the length of at least one padding bit is 1, the first bitmap may also be {0, 1, 0, 0}, or {0, 0, 1, 0}, or {0, 0, 0, 1}.

Optionally, the number of bits having a value of 0 in the first bitmap is used to indicate the length of at least one padding bit. For example, assuming that M = 4, the first bitmap is {1, 0, 0, 0}, and the number of bits having a value of 0 is 3, it means that the length of at least one padding bit is 3. It should be understood that when M = 4 and the length of at least one padding bit is 3, the first bitmap may also be {0, 1, 0, 0}, or {0, 0, 1, 0}, or {0, 0, 0, 1}.

In some embodiments, a position of the bit having the first value in the first bitmap is associated with a position of the at least one padding bit in the second bit sequence. For example, as shown in FIG. 26, the position of the bit having the first value in the bitmap is the last bit, and the position of at least one padding bit in the second bit sequence is also the last bit.

Optionally, when the first value is 1, a position of a bit having a value of 1 in the first bitmap is associated with a position of at least one padding bit in the second bit sequence. For example, when M = 4 and the length of at least one padding bit is 1, the first bitmap is {0, 0, 0, 1}.

Optionally, when the first value is 0, a position of a bit having a value of 0 in the first bitmap is associated with a position of at least one padding bit in the second bit sequence. For example, when M = 4 and the length of at least one padding bit is 1, the first bitmap is {1, 1, 1, 0}.

In some embodiments, as shown in FIG. 51, the above operation 1020 may also be replaced with the following sub-operations.

**In operation 1024,** the target sequence is received.

In some embodiments, the target sequence is used to indicate a length of the at least one padding bit, wherein the target sequence is obtained by mapping bits having a first value in the second bit sequence by the sending end device during a process of OOK-modulating the second bit sequence into OOK symbols.

Optionally, the target sequence is obtained by mapping bits having a value of 1 in the second bit sequence by the sending end device during a process of OOK-modulating the second bit sequence into OOK symbols.

Optionally, the target sequence is obtained by mapping bits having a value of 0 in the second bit sequence by the sending end device during a process of OOK-modulating the second bit sequence into OOK symbols.

In some embodiments, the target sequence is at least one of the following sequences:

- · Pseudo-Noise (PN) sequence;
- · Zadoff-Chu (ZC) sequence;
- · Maximum-length (M) sequence.

Optionally, the target sequence is a PN sequence obtained by mapping bits having a value of 1 in the second bit sequence by the sending end device during a process of OOK-modulating the second bit sequence into OOK symbols. Or, the target sequence is a ZC sequence obtained by mapping bits having a value of 1 in the second bit sequence by the sending end device during a process of OOK-modulating the second bit sequence into OOK symbols. Or, the target sequence is an M sequence obtained by mapping bits having a value of 1 in the second bit sequence by the sending end device during a process of OOK-modulating the second bit sequence into OOK symbols.

Optionally, the target sequence is a PN sequence obtained by mapping bits having a value of 0 in the second bit sequence by the sending end device during a process of OOK-modulating the second bit sequence into OOK symbols. Or, the target sequence is a ZC sequence obtained by mapping bits having a value of 0 in the second bit sequence by the sending end device during a process of OOK-modulating the second bit sequence into OOK symbols. Or, the target sequence is an M sequence obtained by mapping bits having a value of 0 in the second bit sequence by the sending end device during a process of OOK-modulating the second bit sequence into OOK symbols.

In some embodiments, the target sequence is used to indicate the length of at least one padding bit. Optionally, a number of target sequences is x. Optionally, the number of target sequences is determined based on a value of M at the time of communication. For example, x is a positive integer greater than or equal to $\log_2 M$. Optionally, the number of the target sequences is determined based on a maximum value of candidate values of M.

Optionally, the target sequence or values of the target sequence is/are used to indicate the length of the at least one padding bit. That is, the length of the at least one padding bit is associated with the target sequence, or with the values of the target sequence.

Optionally, an index of the target sequence is used to indicate the length of the at least one padding bit. For example, a plurality of target sequences have a mapping relationship with the length of at least one padding bit. In some embodiments, the mapping relationship may be agreed by a protocol, configured by a network device, or determined by a terminal device.

In some embodiments, in a case where one sequence segment corresponds to M OOK symbols, the length of the padding bit(s) may be 1 to M - 1. Then, there are correspondingly M - 1 target sequences, and each one of the M - 1 target sequences has a one-to-one mapping relationship with the length of at least one padding bit.

For example, for the mapping relationship between a plurality of target sequences and the length of at least one padding bit, reference is made to Table 3 above.

In some embodiments, M has a plurality of candidate values, for example, M = {1, 2, 4, 6, 8}. Optionally, a number of the target sequences is determined based on the value of M at the time of communication. Optionally, the number of the target sequences is determined based on a maximum value of candidate values of M.

Optionally, a cyclic shift value corresponding to the target sequence is used to indicate the length of the at least one padding bit. Different cyclic shift values of the same target sequence are used to represent lengths of different padding bits.

In some embodiments, in a case where one sequence segment corresponds to M OOK symbols, the length of the padding bit(s) may be 1 to M - 1. Then, one same target sequence needs to correspond to M - 1 cyclic shift values, and each of the M - 1 cyclic shift values has a one-to-one mapping relationship with the length of at least one padding bit. For example, when the cyclic shift value has a value of 1, the length of the corresponding padding bit is 1; when the cyclic shift value has a value of 2, the length of the corresponding padding bits is 2; until when the cyclic shift value has a value of M - 1, the length of the corresponding padding bits is M - 1.

For example, for the mapping relationship between the cyclic shift values of the target sequence and the length of at least one padding bit, reference is made to Table 4 above.

In some embodiments, M has a plurality of candidate values, for example, M = {1, 2, 4, 6, 8}. Optionally, a number of cyclic shift values of the target sequence is determined based on the value of M at the time of communication. Optionally, the number of cyclic shift values of the target sequence is determined based on a maximum value of candidate values of M.

In some embodiments, the target sequence may also be a target phase randomization sequence used by the sending end device when phase randomization is performed on the second bit sequence or intermediate data during the process of OOK-modulating the second bit sequence into OOK symbols. The intermediate data is intermediate process data generated during the process of OOK-modulating the second bit sequence.

In some embodiments, the target phase randomization sequence is used to indicate the length of at least one padding bit.

Optionally, values of the target phase randomization sequence are used to indicate the length of the at least one padding bit. That is, the length of the at least one padding bit is associated with the values of the target phase randomization sequence.

Optionally, an index of the target phase randomization sequence is used to indicate the length of the at least one padding bit. For example, a plurality of target phase randomization sequences have a mapping relationship with the length of at least one padding bit. In some embodiments, the mapping relationship may be agreed by a protocol, configured by a network device, or determined by a terminal device.

In some embodiments, in a case where one sequence segment corresponds to M OOK symbols, the length of the padding bit(s) may be 1 to M - 1. Then, there are correspondingly M - 1 target phase randomization sequences, and each one of the M - 1 target phase randomization sequences has a one-to-one mapping relationship with the length of at least one padding bit.

For example, for the mapping relationship between a plurality of target phase randomization sequences and the length of at least one padding bit, reference is made to Table 5 above.

In summary, in the method provided by the present embodiment, by receiving the length indication information for indicating the length of at least one padding bit, the receiving end device can distinguish information corresponding to the padding bit and information corresponding to the non-padding bit, thereby ensuring that the receiving end can accurately parse information corresponding to valid OOK symbols through the length indication information even when a number of the valid OOK symbols to be transmitted is not an integer multiple of M.

**For alternative design 2 (bit selection)**

In some embodiments, the second bit sequence having the third number L' is obtained by performing bit selection on the first bit sequence by the sending end device.

In some embodiments, the manner that the sending end device performs bit selection on the first bit sequence includes at least follwing two types.

In a first type of bit selection, the first number L is smaller than the third number L'.

In some embodiments, in a case where the first number L is smaller than the third number L', the second bit sequence having the third number L' is obtained by performing cyclic selection on the first bit sequence by the sending end device.

In the case where the first number L is smaller than the third number L', the second bit sequence having the third number L' is obtained by cyclically selecting at least one repetitive bit from the first bit sequence by the sending end device.

In some embodiments, in the case where the first number L is smaller than the third number L' and the first number L is not an integer multiple of the second number M, at least one repetitive bit is cyclically selected by the sending end device from the first bit sequence, so that the first bit sequence having a length of the fist number L is extended to obtain the second bit sequence having a length of the third number L'. A bit sequence corresponding to the at least one repetitive bit selected cyclically is a subsequence in the first bit sequence, or it is understood that the bit sequence corresponding to the at least one repetitive bit selected cyclically is a sub-sequence in the first bit sequence.

Exemplary, as shown in FIG. 30, assuming that the first bit sequence is {1, 0, 0, 1, 1, 1, 1, 0, 1, 0, 1}, then L = 11; and in the case of M = 4, L is not an integer multiple of M, then cyclic selection is performed by the sending end device on the first bit sequence to obtain the second bit sequence {1, 0, 0, 1, 1, 1, 1, 0, 1, 0, 1, 1}, and at this time L' = 12. The repeatedly selected bit sequence {1} is a subsequence in the first bit sequence.

Optionally, a length of the bit sequence corresponding to the at least one repetitive bit cyclically selected in the first bit sequence is determined based on the second number M.

In some embodiments, M has a plurality of candidate values, for example, M = {1, 2, 4, 6, 8}. Optionally, the length of the bit sequence corresponding to the at least one repetitive bit cyclically selected in the first bit sequence is determined based on a value of M at the time of communication. Optionally, the length of the bit sequence corresponding to the at least one repetitive bit cyclically selected in the first bit sequence is determined based on a maximum value of candidate values of M.

FIG. 52 shows a flowchart of a method for preprocessing a bit sequence provided by an exemplary embodiment of the disclosure. The method is performed by a receiving end device, which may be a network device or an AP or an ambient IoT device or a terminal device, and the method includes an operation as follows.

In operation 1120, length indication information of the at least one repetitive bit is selected.

The length indication information is used to indicate the length of at least one repetitive bit, so that the receiving end device can distinguish information corresponding to the repetitive bit and information corresponding to the non-repetitive bit.

In some embodiments, the length indication information is sent by the sending end device separately. That is, the length indication information and the plurality of OOK symbols obtained after OOK modulation are sent separately.

In some embodiments, the length indication information is sent by the sending end device by being carried in a plurality of OOK symbols obtained after OOK modulation. That is, a length indication bit sequence corresponding to the length indication information is a subset of the bit sequence corresponding to the plurality of OOK symbols, or it is understood that the length indication bit sequence corresponding to the length indication information is a sub-sequence of the bit sequence corresponding to the plurality of OOK symbols. Optionally, positions of the length indication bit sequence corresponding to the length indication information in the bit sequence corresponding to the the plurality of OOK symbols are fixed, and optionally, the positions of the length indication bit sequence corresponding to the length indication information in the bit sequence corresponding to the plurality of OOK symbols may be agreed by a protocol, configured by a network device, or configured by a terminal device.

In some embodiments, M has a plurality of candidate values, for example, M = {1, 2, 4, 6, 8}. Optionally, a length of the length indication bit sequence corresponding to the length indication information is determined based on the value of M at the time of communication. For example, the length of the length indication bit sequence corresponding to the length indication information is . Optionally, the length of the length indication bit sequence corresponding to the length indication information is determined based on a maximum value of the candidate values of M. For example, the length of the length indication bit sequence corresponding to the length indication information is . $\lceil * \rceil$ represents rounding up.

In some embodiments, as shown in FIG. 53, the above operation 1120 may be replaced with the following sub-operation.

**In operation 1121,** a third indication bit sequence is received.

In some embodiments, values of the third indication bit sequence are equal to a length of the at least one repetitive bit. For example, assuming that the first bit sequence is {1, 0, 0, 1, 1, 1, 1, 0, 1, 0} and M = 4, then it is necessary to cyclically select 2 repetitive bits at this time, so that the length of the obtained second bit sequence is an integer multiple of 4. Exemplarily, the 2 bits cyclically selected are {1, 0}. Then, the third indication bit sequence may be {1, 0}, and the values of the third indication bit sequence are 10, which are equal to 2.

In some embodiments, in a case where one sequence segment corresponds to M OOK symbols, the length of the repetitive bit(s) may be 1 to M - 1. Assuming that M = $2^n$, then the length of the third indication bit sequence is greater than or equal to n.

In some embodiments, the third indication bit sequence is sent by the sending end device separately. That is, the third indication bit sequence and the plurality of OOK symbols obtained after OOK modulation are sent separately.

In some embodiments, the third indication bit sequence is sent by the sending end device by being carried in a plurality of OOK symbols obtained after OOK modulation.

In some embodiments, as shown in FIG. 54, the above operation 1120 may also be replaced with the following sub-operations.

**In operation 1122,** a fourth indication bit sequence is received.

In some embodiments, values of the fourth indication bit sequence have a mapping relationship with the length of the at least one repetitive bit. In some embodiments, the mapping relationship may be agreed by a protocol, configured by a network device, or determined by a terminal device.

In some embodiments, in a case where one sequence segment corresponds to M OOK symbols, the length of the repetitive bit(s) may be 1 to M - 1. Then, the fourth indication bit sequence corresponds to at least M - 1 values, and each value of the M - 1 values has a one-to-one mapping relationship with the length of at least one repetitive bit. For example, when the value of the fourth indication bit sequence is 1, the length of the corresponding repetitive bit is 1; when the value of the fourth indication bit sequence is 2, the length of the corresponding repetitive bits is 2; until when the value of the fourth indication bit sequence is the value M - 1, the length of the corresponding repetitive bits is M - 1.

Optionally, for the mapping relationship between values of the fourth indication bit sequence and the length of the at least one repetitive bit, reference is made to a Table 6 above.

In some embodiments, M has a plurality of candidate values, for example, M = {1, 2, 4, 6, 8}. Optionally, a number of the fourth indication bit sequences is determined based on the value of M at the time of communication. Optionally, the number of the fourth indication bit sequences is determined based on a maximum value of candidate values of M.

In some embodiments, the fourth indication bit sequence is sent by the sending end device separately. That is, the fourth indication bit sequence and the plurality of OOK symbols obtained after OOK modulation are sent separately.

In some embodiments, the fourth indication bit sequence is sent by the sending end device by being carried in a plurality of OOK symbols obtained after OOK modulation.

In some embodiments, as shown in FIG. 55, the above operation 1120 may be replaced with the following sub-operation.

**In operation 1123,** a second bitmap having a length of a second number M is received.

In some embodiments, the second bitmap is sent by the sending end device separately. That is, the second bitmap and the plurality of OOK symbols obtained after OOK modulation are sent separately.

In some embodiments, a number of bits having a first value in the second bitmap is used to indicate the length of at least one repetitive bit.

Optionally, the number of bits having a value of 1 in the second bitmap is used to indicate the length of at least one repetitive bit. For example, assuming that M = 4, the second bitmap is {1, 0, 0, 0}, and the number of bits having a value of 1 is 1, it means that the length of at least one repetitive bit is 1. It should be understood that when M = 4 and the length of at least one repetitive bit is 1, the second bitmap may also be {0, 1, 0, 0}, or {0, 0, 1, 0}, or {0, 0, 0, 1}.

Optionally, the number of bits having a value of 0 in the second bitmap is used to indicate the length of at least one repetitive bit. For example, assuming that M = 4, the second bitmap is {1, 0, 0, 0}, and the number of bits having a value of 0 is 3, it means that the length of at least one repetitive bit is 3. It should be understood that when M = 4 and the length of at least one repetitive bit is 3, the second bitmap may also be {0, 1, 0, 0}, or {0, 0, 1, 0}, or {0, 0, 0, 1}.

In some embodiments, a position of the bit having the first value in the second bitmap is associated with a position of the at least one repetitive bit in the second bit sequence. For example, as shown in FIG. 26, the position of the bit having the first value in the bitmap is the last bit, and the position of at least one repetitive bit in the second bit sequence is also the last bit.

Optionally, when the first value is 1, a position of a bit having a value of 1 in the second bitmap is associated with a position of at least one repetitive bit in the second bit sequence. For example, when M = 4 and the length of at least one repetitive bit is 1, the second bitmap is {0, 0, 0, 1}.

Optionally, when the first value is 0, a position of a bit having a value of 0 in the second bitmap is associated with a position of at least one repetitive bit in the second bit sequence. For example, when M = 4 and the length of at least one repetitive bit is 1, the second bitmap is {1, 1, 1, 0}.

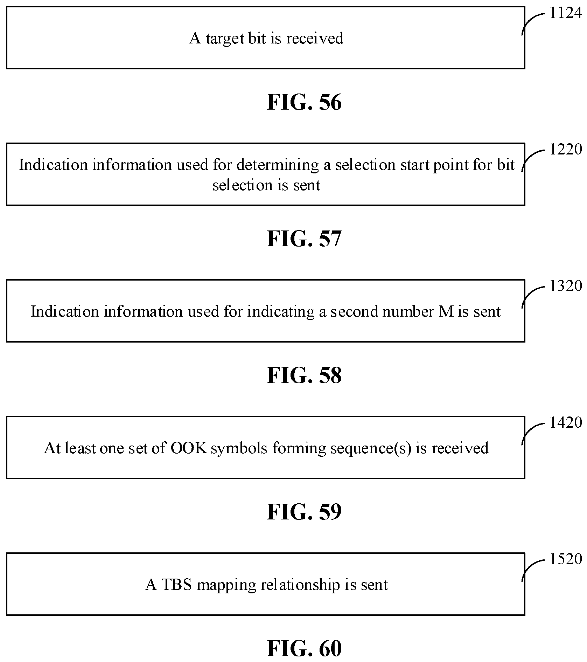

In some embodiments, as shown in FIG. 56, the above operation 1120 may also be replaced with the following sub-operations.

**In operation 1124,** the target sequence is received.

In some embodiments, the target sequence is used to indicate a length of the at least one repetitive bit, wherein the target sequence is obtained by mapping bits having a first value in the second bit sequence by the sending end device during a process of OOK-modulating the second bit sequence into OOK symbols.

Optionally, the target sequence is obtained by mapping bits having a value of 1 in the second bit sequence by the sending end device during a process of OOK-modulating the second bit sequence into OOK symbols.

Optionally, the target sequence is obtained by mapping bits having a value of 0 in the second bit sequence by the sending end device during a process of OOK-modulating the second bit sequence into OOK symbols.

In some embodiments, the target sequence is at least one of the following sequences:

· Pseudo-Noise (PN) sequence;
· Zadoff-Chu (ZC) sequence;
· Maximum-length (M) sequence.

Optionally, the target sequence is a PN sequence obtained by mapping bits having a value of 1 in the second bit sequence during a process of OOK-modulating the second bit sequence into OOK symbols. Or, the target sequence is a ZC sequence obtained by mapping bits having a value of 1 in the second bit sequence during a process of OOK-modulating the second bit sequence into OOK symbols. Optionally, the target sequence is an M sequence obtained by mapping bits having a value of 1 in the second bit sequence during a process of OOK-modulating the second bit sequence into OOK symbols.

Optionally, the target sequence is a PN sequence obtained by mapping bits having a value of 0 in the second bit sequence during a process of OOK-modulating the second bit sequence into OOK symbols. Or, the target sequence is a ZC sequence obtained by mapping bits having a value of 0 in the second bit sequence during a process of OOK-modulating the second bit sequence into OOK symbols. Optionally, the target sequence is an M sequence obtained by mapping bits having a value of 0 in the second bit sequence during a process of OOK-modulating the second bit sequence into OOK symbols.

In some embodiments, the target sequence is used to indicate the length of at least one repetitive bit. Optionally, a number of target sequences is x. Optionally, the number of target sequences is determined based on a value of M at the time of communication. For example, x is a positive integer greater than or equal to $\log_2 M$. Optionally, the number of the target sequences is determined based on a maximum value of candidate values of M.

Optionally, the target sequence or values of the target sequence is/are used to indicate the length of the at least one padding bit. That is, the length of the at least one padding bit is associated with the target sequence, or with the values of the target sequence.

Optionally, an index of the target sequence is used to indicate the length of the at least one repetitive bit. For example, a plurality of target sequences have a mapping relationship with the length of at least one repetitive bit. In some embodiments, the mapping relationship may be agreed by a protocol, configured by a network device, or determined by a terminal device.

In some embodiments, in a case where one sequence segment corresponds to M OOK symbols, the length of the repetitive bit(s) may be 1 to M - 1. Then, there are correspondingly M - 1 target sequences, and each one of the M - 1 target sequences has a one-to-one mapping relationship with the length of at least one repetitive bit.

For example, for the mapping relationship between a plurality of target sequences and the length of at least one repetitive bit, reference is made to Table 7 above.

In some embodiments, M has a plurality of candidate values, for example, M = {1, 2, 4, 6, 8}. Optionally, a number of the target sequences is determined based on the value of M at the time of communication. Optionally, the number of the target sequences is determined based on a maximum value of candidate values of M.

Optionally, a cyclic shift value corresponding to the target sequence is used to indicate the length of the at least one repetitive bit. Different cyclic shift values of the same target sequence are used to represent lengths of different repetitive bits.

In some embodiments, in a case where one sequence segment corresponds to M OOK symbols, the length of the repetitive bit(s) may be 1 to M - 1. Then, one same target sequence needs to correspond to M - 1 cyclic shift values, and each of the M - 1 cyclic shift values has a one-to-one mapping relationship with the length of at least one repetitive bit. For example, when the cyclic shift value has a value of 1, the length of the corresponding repetitive bit is 1; when the cyclic shift value has a value of 2, the length of the corresponding repetitive bits is 2; until when the cyclic shift value has a value of M - 1, the length of the corresponding repetitive bits is M - 1.

For example, for the mapping relationship between the cyclic shift values of the target sequence and the length of at least one repetitive bit, reference is made to Table 8 above.

In some embodiments, M has a plurality of candidate values, for example, M = {1, 2, 4, 6, 8}. Optionally, a number of cyclic shift values of the target sequence is determined based on the value of M at the time of communication. Optionally, the number of cyclic shift values of the target sequence is determined based on a maximum value of candidate values of M.

In some embodiments, the target sequence may also be a target phase randomization sequence used when phase randomization is performed on the second bit sequence or intermediate data during the process of OOK-modulating the second bit sequence into OOK symbols. The intermediate data is intermediate process data generated during the process of OOK-modulating the second bit sequence.

In some embodiments, the target phase randomization sequence is used to indicate the length of at least one repetitive bit.

Optionally, values of the target phase randomization sequence are used to indicate the length of the at least one repetitive bit. That is, the length of the at least one repetitive bit is associated with the values of the target phase randomization sequence.

Optionally, an index of the target phase randomization sequence is used to indicate the length of the at least one repetitive bit. For example, a plurality of target phase randomization sequences have a mapping relationship with the length of at least one repetitive bit. In some embodiments, the mapping relationship may be agreed by a protocol, configured by a network device, or determined by a terminal device.

In some embodiments, in a case where one sequence segment corresponds to M OOK symbols, the length of the repetitive bit(s) may be 1 to M - 1. Then, there are correspondingly M - 1 target phase randomization sequences, and each one of the M - 1 target phase randomization sequences has a one-to-one mapping relationship with the length of at least one repetitive bit.

For example, for the mapping relationship between a plurality of target phase randomization sequences and the length of at least one repetitive bit, reference is made to Table 9 above.

In summary, in the method provided by the present embodiment, by receiving the length indication information for indicating the length of at least one repetitive bit, the receiving end device can distinguish information corresponding to the repetitive bit and information corresponding to the non-repetitive bit, thereby ensuring that the receiving end can accurately parse information corresponding to valid OOK symbols through the length indication information even when a number of the valid OOK symbols to be transmitted is not an integer multiple of M.

In a second type of bit selection, the first number L is greater than the third number L'.

In some embodiments, in a case where the first number L is greater than the third number L', the second bit sequence having the third number L' is obtained by performing truncated selection on the first bit sequence by the sending end device.

In some embodiments, in the case where the first number L is greater than the third number L', a segment of the bit sequence is selected by truncation by the sending end device from the first bit sequence as the second bit sequence having a length of the third number L'. The bit sequence selected by truncation is a subsequence in the first bit sequence, or it is understood that the bit sequence selected by truncation is a sub-sequence in the first bit sequence.

Exemplary, as shown in FIG. 37, assuming that the first bit sequence is {1, 0, 0, 1, 1, 1, 1, 0, 1, 0, 1}, then L = 11; and in the case of M = 4, L is not an integer multiple of M, then truncated selection is performed by the sending end device on the first bit sequence to obtain the second bit sequence {1, 0, 0, 1, 1, 1, 1, 0}, and at this time L' = 8. The second bit sequence selected by truncation is a subsequence in the first bit sequence.

Optionally, the length of the second bit sequence selected by truncation in the first bit sequence is determined based on the second number M.

In some embodiments, M has a plurality of candidate values, for example, M = {1, 2, 4, 6, 8}. Optionally, the length of the second bit sequence selected by truncation in the first bit sequence is determined based on the value of M at the time of communication. Optionally, the length of the second bit sequence selected by truncation in the first bit sequence is determined based on a maximum value of candidate values of M.

FIG. 57 shows a flowchart of a method for preprocessing a bit sequence provided by an exemplary embodiment of the disclosure. The method is performed by a receiving end device, which may be a network device or an AP or an ambient IoT device or a terminal device, and the method includes an operation as follows.

In operation122, indication information used for determining a selection start point for the bit selection is sent.

In some embodiments, the indication information is used to indicate a selection start point for bit selection performed on the first bit sequence.

In some embodiments, the indication information is used to indicate a selection start point for cyclic selection performed by the sending end device on the first bit sequence. For example, the indication information is used to instruct the sending end device to use a target bit position of the first bit sequence as the selection start point for cyclic selection performed on the first bit sequence.

In some embodiments, the indication information is used to indicate a selection start point for truncated selection performed on the first bit sequence. For example, the indication information is used to instruct the sending end device to use a sequence start point of the first bit sequence as the selection start point for truncated selection performed on the first bit sequence.

In summary, in the method provided by the present embodiment, by sending indication information used for determining a selection start point for the bit selection, it is possible to enable the sending end device to perform bit selection on the first bit sequence based on an accurate selection start point.

FIG. 58 shows a flowchart of a method for preprocessing a bit sequence provided by an exemplary embodiment of the disclosure. The method is performed by a receiving end device, which may be a network device or an AP or an ambient IoT device or a terminal device, and the method includes an operation as follows.

In operation 1320, indication information used for indicating the second number M is sent.

The second number M is a number of OOK symbols transmitted in a preset duration. The preset duration is determined by a basic time-domain unit in a cellular communication system or a WiFi system. In some embodiments, the preset duration is t OFDM symbols in which M OOK symbols may be transmitted. M is a number of OOK symbols transmitted in the t OFDM symbols. The value of t is a positive integer. In the embodiment of the disclosure, description is made by taking an example that M OOK symbols are transmitted in 1 OFDM symbol.

In some embodiments, M has a plurality of candidate values, for example, M = {1, 2, 4, 6, 8}.

In some embodiments, the receiving end device sends indication information corresponding to a target value of the second number M to the sending end device. In some embodiments, the receiving end device sends indication information corresponding to a part of candidate values of the second number M to the sending end device. In some embodiments, the receiving end device sends indication information corresponding to all candidate values of the second number M to the sending end device.

In summary, in the method provided by the present embodiment, by sending the indication information used for indicating the second number M, it is possible to enable the sending end device to process the first bit sequence based on the indication information of the second number M in a case where the first number L is not an integer multiple of the second number M.

FIG. 59 shows a flowchart of a method for receiving an OOK symbol provided by an exemplary embodiment of the disclosure. The method is performed by a receiving end device, which may be a network device or an AP or an ambient IoT device or a terminal device, and the method includes an operation as follows.

**In operation 1420,** at least one set of OOK symbols forming sequence(s) is received.

In some embodiments, each set of OOK symbols forming the sequence includes a second number M of OOK symbols.

The second number M is a number of OOK symbols transmitted in a preset duration. The preset duration is determined by a basic time-domain unit in a cellular communication system or a WiFi system. In some embodiments, the preset duration is t OFDM symbols in which M OOK symbols may be transmitted. M is a number of OOK symbols transmitted in the t OFDM symbols. The value of t is a positive integer. In the embodiment of the disclosure, description is made by taking an example that M OOK symbols are transmitted in 1 OFDM symbol.

In some embodiments, M may be agreed by a protocol, configured by a network device, or determined by a terminal device based on a preset mapping relationship.

In some embodiments, M has a plurality of candidate values, for example, M = {1, 2, 4, 6, 8}.

In some embodiments, at least one set of OOK symbols forming sequence(s) corresponds to a first bit sequence having a length of a first number L.

The first number L is a number of bits in the first bit sequence. For example, assuming that the first bit sequence is {1, 0, 1, 1, 1, 1, 1, 0, 1, 0, 1, 0, 1, 0, 1, 0, 1, 0}, then L is 18.

In some embodiments, the first bit sequence is any one of:

· an original bit sequence for which encoding is not required;
· an original bit sequence before encoding;
· an encoded bit sequence after encoding is performed on the original bit sequence; and
· an encoded bit sequence after at least one stage encoding of multi-stage encoding is performed on the original bit sequence.

In some embodiments, for the first bit sequence, reference is made to the introduction made in the operation 220 above.

In some embodiments, a last one among the at least one set of OOK symbols forming sequence(s) includes a third type of symbol, the third type of symbol is an OOK symbol different from a first type of symbol and a second type of symbol, the first type of symbol corresponds to a bit having a first value, and the second type of symbol corresponds to a bit having a second value. Optionally, the third type of symbol is obtained by performing OOK modulation based on a bit sequence having a third value. It should be understood that each of the first type of symbol, the second type of symbol and the third type of symbol corresponds to a same time-domain length. Or, it is understood that a time-domain length corresponding to a bit having the first value is the same as a time-domain length corresponding to a bit sequence having the third value.

In some embodiments, the third type of symbol may be considered as an abnormal type of symbol. In one way of understanding, the abnormal type of symbol can be understood as a symbol of waveform abnormality; and in one way of understanding, the abnormal type of symbol can be understood as a symbol of length abnormality.

In some embodiments, the bit sequence corresponding to the third type of symbol may be agreed by a protocol, configured by a network device, or determined by a terminal device.

In summary, in the method provided by the present embodiment, by receiving the OOK symbol sequence including the third type of symbol, it is possible to accurately receive valid OOK symbols to be transmitted even when the number of the valid OOK symbols to be transmitted is not an integer multiple of M.

FIG. 60 shows a flowchart of a method for determining an TBS value provided by an exemplary embodiment of the disclosure. The method is performed by a receiving end device, which may be a network device or an AP or an ambient IoT device or a terminal device, and the method includes an operation as follows.

**In operation 1520,** a TBS mapping relationship is sent.

In some embodiments, the TBS mapping relationship is configured to be provided to a sending end device for determining the TBS value to be a numerical value related to a second number M.

The second number M is a number of OOK symbols transmitted within a preset duration, and the preset duration is determined by a basic time-domain unit in a cellular communication system or a Wireless Fidelity (WiFi) system. In some embodiments, the preset duration is t OFDM symbols in which M OOK symbols may be transmitted. M is a number of OOK symbols transmitted in the t OFDM symbols. The value of t is a positive integer. In the embodiment of the disclosure, description is made by taking an example that M OOK symbols are transmitted in 1 OFDM symbol.

In some embodiments, M may be agreed by a protocol, configured by a network device, or determined by a terminal device based on a preset mapping relationship.

In some embodiments, M has a plurality of candidate values, for example, M = {1, 2, 4, 6, 8}.

In some embodiments, the numerical value related to the second number M includes at least one of the following:

an integer multiple of the second number M;
an integer multiple of one-half of the second number M.

Optionally, the TBS mapping relationship is configured to be provided to a sending end device for determining the TBS value to be an integer multiple of the second number M This ensures that the OOK symbols can be smoothly transmitted even when the number of valid OOK symbols to be transmitted is not an integer multiple of M.

Optionally, in a case where the original bit sequence is encoded using a Manchester encoder, the TBS mapping relationship is configured to be provided to a sending end device for determining the TBS value to be an integer multiple of one-half of the second number M. Exemplarily, as shown in FIG. 12 or FIG. 13, the encoder is a Manchester encoder.

In some embodiments, the TBS mapping relationship includes a first TBS value mapping relationship, and candidate TBS values in the first TBS value mapping relationship are all numerical values related to the second number M.

Optionally, the candidate TBS values in the first TBS value mapping relationship are all an integer multiple of the second number M.

Optionally, the candidate TBS values in the first TBS value mapping relationship are all an integer multiple of one-half of the second number M.

Optionally, the candidate TBS values in the first TBS value mapping relationship are all an integer multiple of one-half of the second number M and an integer multiple of the second number M.

For example, for the first TBS value mapping relationship, reference is made to the Table 10 above.

In some embodiments, the TBS mapping relationship further includes a second TBS value mapping relationship, and not all candidate TBS values in the second TBS value mapping relationship are numerical values related to the second number M.

Optionally, a part of the candidate TBS values in the second TBS value mapping relationship is an integer multiple of the second number M, and another part is a numerical value not related to the second number M.

Optionally, a part of the candidate TBS values in the second TBS value mapping relationship is an integer multiple of one-half of the second number M, and another part is a numerical value not related to the second number M.

Optionally, a part of the candidate TBS values in the second TBS value mapping relationship is an integer multiple of one-half of the second number M and an integer multiple of the second number M, and another part is a numerical value not related to the second number M.

For example, for the second TBS value mapping relationship, reference is made to the Table 11 above.

In some embodiments, the TBS mapping relationship further includes a third TBS value mapping relationship, and not all candidate TBS values in the third TBS value mapping relationship are numerical values related to the second number M.

Optionally, a part of the candidate TBS values in the third TBS value mapping relationship is an integer multiple of the second number M, and another part is a numerical value not related to the second number M.

Optionally, a part of the candidate TBS values in the third TBS value mapping relationship is an integer multiple of the fourth number, and another part is a numerical value not related to the second number M. Optionally, a part of the candidate TBS values in the third TBS value mapping relationship is an integer multiple of one-half of the second number M, and another part is a numerical value not related to the second number M. The fourth number is a quotient of the second number M and the fifth number P, and the fifth number P is related to an encoding mode adopted by the first bit sequence. For example, assuming that the first bit sequence is encoded by the Manchester coding, thus the fifth number P = 2, and the fourth number $P = \dfrac{M}{2}$, then the TBS value is a minimum integer multiple of $\dfrac{M}{2}$.

Optionally, a part of the candidate TBS values in the third TBS value mapping relationship is an integer multiple of the fourth number and an integer multiple of the second number M, and another part is a numerical value unrelated to the second number M. Optionally, a part of the candidate TBS values in the third TBS value mapping relationship is an integer multiple of one-half of the second number M and an integer multiple of the second number M, and another part is a numerical value unrelated to the second number M.

For example, for the third TBS value mapping relationship, reference is made to the Table 12 above.

Optionally, difference numbers M correspond to a same TBS value mapping relationship. For example, both M = 2 and M = 4 correspond to the first TBS value mapping relationship.

Optionally, a part of the different second numbers M corresponds to a same TBS value mapping relationship, and another part of the different second numbers M corresponds to different TBS value mapping relationships. For example, both M = 2 and M = 4 correspond to the first TBS value mapping relationship. M = 6 corresponds to the second TBS value mapping relationship. M = 8 corresponds to the third TBS value mapping relationship.

Optionally, difference numbers M correspond to different TBS value mapping relationships. For example, M = 2 corresponds to the first TBS value mapping relationship. M = 4 corresponds to the second TBS value mapping relationship. M = 6 corresponds to the third TBS value mapping relationship. By analogy, each second number M corresponds to a respective TBS value mapping relationship.

In summary, in the method provided by the present embodiment, by sneidng the TBS mapping relationship, it is possible to accurately receive valid OOK symbols to be transmitted even when the number of the valid OOK symbols to be transmitted is not an integer multiple of M.

The apparatus provided in the embodiment of the disclosure may be applicable to uplink data transmission (from the ambient IoT device to the network device/AP), downlink data transmission (from the network device/AP to the ambient IoT device), and sidelink data transmission. The sidelink data transmission includes at least one of four forms: from the ambient IoT device to another terminal device, or from another terminal device to the ambient IoT device, or from the ambient IoT device to ambient IoT device, or from another terminal device to other terminal device.

In some embodiments, the apparatus provided by the embodiments of the disclosure can be applied to an LP-WUR/WUS scenario, in addition to the ambient IoT device. That is, the LP-WUS signal transmitted by the network device to the LP-WUR may also be used by the apparatus provided in the embodiments of the disclosure.

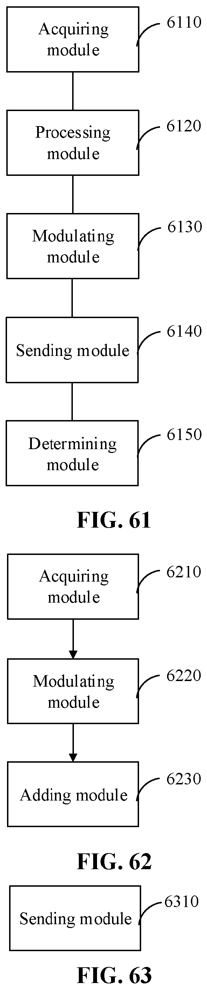

FIG. 61 shows a structural block diagram of an apparatus for preprocessing a bit sequence provided by an exemplary embodiment of the disclosure. The apparatus for preprocessing a bit sequence may be implemented as part of a network device or an AP or an ambient IoT device or a terminal device, and the apparatus includes an acquiring module 6110, a processing module 6120 and a modulating module 6130.

The acquiring module 6110 is configured to acquire a first bit sequence having a length of a first number L.

The first number L is a number of bits in the first bit sequence. For example, assuming that the first bit sequence is {1, 0, 1, 1, 1, 1, 0, 1, 0, 1, 0, 1, 0, 1, 0, 1, 0}, then L is 18.

In some embodiments, the first bit sequence is any one of:

· an original bit sequence for which encoding is not required;
· an original bit sequence before encoding;
· an encoded bit sequence after encoding is performed on the original bit sequence; and
· an encoded bit sequence after at least one stage encoding of multi-stage encoding is performed on the original bit sequence.

In some embodiments, for the first bit sequence, reference is made to the introduction made in the operation 220 above.

The processing module 6120 is configured to, in a case where the first number L is not an integer multiple of a second number M, process the first bit sequence into a second bit sequence having a length of a third number L'.

Optionally, the first number L is smaller than the third number L'. Optionally, the first number L is greater than the third number L'.

The second number M is a number of OOK symbols transmitted in a preset duration. The preset duration is determined by a basic time-domain unit in a cellular communication system or a WiFi system. In some embodiments, the preset duration is t OFDM symbols in which M OOK symbols may be transmitted. M is a number of OOK symbols transmitted in the t OFDM symbols. The value of t is a positive integer. In the embodiment of the disclosure, description is made by taking an example that M OOK symbols are transmitted in 1 OFDM symbol.

In some embodiments, M may be agreed by a protocol, configured by a network device, or determined by a terminal device based on a preset mapping relationship.

In some embodiments, M has a plurality of candidate values, for example, M = {1, 2, 4, 6, 8}.

The third number L' is a number of bits in the second bit sequence. For example, if the second bit sequence is {1, 0, 1, 0}, then L' is 4.

In some embodiments, the second bit sequence is configured to be divided into at least one sequence segment having a length of the second number M for OOK modulation, to obtain M OOK symbols corresponding to each sequence segment. That is, the third number L' is an integer multiple of the second number M. For example, if the second bit sequence is {1, 0, 1, 0} and M = 2, the second bit sequence can be divided into two sequence segments each having a length of 2, and respective sequence segments are {1, 0}, {1, 0}.

It should be understood that in the case where the first number L is not an integer multiple of the second number M, when the first bit sequence having the length of the first number L is segmented, the first bit sequence having the length of the first number L cannot be divided into a plurality of sequence segments having the length of the second number M. That is, the length of the last sequence segment will be smaller than the second number M. At this time, the last sequence segment cannot be OOK-modulated. For example, assuming that the first bit sequence is {1, 0, 0, 1, 1, 1, 1, 0, 1, 0, 1}, then L = 11. In the case of M = 4, the first bit sequence is divided into segments, and sequence segment 1 is {1, 0, 0, 1}, sequence segment 2 is {1, 1, 1, 0}, and sequence segment 3 is {1, 0, 1}.

The embodiment of the disclosure provides a method of processing a first bit sequence in a case where the first number L is not an integer multiple of the second number M, so that the processed bit sequence can guarantee to meet the requirement of OOK modulation.

In some embodiments, the method for processing a first bit sequence described above may have a variety of alternative designs. For details, reference can be made to the alternative designs 1 and 2 described in operation 240 above.

The modulating module 6130 is configured to divide the second bit sequence to obtain at least one sequence segment having a length of a second number M.

In some embodiments, since the length corresponding to the second bit sequence is the third number L', when the third number L' is an integer multiple of the second number M, the length of each sequence segment obtained by dividing the second bit sequence having the length of the third number L' is the second number M. For example, assuming that the second bit sequence having the length of the third number L' is {1, 0, 0, 1, 1, 1, 1, 0, 1, 0, 1, 0, 1, 0, 1, 0, 1 ......} and M = 4, then the second bit sequence having the length of the third number L' is divided into a plurality of sequence segments, and the length of each sequence segment is 4, for example, the obtained sequence segment 1 is {1, 0, 0, 1}.

The modulating module 6130 is further configured to perform OOK modulation on each sequence segment to obtain M OOK symbols corresponding to each sequence segment.

The OOK modulation is a process of modulating a sequence in digital form into a wireless signal of Multi-carrier OOK (MC-OOK) waveform. The OOK modulation is performed on each sequence segment having a length of the second number M, to obtain M OOK symbols corresponding to each sequence segment.

To sum up, according to the method provided by the embodiment of the disclosure, when the first number L corresponding to the first bit sequence is not an integer multiple of the second number M, the first bit sequence is processed into a second bit sequence having a length of the third number L ', so that the processed second bit sequence can be divided into at least one sequence segment having a length of the second number M, thereby ensuring that the OOK symbols can be smoothly transmitted even when the number of valid OOK symbols to be transmitted is not an integer multiple of M.

**For alternative design 1 (bit padding)**

In some embodiments, the processing module 6120 is further configured to, in a case where the first number L is not an integer multiple of the second number M, perform bit padding on the first bit sequence, to obtain the second bit sequence having a length of the third number L'.

In some embodiments, in the case where the first number L is not an integer multiple of the second number M, bit padding is performed on the first bit sequence having the length of the first number L, so that the first bit sequence having the length of the first number L is padded into the second bit sequence having a length of the third number L'. The third number L' is an integer multiple of the second number M.

Exemplary, assuming that the first bit sequence is {1, 0, 0, 1, 1, 1, 1, 0, 1, 0, 1}, then L = 11; and in the case of M = 4, L is not an integer multiple of M, then bit padding is performed on the first bit sequence to obtain the second bit sequence {1, 0, 0, 1, 1, 1, 1, 0, 1, 0, 1, 1}, and at this time L' = 12.

Optionally, in a case where the first number L is smaller than the third number L', bit padding is performed on the first bit sequence to obtain the second bit sequence having a length of the third number L'.

In some embodiments, the processing module 6120 is further configured to, in a case where the first number L is not an integer multiple of the second number M, add at least one padding bit to a tail of the first bit sequence, to obtain the second bit sequence having a length of the third number L'.

In some embodiments, the first bit sequence is divided according to the second number M to obtain multiple sequence segments. In a case where the first number L is not an integer multiple of the second number M, the length of the last sequence segment obtained by division of the first bit sequence will be smaller than the second number M, and at least one padding bit is added to the last sequence segment obtained by division of the first bit sequence division to make the length of the last sequence segment obtained by division of the first bit sequence to be equal to M, thereby enabling OOK modulation.

In some embodiments, the at least one padding bit added to the tail of the first bit sequence includes any one of:

· a bit sequence having all values of 1;
· a bit sequence having all values of 0;
· a bit sequence having values arranged according to a fixed law; and
· a bit sequence determined based on the second number M.

In some embodiments, for the at least one padding bit added to the tail of the first bit sequence, reference is made to the introduction in the operation 2411 above.

In some embodiments, the at least one padding bit added to the tail of the first bit sequence may be transmitted in a plurality of manners, and for details, reference can be made to the transmission manner 1 to transmission manner 6 in operation 2411.

To sum up, according to the method provided by the embodiment of the disclosure, when the first number L corresponding to the first bit sequence is not an integer multiple of the second number M, at least one padding bit is added to the tail of the first bit sequence to obtain the second bit sequence having a length of the third number L ', so that the processed second bit sequence can be divided into at least one sequence segment having a length of the second number M, thereby ensuring that the OOK symbols can be smoothly transmitted even when the number of valid OOK symbols to be transmitted is not an integer multiple of M.

In some embodiments, the apparatus further includes a sending module 6140.

The sending module 6140 is configured to send length indication information of the at least one padding bit.

The length indication information is used to indicate the length of at least one padding bit, so that the receiving end device can distinguish information corresponding to the padding bit and information corresponding to the non-padding bit.

In some embodiments, the length indication information is sent separately. That is, the length indication information and the plurality of OOK symbols obtained after OOK modulation are sent separately. Exemplarily, as shown in FIG. 21, the length indication information is sent separately independently of the M OOK symbols, and is used to indicate the length of at least one padding bit.

In some embodiments, the length indication information is sent by being carried in a plurality of OOK symbols obtained after OOK modulation. Exemplarily, as shown in FIG. 22, the length indication information is carried in M OOK symbols obtained after OOK modulation, and is used to indicate the length of at least one padding bit. That is, a length indication bit sequence corresponding to the length indication information is a subset of the bit sequence corresponding to the M OOK symbols, or it is understood that the length indication bit sequence corresponding to the length indication information is a sub-sequence of the bit sequence corresponding to the M OOK symbols. Optionally, positions of the length indication bit sequence corresponding to the length indication information in the bit sequence corresponding to the M OOK symbols are fixed, and optionally, the positions of the length indication bit sequence corresponding to the length indication information in the bit sequence corresponding to the M OOK symbols may be agreed by a protocol, configured by a network device, or configured by a terminal device.

In some embodiments, M has a plurality of candidate values, for example, M = {1, 2, 4, 6, 8}. Optionally, a length of the length indication bit sequence corresponding to the length indication information is determined based on the value of M at the time of communication. For example, the length of the length indication bit sequence corresponding to the length indication information is: $l = \lceil \log_2 M \rceil$. Optionally, the length of the length indication bit sequence corresponding to the length indication information is determined based on a maximum value of the candidate values of M. For example, the length of the length indication bit sequence corresponding to the length indication information is: $l = \left\lceil \log_2 M_{\max} \right\rceil$. $\left\lceil * \right\rceil$ represents rounding up.

In some embodiments, the manners for sending the length indication information include at least the following two manners.

### Explicit manner

**The sending module 6140 is further configured to** send a first indication bit sequence.

In some embodiments, for the first indication bit sequence, reference is made to the introduction made in the operation 321 above.

**The sending module 6140 is further configured to** send a second indication bit sequence.

In some embodiments, for the second indication bit sequence, reference is made to the introduction made in the operation 322 above.

**The sending module 6140 is further configured to** send a first bitmap having a length of a second number M.

In some embodiments, for the first bitmap, reference is made to the introduction made in the operation 323 above.

### Implicit manner

The sending module 6140 is further configured to, during a process of OOK-modulating the second bit sequence into OOK symbols, map bits having a first value in the second bit sequence into a target sequence.

Optionally, during the process of OOK-modulating the second bit sequence into OOK symbols, bits having a value of 1 in the second bit sequence are mapped into the target sequence.

Optionally, during the process of OOK-modulating the second bit sequence into OOK symbols, bits having a value of 0 in the second bit sequence are mapped into the target sequence.

In some embodiments, the target sequence is at least one of the following sequences:

· Pseudo-Noise (PN) sequence;
· Zadoff-Chu (ZC) sequence;
· Maximum-length (M) sequence.

Optionally, during the process of OOK-modulating the second bit sequence into OOK symbols, bits having a value of 1 in the second bit sequence are mapped into the PN sequence. Or, during the process of OOK-modulating the second bit sequence into OOK symbols, bits having a value of 1 in the second bit sequence are mapped into the ZC sequence. Or, during the process of OOK-modulating the second bit sequence into OOK symbols, bits having a value of 1 in the second bit sequence are mapped into the M sequence.

Optionally, during the process of OOK-modulating the second bit sequence into OOK symbols, bits having a value of 0 in the second bit sequence are mapped into the PN sequence. Or, during the process of OOK-modulating the second bit sequence into OOK symbols, bits having a value of 0 in the second bit sequence are mapped into the ZC sequence. Or, during the process of OOK-modulating the second bit sequence into OOK symbols, bits having a value of 0 in the second bit sequence are mapped into the M sequence.

In some embodiments, for the first bit sequence, reference is made to the introduction made in the operation 324 above.

The sending module 6140 is further configured to send OOK symbols corresponding to the second bit sequence.

The sending end device sends OOK symbols corresponding to the second bit sequence obtained by OOK modulation to the receiving end device. Herein, bits having a first value in the second bit sequence are mapped into a target sequence, and the target sequence is used to indicate a length of the at least one padding bit.

Optionally, the manner of implicitly sending the length indication information may also be: during the process of OOK-modulating the second bit sequence into OOK symbols, phase randomization is performed on the second bit sequence or intermediate data using a target phase randomization sequence; and the OOK symbols corresponding to the second bit sequence are sent. The intermediate data is intermediate process data generated during the process of OOK-modulating the second bit sequence.

In some embodiments, the target phase randomization sequence is used to indicate the length of at least one padding bit.

Optionally, values of the target phase randomization sequence are used to indicate the length of the at least one padding bit. That is, the length of the at least one padding bit is associated with the values of the target phase randomization sequence.

Optionally, an index of the target phase randomization sequence is used to indicate the length of the at least one padding bit. For example, a plurality of target phase randomization sequences have a mapping relationship with the length of at least one padding bit. In some embodiments, the mapping relationship may be agreed by a protocol, configured by a network device, or determined by a terminal device.

In some embodiments, in a case where one sequence segment corresponds to M OOK symbols, the length of the padding bit(s) may be 1 to M - 1. Then, there are correspondingly M - 1 target phase randomization sequences, and each one of the M - 1 target phase randomization sequences has a one-to-one mapping relationship with the length of at least one padding bit.

For example, for the mapping relationship between a plurality of target phase randomization sequences and the length of at least one padding bit, reference is made to Table 5 above.

In summary, in the method provided by the present embodiment, by sending the length indication information for indicating the length of at least one padding bit to the sending end device, the receiving end device can distinguish information corresponding to the padding bit and information corresponding to the non-padding bit, thereby ensuring that the receiving end can accurately parse information corresponding to valid OOK symbols through the length indication information even when a number of the valid OOK symbols to be transmitted is not an integer multiple of M.

**For alternative design 2 (bit selection)**

The processing module 6120 is further configured to, in a case where the first number L is not an integer multiple of the second number M, perform bit selection on the first bit sequence, to obtain the second bit sequence having a length of the third number L'.

In some embodiments, in the case where the first number L is not an integer multiple of the second number M, bit selection is performed on the first bit sequence having the length of the first number L, so that the second bit sequence having a length of the third number L' is obtained by selection based on the first bit sequence having the length of the first number L. The third number L' is an integer multiple of the second number M.

In some embodiments, the first number L may be smaller than the third number L'.

The processing module 6120 is further configured to, in a case where the first number L is smaller than the third number L', perform cyclic selection on the first bit sequence to obtain the second bit sequence having a length of the third number L'.

In some embodiments, in the case where the first number L is smaller than the third number L', at least one repetitive bit is cyclically selected from the first bit sequence to obtain the second bit sequence having a length of the third number L'.

In some embodiments, in the case where the first number L is smaller than the third number L' and the first number L is not an integer multiple of the second number M, at least one repetitive bit is cyclically selected from the first bit sequence, so that the first bit sequence having a length of the fist number L is extended to obtain the second bit sequence having a length of the third number L'. A bit sequence corresponding to the at least one repetitive bit selected cyclically is a subsequence in the first bit sequence, or it is understood that the bit sequence corresponding to the at least one repetitive bit selected cyclically is a sub-sequence in the first bit sequence.

Exemplary, as shown in FIG. 30, assuming that the first bit sequence is {1, 0, 0, 1, 1, 1, 1, 0, 1, 0, 1}, then L = 11; and in the case of M = 4, L is not an integer multiple of M, then cyclic selection is performed on the first bit sequence to obtain the second bit sequence {1, 0, 0, 1, 1, 1, 1, 0, 1, 0, 1, 1}, and at this time L' = 12. The repeatedly selected bit sequence {1} is a subsequence in the first bit sequence.

Optionally, a length of the bit sequence corresponding to the at least one repetitive bit cyclically selected in the first bit sequence is determined based on the second number M.

In some embodiments, M has a plurality of candidate values, for example, M = {1, 2, 4, 6, 8}. Optionally, the length of the bit sequence corresponding to the at least one repetitive bit cyclically selected in the first bit sequence is determined based on a value of M at the time of communication. Optionally, the length of the bit sequence corresponding to the at least one repetitive bit cyclically selected in the first bit sequence is determined based on a maximum value of candidate values of M.

In some embodiments, the at least one repetitive bit cyclically selected in the first bit sequence may be transmitted in a plurality of manners, and for details, reference can be made to the transmission manner 1 to transmission manner 6 in operation 2421.

To sum up, according to the method provided by the embodiment of the disclosure, when the first number L is smaller than the third number L', cyclic selection is performed on the first bit sequence to obtain the second bit sequence having a length of the third number L', so that the processed second bit sequence can be divided into at least one sequence segment having a length of the second number M, thereby ensuring that the OOK symbols can be smoothly transmitted even when the number of valid OOK symbols to be transmitted is not an integer multiple of M.

The sending module 6140 is further configured to send length indication information of the at least one repetitive bit.

The length indication information is used to indicate the length of at least one repetitive bit, so that the receiving end device can distinguish information corresponding to the repetitive bit and information corresponding to the non-repetitive bit.

In some embodiments, the length indication information is sent separately. That is, the length indication information and the plurality of OOK symbols obtained after OOK modulation are sent separately.

In some embodiments, the length indication information is sent by being carried in a plurality of OOK symbols obtained after OOK modulation. That is, a length indication bit sequence corresponding to the length indication information is a subset of the bit sequence corresponding to the plurality of OOK symbols, or it is understood that the length indication bit sequence corresponding to the length indication information is a sub-sequence of the bit sequence corresponding to the plurality of OOK symbols. Optionally, positions of the length indication bit sequence corresponding to the length indication information in the bit sequence corresponding to the the plurality of OOK symbols are fixed, and optionally, the positions of the length indication bit sequence corresponding to the length indication information in the bit sequence corresponding to the plurality of OOK symbols may be agreed by a protocol, configured by a network device, or configured by a terminal device.

In some embodiments, M has a plurality of candidate values, for example, M = {1, 2, 4, 6, 8}. Optionally, a length of the length indication bit sequence corresponding to the length indication information is determined based on the value of M at the time of communication. For example, the length of the length indication bit sequence corresponding to the length indication information is: $l = \lceil \log_2 M \rceil$. Optionally, the length of the length indication bit sequence corresponding to the length indication information is determined based on a maximum value of the candidate values of M. For example, the length of the length indication bit sequence corresponding to the length indication information is: $l = \lceil \log_2 M_{\max} \rceil$. $\lceil * \rceil$ represents rounding up.

In some embodiments, the manners for sending the length indication information include at least the following two manners.

## Explicit manner

**The sending module 6140 is further configured to** send a third indication bit sequence.

In some embodiments, for the third indication bit sequence, reference is made to the introduction made in the operation 421 above.

**The sending module 6140 is further configured to** send a fourth indication bit sequence.

In some embodiments, for the fourth indication bit sequence, reference is made to the introduction made in the operation 422 above.

**The sending module 6140 is further configured to** send a second bitmap having a length of a second number M.

In some embodiments, for the second bitmap, reference is made to the introduction made in the operation 423 above.

## Implicit manner

The sending module 6140 is further configured to, during a process of OOK-modulating the second bit sequence into OOK symbols, map bits having a first value in the second bit sequence into a target sequence.

Optionally, during the process of OOK-modulating the second bit sequence into OOK symbols, bits having a value of 1 in the second bit sequence are mapped into the target sequence.

Optionally, during the process of OOK-modulating the second bit sequence into OOK symbols, bits having a value of 0 in the second bit sequence are mapped into the target sequence.

In some embodiments, the target sequence is at least one of the following sequences:

· Pseudo-Noise (PN) sequence;
· Zadoff-Chu (ZC) sequence;
· Maximum-length (M) sequence.

Optionally, during the process of OOK-modulating the second bit sequence into OOK symbols, bits having a value of 1 in the second bit sequence are mapped into the PN sequence. Or, during the process of OOK-modulating the second bit sequence into OOK symbols, bits having a value of 1 in the second bit sequence are mapped into the ZC sequence. Or, during the process of OOK-modulating the second bit sequence into OOK symbols, bits having a value of 1 in the second bit sequence are mapped into the M sequence.

Optionally, during the process of OOK-modulating the second bit sequence into OOK symbols, bits having a value of 0 in the second bit sequence are mapped into the PN sequence. Or, during the process of OOK-modulating the second bit sequence into OOK symbols, bits having a value of 0 in the second bit sequence are mapped into the ZC sequence. Or, during the process of OOK-modulating the second bit sequence into OOK symbols, bits having a value of 0 in the second bit sequence are mapped into the M sequence.

In some embodiments, for the first bit sequence, reference is made to the introduction made in the operation 424 above.

The sending module 6140 is further configured to send OOK symbols corresponding to the second bit sequence.

The sending end device sends OOK symbols corresponding to the second bit sequence obtained by OOK modulation to the receiving end device. Herein, bits having a first value in the second bit sequence are mapped into a target sequence, and the target sequence is used to indicate a length of the at least one padding bit.

Optionally, the manner of implicitly sending the length indication information may also be: during the process of OOK-modulating the second bit sequence into OOK symbols, phase randomization is performed on the second bit sequence or intermediate data using a target phase randomization sequence; and the OOK symbols corresponding to the second bit sequence are sent. The intermediate data is intermediate process data generated during the process of OOK-modulating the second bit sequence.

In some embodiments, the target phase randomization sequence is used to indicate the length of at least one repetitive bit.

Optionally, values of the target phase randomization sequence are used to indicate the length of the at least one repetitive bit. That is, the length of the at least one repetitive bit is associated with the values of the target phase randomization sequence.

Optionally, an index of the target phase randomization sequence is used to indicate the length of the at least one repetitive bit. For example, a plurality of target phase randomization sequences have a mapping relationship with the length of at least one repetitive bit. In some embodiments, the mapping relationship may be agreed by a protocol, configured by a network device, or determined by a terminal device.

In some embodiments, in a case where one sequence segment corresponds to M OOK symbols, the length of the repetitive bit(s) may be 1 to M - 1. Then, there are correspondingly M - 1 target phase randomization sequences, and each one of the M - 1 target phase randomization sequences has a one-to-one mapping relationship with the length of at least one repetitive bit.

For example, for the mapping relationship between a plurality of target phase randomization sequences and the length of at least one repetitive bit, reference is made to Table 9 above.

In summary, in the method provided by the present embodiment, by sending the length indication information for indicating the length of at least one repetitive bit to the sending end device, the receiving end device can distinguish information corresponding to the repetitive bit and information corresponding to the non-repetitive bit, thereby ensuring that the receiving end can accurately parse information corresponding to valid OOK symbols through the length indication information even when a number of the valid OOK symbols to be transmitted is not an integer multiple of M.

In some embodiments, the first number L may be greater than the third number L'.

The processing module 6120 is further configured to, in a case where the first number L is greater than the third number L', perform truncated selection on the first bit sequence to obtain the second bit sequence having a length of the third number L'.

In some embodiments, in the case where the first number L is greater than the third number L', a segment of the bit sequence is selected by truncation from the first bit sequence as the second bit sequence having a length of the third number L'. The bit sequence selected by truncation is a subsequence in the first bit sequence, or it is understood that the bit sequence selected by truncation is a sub-sequence in the first bit sequence.

Exemplary, as shown in FIG. 37, assuming that the first bit sequence is {1, 0, 0, 1, 1, 1, 1, 0, 1, 0, 1}, then L = 11; and in the case of M = 4, L is not an integer multiple of M, then truncated selection is performed on the first bit sequence to obtain the second bit sequence {1, 0, 0, 1, 1, 1, 1, 0}, and at this time L' = 8. The second bit sequence selected by truncation is a subsequence in the first bit sequence.

Optionally, the length of the second bit sequence selected by truncation in the first bit sequence is determined based on the second number M.

In some embodiments, M has a plurality of candidate values, for example, M = {1, 2, 4, 6, 8}. Optionally, the length of the second bit sequence selected by truncation in the first bit sequence is determined based on the value of M at the time of communication. Optionally, the length of the second bit sequence selected by truncation in the first bit sequence is determined based on a maximum value of candidate values of M.

To sum up, according to the method provided by the embodiment of the disclosure, when the first number L is greater than the third number L', truncated selection is performed on the first bit sequence to obtain the second bit sequence having a length of the third number L', so that the processed second bit sequence can be divided into at least one sequence segment having a length of the second number M, thereby ensuring that the OOK symbols can be smoothly transmitted even when the number of valid OOK symbols to be transmitted is not an integer multiple of M.

In some embodiments, the apparatus further includes a determining module 6150.

**The determination module 6150 is used to determine a** selection start point for bit selection.

The selection start point for the bit selection is determined based on indication information of a network device; or, the selection start point for the bit selection is determined based on an agreed rule of a communication protocol.

Optionally, the selection start point is determined based on the indication information of the network device, or the selection start point is determined based on the agreed rule of the communication protocol.

In some embodiments, for the selection start point, reference is made to the introduction made in the operation 520 above.

In summary, in the method provided by the present embodiment, by determining the selection start point for the bit selection, the sending end device can perform bit selection on the first bit sequence based on an accurate selection start point.

FIG. 62 shows a structural block diagram of an apparatus for generating an OOK symbol provided by an exemplary embodiment of the disclosure. The generation apparatus may be implemented as part of a network device or an AP or an ambient IoT device or a terminal device, and the apparatus includes an acquiring module 6210, a modulating module 6220 and an adding module 6230.

The acquiring module 6210 is configured to acquire a first bit sequence having a length of a first number L.

The first number L is a number of bits in the first bit sequence. For example, assuming that the first bit sequence is {1, 0, 1, 1, 1, 1, 1, 0, 1, 0, 1, 0, 1, 0, 1, 0, 1, 0}, then L is 18.

In some embodiments, the first bit sequence is any one of:

· an original bit sequence for which encoding is not required;
· an original bit sequence before encoding;
· an encoded bit sequence after encoding is performed on the original bit sequence; and
· an encoded bit sequence after at least one stage encoding of multi-stage encoding is performed on the original bit sequence.

In some embodiments, for the first bit sequence, reference is made to the introduction made in the operation 220 above.

The modulating module 6220 is configured to divide the first bit sequence into at least one sequence segment according to a second number M for OOK modulation to obtain an OOK symbol sequence corresponding to each sequence segment.

The second number M is a number of OOK symbols transmitted in a preset duration. The preset duration is determined by a basic time-domain unit in a cellular communication system or a WiFi system. In some embodiments, the preset duration is t OFDM symbols in which M OOK symbols may be transmitted. M is a number of OOK symbols transmitted in the t OFDM symbols. The value of t is a positive integer. In the embodiment of the disclosure, description is made by taking an example that M OOK symbols are transmitted in 1 OFDM symbol.

In some embodiments, M may be agreed by a protocol, configured by a network device, or determined by a terminal device based on a preset mapping relationship.

In some embodiments, M has a plurality of candidate values, for example, M = {1, 2, 4, 6, 8}.

In some embodiments, the first bit sequence is divided into at least one sequence segment according to the second number M. For example, assuming that the first bit sequence is {1, 0, 0, 1, 1, 1, 1, 0, 1, 0, 1}. In the case of M = 4, the first bit sequence is divided into segments, and sequence segment 1 is {1, 0, 0, 1}, sequence segment 2 is {1, 1, 1, 0}, and sequence segment 3 is {1, 0, 1}.

OOK modulation is performed on at least one sequence segment obtained based on the division of the first bit sequence, to obtain the OOK symbol sequence corresponding to each sequence segment.

It should be understood that it is possible to perform OOK modulation on all sequence segments simultaneously, to obtain the OOK symbol sequence corresponding to each sequence segment.

Alternatively, it is possible to group all sequence segments and sequentially perform OOK modulation in units of groups to obtain an OOK symbol sequence corresponding to each sequence segment. For example, it is assumed that there are four sequence segments, including sequence segment 1, sequence segment 2, sequence segment 3 and sequence segment 4. The sequence segment 1 and sequence segment 2 are OOK-modulated as a group to obtain an OOK symbol sequence 1 corresponding to the sequence segment 1 and an OOK symbol sequence 2 corresponding to the sequence segment 2; and the sequence segment 3 and the sequence segment 4 are OOK-modulated as a group to obtain an OOK symbol sequence 3 corresponding to the sequence segment 3 and an OOK symbol sequence 4 corresponding to the sequence segment 4.

Alternatively, it is possible to sequentially perform OOK modulation on each sequence segment in units of each sequence segment to obtain an OOK symbol sequence corresponding to each sequence segment. For example, it is assumed that there are four sequence segments, including sequence segment 1, sequence segment 2, sequence segment 3, and sequence segment 4. OOK modulation is performed sequentially, that is, OOK modulation is performed on the sequence segment 1 to obtain the OOK symbol sequence 1 corresponding to the sequence segment 1; OOK modulation is performed on the sequence segment 2 to obtain the OOK symbol sequence 2 corresponding to the sequence segment 2; OOK modulation is performed on the sequence segment 3 to obtain the OOK symbol sequence 3 corresponding to the sequence segment 3; and OOK modulation is performed on the sequence segment 4 to obtain the OOK symbol sequence 4 corresponding to the sequence segment 4.

In some embodiments, the OOK symbol includes a first type of symbol corresponding to a bit having a first value and/or a second type of symbol corresponding to a bit having a second value. The first type of symbol and the second type of symbol are different types of symbols, and the first value and the second value are also different. For example, the first value corresponding to the first type of symbol is 1, and the second value corresponding to the second type of symbol is 0; or, the first value corresponding to the first type of symbol is 0, and the second value corresponding to the second type of symbol is 1.

Optionally, the OOK symbol sequence includes only the first type of symbol; or, the OOK symbol sequence includes only the second type of symbol. For example, the OOK symbol sequence is {OOK-on, OOK-on, OOK-on, OOK-on, OOK-on, OOK-on}; or, the OOK symbol sequence is {OOK-off, OOK-off, OOK-off, OOK-off, OOK-off, OOK-off}.

Optionally, the OOK symbol sequence includes a first type of symbol and a second type of symbol. For example, the OOK symbol sequence is {OOK-on, OOK-off, OOK-off, OOK-on, OOK-off, OOK-on}.

The adding module 6230 is configured to, in a case where a number of bits in a last sequence segment is smaller than the second number M, add a third type of symbol to the OOK symbol sequence corresponding to the last sequence segment to enable the OOK symbol sequence corresponding to the last sequence segment to include at least M OOK symbols.

In some embodiments, in a case where the first number L is not an integer multiple of the second number M, the number of bits in the last sequence segment obtained by dividing the first bit sequence according to the second number M will be smaller than the second number M. Then, a third type of symbol is added to the OOK symbol sequence corresponding to the last sequence segment to enable the OOK symbol sequence corresponding to the last sequence segment to include at least M OOK symbols.

In some embodiments, the third type of symbol is an OOK symbol different from the first type of symbol and the second type of symbol. Optionally, the third type symbol is obtained by performing OOK modulation based on a bit sequence having a third value. It should be understood that each of the first type of symbol, the second type of symbol and the third type of symbol corresponds to a same time-domain length. Or, it is understood that a time-domain length corresponding to a bit having the first value is the same as a time-domain length corresponding to a bit sequence having the third value.

For example, as shown in FIG. 40, assuming that the last sequence segment is {1, 0}, the last sequence segment is OOK-modulated to obtain an OOK symbol sequence that is {OOK-on, OOK-off}. In the case of M = 4, it is necessary to add a third type of symbol to the OOK symbol sequence, such as adding {OOK-on, OOK-off; OOK-on, OOK-off}. It should be understood that in the added third type of symbols, "OOK-on, OOK-off", as a combination, has the same time domain length as the time domain length of one "OOK-on" symbol or the time domain length of one "OOK-off" symbol in the original OOK symbol sequence.

In some embodiments, the third type symbol may be considered as an abnormal type of symbol. In one way of understanding, the abnormal type of symbol can be understood as a symbol of waveform abnormality; and in one way of understanding, the abnormal type of symbol can be understood as a symbol of length abnormality.

In some embodiments, M has a plurality of candidate values, for example, M = {1, 2, 4, 6, 8}. Optionally, the number of the third type of symbols is determined based on the value of M at the time of communication. Optionally, the number of the third type of symbols is determined based on a maximum value of candidate values of M.

In some embodiments, the bit sequence corresponding to the third type of symbol may be agreed by a protocol, configured by a network device, or determined by a terminal device.

In summary, in the method provided by the present embodiment, by adding the third type of symbol to the OOK symbol sequence corresponding to the last sequence segment, the OOK symbol sequence corresponding to the last sequence segment is enabled to include at least M OOK symbols, so that it is ensured that OOK symbols can be smoothly transmitted even when the number of valid OOK symbols to be transmitted is not an integer multiple of M.

FIG. 63 shows a structural block diagram of an apparatus for sending an OOK symbol provided by an exemplary embodiment of the disclosure. The sending apparatus may be implemented as part of a network device or an AP or an ambient IoT device or a terminal device, and the apparatus includes a sending module 6310.

**The sending module 6310 is configured to send** at least one set of OOK symbols forming sequence(s).

In some embodiments, each set of OOK symbols forming the sequence includes a second number M of OOK symbols.

The second number M is a number of OOK symbols transmitted in a preset duration. The preset duration is determined by a basic time-domain unit in a cellular communication system or a WiFi system. In some embodiments, the preset duration is t OFDM symbols in which M OOK symbols may be transmitted. M is a number of OOK symbols transmitted in the t OFDM symbols. The value of t is a positive integer. In the embodiment of the disclosure, description is made by taking an example that M OOK symbols are transmitted in 1 OFDM symbol.

In some embodiments, M may be agreed by a protocol, configured by a network device, or determined by a terminal device based on a preset mapping relationship.

In some embodiments, M has a plurality of candidate values, for example, M = {1, 2, 4, 6, 8}.

In some embodiments, at least one set of OOK symbols forming sequence(s) corresponds to a first bit sequence having a length of a first number L.

The first number L is a number of bits in the first bit sequence. For example, assuming that the first bit sequence is {1, 0, 1, 1, 1, 1, 1, 0, 1, 0, 1, 0, 1, 0, 1, 0, 1, 0}, then L is 18.

In some embodiments, the first bit sequence is any one of:

· an original bit sequence for which encoding is not required;
· an original bit sequence before encoding;
· an encoded bit sequence after encoding is performed on the original bit sequence; and
· an encoded bit sequence after at least one stage encoding of multi-stage encoding is performed on the original bit sequence.

In some embodiments, for the first bit sequence, reference is made to the introduction made in the operation 220 above.

In some embodiments, a last one among the at least one set of OOK symbols forming sequence(s) includes a third type of symbol, the third type of symbol is an OOK symbol different from a first type of symbol and a second type of symbol, the first type of symbol corresponds to a bit having a first value, and the second type of symbol corresponds to a bit having a second value. Optionally, the third type of symbol corresponds to a bit sequence having a third value. It should be understood that each of the first type of symbol, the second type of symbol and the third type of symbol corresponds to a same time-domain length. Or, it is understood that a time-domain length corresponding to a bit having the first value is the same as a time-domain length corresponding to a bit sequence having the third value.

In some embodiments, the bit sequence corresponding to the third type of symbol may be agreed by a protocol, configured by a network device, or determined by a terminal device.

In summary, in the method provided by the present embodiment, by adding the third type of symbol to the OOK symbol sequence corresponding to the last sequence segment, the OOK symbol sequence corresponding to the last sequence segment is enabled to include at least M OOK symbols, so that it is ensured that OOK symbols can be smoothly transmitted even when the number of valid OOK symbols to be transmitted is not an integer multiple of M.

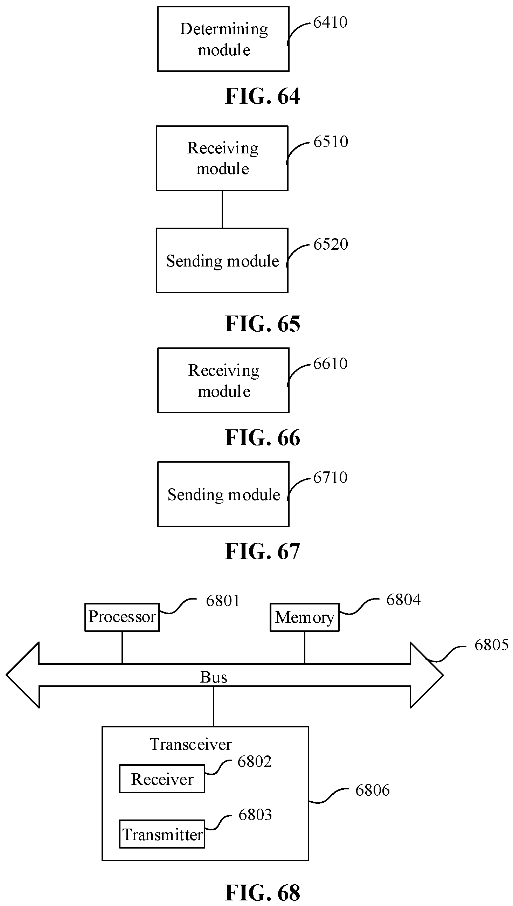

FIG. 64 shows a structural block diagram of an apparatus for determining an TBS value provided by an exemplary embodiment of the disclosure. The determining apparatus may be implemented as part of a network device or an AP or an ambient IoT device or a terminal device, and the apparatus includes a determining module 6410.

**The determining module 6410 is configured to determine** the TBS value to be a numerical value related to the second number M.

The second number M is a number of OOK symbols transmitted in a preset duration. The preset duration is determined by a basic time-domain unit in a cellular communication system or a WiFi system. In some embodiments, the preset duration is t OFDM symbols in which M OOK symbols may be transmitted. M is a number of OOK symbols transmitted in the t OFDM symbols. The value of t is a positive integer. In the embodiment of the disclosure, description is made by taking an example that M OOK symbols are transmitted in 1 OFDM symbol.

In some embodiments, M may be agreed by a protocol, configured by a network device, or determined by a terminal device based on a preset mapping relationship.

In some embodiments, M has a plurality of candidate values, for example, M = {1, 2, 4, 6, 8}.

In some embodiments, the numerical value related to the second number M includes at least one of the following:

an integer multiple of the second number M;
an integer multiple of one-half of the second number M.

Optionally, the TBS value is determined to be an integer multiple of the second number M. This ensures that the OOK symbols can be smoothly transmitted even when the number of valid OOK symbols to be transmitted is not an integer multiple of M.

Optionally, in a case where the original bit sequence is encoded using a Manchester encoder, the TBS value is determined to be an integer multiple of one-half of the second number M. Exemplarily, as shown in FIG. 12 or FIG. 13, the encoder is a Manchester encoder.

In summary, in the method provided by the present embodiment, by determining the TBS value to be a numerical value related to M, it is ensured that the OOK symbols can be smoothly transmitted even when the number of valid OOK symbols to be transmitted is not an integer multiple of M.

The determining module 6410 is further configured to determine the TBS value based on a first TBS value mapping relationship.

In some embodiments, candidate TBS values in the first TBS value mapping relationship are all numerical values related to the second number M.

Optionally, the candidate TBS values in the first TBS value mapping relationship are all an integer multiple of the second number M.

Optionally, the candidate TBS values in the first TBS value mapping relationship are all an integer multiple of one-half of the second number M.

Optionally, the candidate TBS values in the first TBS value mapping relationship are all an integer multiple of one-half of the second number M and an integer multiple of the second number M.

For example, for the first TBS value mapping relationship, reference is made to the Table 10 above.

The determining module 6410 is further configured to determine the TBS value based on a second TBS value mapping relationship.

In some embodiments, the TBS value is greater than or equal to the first number L, and the TBS value is a minimum integer multiple of the second number M. The first number L is a length of the first bit sequence to be transmitted.

In some embodiments, the first bit sequence is any one of:

· an original bit sequence for which encoding is not required;
· an original bit sequence before encoding;
· an encoded bit sequence after encoding is performed on the original bit sequence; and
· an encoded bit sequence after at least one stage encoding of multi-stage encoding is performed on the original bit sequence.

In some embodiments, for the first bit sequence, reference is made to the introduction made in the operation 220 above.

In some embodiments, not all candidate TBS values in the second TBS value mapping relationship are numerical values related to the second number M.

Optionally, a part of the candidate TBS values in the second TBS value mapping relationship is an integer multiple of the second number M, and another part is a numerical value not related to the second number M.

Optionally, a part of the candidate TBS values in the second TBS value mapping relationship is an integer multiple of one-half of the second number M, and another part is a numerical value not related to the second number M.

Optionally, a part of the candidate TBS values in the second TBS value mapping relationship is an integer multiple of one-half of the second number M and an integer multiple of the second number M, and another part is a numerical value not related to the second number M.

For example, for the second TBS value mapping relationship, reference is made to the Table 11 above.

The determining module 6410 is further configured to determine the TBS value based on a third TBS value mapping relationship.

In some embodiments, the TBS value is greater than or equal to the first number L, and the TBS value is a minimum integer multiple of the fourth number. The first number L is a length of the first bit sequence to be transmitted. The fourth number is a quotient of the second number M and the fifth number P, and the fifth number P is related to an encoding mode adopted by the first bit sequence. For example, assuming that the first bit sequence is encoded by the Manchester coding, thus the fifth number P = 2, and the fourth number $P = \frac{M}{2}$, then the TBS value is a minimum integer multiple of $\frac{M}{2}$.

In some embodiments, not all candidate TBS values in the third TBS value mapping relationship are numerical values related to the second number M.

Optionally, a part of the candidate TBS values in the third TBS value mapping relationship is an integer multiple of the second number M, and another part is a numerical value not related to the second number M.

Optionally, a part of the candidate TBS values in the third TBS value mapping relationship is an integer multiple of the fourth number, and another part is a numerical value not related to the second number M. Optionally, a part of the candidate TBS values in the third TBS value mapping relationship is an integer multiple of one-half of the second number M, and another part is a numerical value not related to the second number M.

Optionally, a part of the candidate TBS values in the third TBS value mapping relationship is an integer multiple of the fourth number and an integer multiple of the second number M, and another part is a numerical value unrelated to the second number M. Optionally, a part of the candidate TBS values in the third TBS value mapping relationship is an integer multiple of one-half of the second number M and an integer multiple of the second number M, and another part is a numerical value unrelated to the second number M.

For example, for the third TBS value mapping relationship, reference is made to the Table 12 above.

Optionally, difference numbers M correspond to a same TBS value mapping relationship. For example, both M = 2 and M = 4 correspond to the first TBS value mapping relationship.

Optionally, a part of the different second numbers M corresponds to a same TBS value mapping relationship, and another part of the different second numbers M corresponds to different TBS value mapping relationships. For example, both M = 2 and M = 4 correspond to the first TBS value mapping relationship. M = 6 correspond to the second TBS value mapping relationship. M = 8 correspond to the third TBS value mapping relationship.

Optionally, difference numbers M correspond to different TBS value mapping relationships. For example, M = 2 correspond to the first TBS value mapping relationship. M = 4 correspond to the second TBS value mapping relationship. M = 6 correspond to the third TBS value mapping relationship. By analogy, each second number M corresponds to a respective TBS value mapping relationship.

In summary, tin the method provided by the present embodiment, by determining the TBS value, it is ensured that the OOK symbols can be smoothly transmitted even when the number of valid OOK symbols to be transmitted is not an integer multiple of M.

FIG. 65 shows a structural block diagram of an apparatus for preprocessing a bit sequence provided by an exemplary embodiment of the disclosure. The apparatus for preprocessing a bit sequence may be implemented as part of a network device or an AP or an ambient IoT device or a terminal device, and the apparatus includes a receiving module 6510,

The receiving module 6510 is configured to receive On Off Keying (OOK) symbols corresponding to a second bit sequence having a length of a third number L'.

In some embodiments, the second bit sequence is obtained by processing the first bit sequence by the sending end device in a case where the first number L corresponding to the first bit sequence is not an integer multiple of the second number M.

The first number L is a number of bits in the first bit sequence. For example, assuming that the first bit sequence is {1, 0, 1, 1, 1, 1, 1, 0, 1, 0, 1, 0, 1, 0, 1, 0, 1, 0}, then L is 18.

In some embodiments, the first bit sequence is any one of:

· an original bit sequence for which encoding is not required;
· an original bit sequence before encoding;
· an encoded bit sequence after encoding is performed on the original bit sequence; and
· an encoded bit sequence after at least one stage encoding of multi-stage encoding is performed on the original bit sequence.

In some embodiments, for the first bit sequence, reference is made to the introduction made in the operation 220 above.

Optionally, the first number L is smaller than the third number L'. Optionally, the first number L is greater than the third number L'.

The second number M is a number of OOK symbols transmitted in a preset duration. The preset duration is determined by a basic time-domain unit in a cellular communication system or a WiFi system. In some embodiments, the preset duration is t OFDM symbols in which M OOK symbols may be transmitted. M is a number of OOK symbols transmitted in the t OFDM symbols. The value of t is a positive integer. In the embodiment of the disclosure, description is made by taking an example that M OOK symbols are transmitted in 1 OFDM symbol.

In some embodiments, M may be agreed by a protocol, configured by a network device, or determined by a terminal device based on a preset mapping relationship.

In some embodiments, M has a plurality of candidate values, for example, M = {1, 2, 4, 6, 8}.

The third number L' is a number of bits in the second bit sequence. For example, if the second bit sequence is {1, 0, 1, 0}, then L' is 4.

In some embodiments, the second bit sequence is configured to be divided into at least one sequence segment having a length of the second number M for OOK modulation, to obtain M OOK symbols corresponding to each sequence segment. That is, the third number L' is an integer multiple of the second number M. For example, if the second bit sequence is {1, 0, 1, 0} and M = 2, the second bit sequence can be divided into two sequence segments each having a length of 2, and respective sequence segments are {1, 0}, {1, 0}.

It should be understood that in the case where the first number L is not an integer multiple of the second number M, when the first bit sequence having the length of the first number L is segmented, the first bit sequence having the length of the first number L cannot be divided into a plurality of sequence segments having the length of the second number M. That is, the length of the last sequence segment will be smaller than the second number M. At this time, the last sequence segment cannot be OOK-modulated. For example, assuming that the first bit sequence is {1, 0, 0, 1, 1, 1, 1, 0, 1, 0, 1}, then L = 11. In the case of M = 4, the first bit sequence is divided into segments, and sequence segment 1 is {1, 0, 0, 1}, sequence segment 2 is {1, 1, 1, 0}, and sequence segment 3 is {1, 0, 1}.

In some embodiments, the method for processing a first bit sequence described above may have a variety of alternative designs. For details, reference can be made to the alternative designs 1 and 2 described in operation 240 above.

In summary, in the method provided by the present embodiment, by receiving the OOK symbol corresponding to the second bit sequence having the length of the third number L ', valid OOK symbols to be transmitted can be accurately received even when the number of valid OOK symbols to be transmitted is not an integer multiple of M.

## For alternative design 1 (bit padding)

In some embodiments, the second bit sequence having the third number L' is obtained by performing bit padding on the first bit sequence by the sending end device.

In some embodiments, in the case where the first number L is not an integer multiple of the second number M, bit padding is performed by the sending end device on the first bit sequence having the length of the first number L, so that the first bit sequence having the length of the first number L is padded into the second bit sequence having a length of the third number L'. The third number L' is an integer multiple of the second number M.

Exemplary, assuming that the first bit sequence is {1, 0, 0, 1, 1, 1, 1, 0, 1, 0, 1}, then L = 11; and in the case of M = 4, L is not an integer multiple of M, then bit padding is performed by the sending end device on the first bit sequence to obtain the second bit sequence {1, 0, 0, 1, 1, 1, 1, 0, 1, 0, 1, 1}, and at this time L' = 12.

Optionally, in a case where the first number L is smaller than the third number L', bit padding is performed by the sending end device on the first bit sequence to obtain the second bit sequence having a length of the third number L'.

In some embodiments, the second bit sequence having the third number L' is obtained by adding at least one padding bit to a tail of the first bit sequence by the sending end device.

In some embodiments, the first bit sequence is divided by the sending end device according to the second number M to obtain multiple sequence segments. In a case where the first number L is not an integer multiple of the second number M, the length of the last sequence segment obtained by division of the first bit sequence will be smaller than the second number M, and at least one padding bit is added to the last sequence segment obtained by division of the first bit sequence division to make the length of the last sequence segment obtained by division of the first bit sequence to be equal to M, thereby enabling OOK modulation.

In some embodiments, the at least one padding bit added to the tail of the first bit sequence includes any one of:

· a bit sequence having all values of 1;
· a bit sequence having all values of 0;
· a bit sequence having values arranged according to a fixed law; and
· a bit sequence determined based on the second number M.

In some embodiments, for the at least one padding bit added to the tail of the first bit sequence, reference is made to the introduction in the operation 2411 above.

The receiving module 6510 is further configured to receive length indication information of the at least one padding bit.

The length indication information is used to indicate the length of at least one padding bit, so that the receiving end device can distinguish information corresponding to the padding bit and information corresponding to the non-padding bit.

In some embodiments, the length indication information is sent by the sending end device separately. That is, the length indication information and the plurality of OOK symbols obtained after OOK modulation are sent separately. Exemplarily, as shown in FIG. 21, the length indication information is sent separately independently of the M OOK symbols, and is used to indicate the length of at least one padding bit.

In some embodiments, the length indication information is sent by the sending end device by being carried in a plurality of OOK symbols obtained after OOK modulation. Exemplarily, as shown in FIG. 22, the length indication information is carried in M OOK symbols obtained after OOK modulation, and is used to indicate the length of at least one padding bit. That is, a length indication bit sequence corresponding to the length indication information is a subset of the bit sequence corresponding to the M OOK symbols, or it is understood that the length indication bit sequence corresponding to the length indication information is a sub-sequence of the bit sequence corresponding to the M OOK symbols. Optionally, positions of the length indication bit sequence corresponding to the length indication information in the bit sequence corresponding to the M OOK symbols are fixed, and optionally, the positions of the length indication bit sequence corresponding to the length indication information in the bit sequence corresponding to the M OOK symbols may be agreed by a protocol, configured by a network device, or configured by a terminal device.

In some embodiments, M has a plurality of candidate values, for example, M = {1, 2, 4, 6, 8}. Optionally, a length of the length indication bit sequence corresponding to the length indication information is determined based on the value of M at the time of communication. For example, the length of the length indication bit sequence corresponding to the length indication information is: $l = \lceil \log_2 M \rceil$. Optionally, the length of the length indication bit sequence corresponding to the length indication information is determined based on a maximum value of the candidate values of M. For example, the length of the length indication bit sequence corresponding to the length indication information is: $l = \lceil \log_2 M_{\max} \rceil$. $\lceil * \rceil$ represents rounding up.

**The receiving module 6510 is further configured to** receive a first indication bit sequence.

In some embodiments, for the first indication bit sequence, reference is made to the introduction made in the operation 1021 above.

**The receiving module 6510 is further configured to** receive a second indication bit sequence.

In some embodiments, for the second indication bit sequence, reference is made to the introduction made in the operation 1022 above.

**The receiving module 6510 is further configured to** receive a first bitmap having a length of a second number M.

In some embodiments, for the first bitmap, reference is made to the introduction made in the operation 1023 above.

**The receiving module 6510 is further configured to** receive a target sequence.

In some embodiments, the target sequence is used to indicate a length of the at least one padding bit, wherein the target sequence is obtained by mapping bits having a first value in the second bit sequence by the sending end device during a process of OOK-modulating the second bit sequence into OOK symbols.

Optionally, the target sequence is obtained by mapping bits having a value of 1 in the second bit sequence by the sending end device during a process of OOK-modulating the second bit sequence into OOK symbols.

Optionally, the target sequence is obtained by mapping bits having a value of 0 in the second bit sequence by the sending end device during a process of OOK-modulating the second bit sequence into OOK symbols.

In some embodiments, the target sequence is at least one of the following sequences:

· Pseudo-Noise (PN) sequence;
· Zadoff-Chu (ZC) sequence;
· Maximum-length (M) sequence.

Optionally, the target sequence is a PN sequence obtained by mapping bits having a value of 1 in the second bit sequence by the sending end device during a process of OOK-modulating the second bit sequence into OOK symbols. Or, the target sequence is a ZC sequence obtained by mapping bits having a value of 1 in the second bit sequence by the sending end device during a process of OOK-modulating the second bit sequence into OOK symbols. Or, the target sequence is an M sequence obtained by mapping bits having a value of 1 in the second bit sequence by the sending end device during a process of OOK-modulating the second bit sequence into OOK symbols.

Optionally, the target sequence is a PN sequence obtained by mapping bits having a value of 0 in the second bit sequence by the sending end device during a process of OOK-modulating the second bit sequence into OOK symbols. Or, the target sequence is a ZC sequence obtained by mapping bits having a value of 0 in the second bit sequence by the sending end device during a process of OOK-modulating the second bit sequence into OOK symbols. Or, the target sequence is an M sequence obtained by mapping bits having a value of 0 in the second bit sequence by the sending end device during a process of OOK-modulating the second bit sequence into OOK symbols.

In some embodiments, for the target sequence, reference is made to the introduction made in the operation 1024 above.

In some embodiments, the target sequence may also be a target phase randomization sequence used by the sending end device when phase randomization is performed on the second bit sequence or intermediate data during the process of OOK-modulating the second bit sequence into OOK symbols. The intermediate data is intermediate process data generated during the process of OOK-modulating the second bit sequence.

In some embodiments, the target phase randomization sequence is used to indicate the length of at least one padding bit.

Optionally, values of the target phase randomization sequence are used to indicate the length of the at least one padding bit. That is, the length of the at least one padding bit is associated with the values of the target phase randomization sequence.

Optionally, an index of the target phase randomization sequence is used to indicate the length of the at least one padding bit. For example, a plurality of target phase randomization sequences have a mapping relationship with the length of at least one padding bit. In some embodiments, the mapping relationship may be agreed by a protocol, configured by a network device, or determined by a terminal device.

In some embodiments, in a case where one sequence segment corresponds to M OOK symbols, the length of the padding bit(s) may be 1 to M - 1. Then, there are correspondingly M - 1 target phase randomization sequences, and each one of the M - 1 target phase randomization sequences has a one-to-one mapping relationship with the length of at least one padding bit.

For example, for the mapping relationship between a plurality of target phase randomization sequences and the length of at least one padding bit, reference is made to Table 5 above.

In summary, in the method provided by the present embodiment, by receiving the length indication information for indicating the length of at least one padding bit, the receiving end device can distinguish information corresponding to the padding bit and information corresponding to the non-padding bit, thereby ensuring that the receiving end can accurately parse information corresponding to valid OOK symbols through the length indication information even when a number of the valid OOK symbols to be transmitted is not an integer multiple of M.

**For alternative design 2 (bit selection)**

In some embodiments, the second bit sequence having the third number L' is obtained by performing bit selection on the first bit sequence by the sending end device.

In some embodiments, the manner that the sending end device performs bit selection on the first bit sequence includes at least two types as follows.

In a first type of bit selection, the first number L is smaller than the third number L'.

In some embodiments, in a case where the first number L is smaller than the third number L', the second bit sequence having the third number L' is obtained by performing cyclic selection on the first bit sequence by the sending end device.

In the case where the first number L is smaller than the third number L', the second bit sequence having the third number L' is obtained by cyclically selecting at least one repetitive bit from the first bit sequence by the sending end device.

In some embodiments, in the case where the first number L is smaller than the third number L' and the first number L is not an integer multiple of the second number M, at least one repetitive bit is cyclically selected by the sending end device from the first bit sequence, so that the first bit sequence having a length of the fist number L is extended to obtain the second bit sequence having a length of the third number L'. A bit sequence corresponding to the at least one repetitive bit selected cyclically is a subsequence in the first bit sequence, or it is understood that the bit sequence corresponding to the at least one repetitive bit selected cyclically is a sub-sequence in the first bit sequence.

Exemplary, as shown in FIG. 30, assuming that the first bit sequence is {1, 0, 0, 1, 1, 1, 1, 0, 1, 0, 1}, then L = 11; and in the case of M = 4, L is not an integer multiple of M, then cyclic selection is performed by the sending end device on the first bit sequence to obtain the second bit sequence {1, 0, 0, 1, 1, 1, 1, 0, 1, 0, 1, 1}, and at this time L' = 12. The repeatedly selected bit sequence {1} is a subsequence in the first bit sequence.

Optionally, a length of the bit sequence corresponding to the at least one repetitive bit cyclically selected in the first bit sequence is determined based on the second number M.

In some embodiments, M has a plurality of candidate values, for example, M = {1, 2, 4, 6, 8}. Optionally, the length of the bit sequence corresponding to the at least one repetitive bit cyclically selected in the first bit sequence is determined based on a value of M at the time of communication. Optionally, the length of the bit sequence corresponding to the at least one repetitive bit cyclically selected in the first bit sequence is determined based on a maximum value of candidate values of M.

The receiving module 6510 is further configured to receive length indication information of the at least one repetitive bit.

The length indication information is used to indicate the length of at least one repetitive bit, so that the receiving end device can distinguish information corresponding to the repetitive bit and information corresponding to the non-repetitive bit.

In some embodiments, the length indication information is sent by the sending end device separately. That is, the length indication information and the plurality of OOK symbols obtained after OOK modulation are sent separately.

In some embodiments, the length indication information is sent by the sending end device by being carried in a plurality of OOK symbols obtained after OOK modulation. That is, a length indication bit sequence corresponding to the length indication information is a subset of the bit sequence corresponding to the plurality of OOK symbols, or it is understood that the length indication bit sequence corresponding to the length indication information is a sub-sequence of the bit sequence corresponding to the plurality of OOK symbols. Optionally, positions of the length indication bit sequence corresponding to the length indication information in the bit sequence corresponding to the the plurality of OOK symbols are fixed, and optionally, the positions of the length indication bit sequence corresponding to the length indication information in the bit sequence corresponding to the plurality of OOK symbols may be agreed by a protocol, configured by a network device, or configured by a terminal device.

In some embodiments, M has a plurality of candidate values, for example, M = {1, 2, 4, 6, 8}. Optionally, a length of the length indication bit sequence corresponding to the length indication information is determined based on the value of M at the time of communication. For example, the length of the length indication bit sequence corresponding to the length indication information is: . Optionally, the length of the length indication bit sequence corresponding to the length indication information is determined based on a maximum value of the candidate values of M. For example, the length of the length indication bit sequence corresponding to the length indication information is: . $\lceil * \rceil$ represents rounding up.

**The receiving module 6510 is further configured to** receive a third indication bit sequence.

In some embodiments, for the third indication bit sequence, reference is made to the introduction made in the operation 1121 above.

**The receiving module 6510 is further configured to** receive a fourth indication bit sequence.

In some embodiments, for the fourth indication bit sequence, reference is made to the introduction made in the operation 1122 above.

**The receiving module 6510 is further configured to** receive a second bitmap having a length of a second number M.

In some embodiments, for the second bitmap, reference is made to the introduction made in the operation 1123 above.

**The receiving module 6510 is further configured to** receive a target sequence.

In some embodiments, the target sequence is used to indicate a length of the at least one repetitive bit, wherein the target sequence is obtained by mapping bits having a first value in the second bit sequence by the sending end device during a process of OOK-modulating the second bit sequence into OOK symbols.

Optionally, the target sequence is obtained by mapping bits having a value of 1 in the second bit sequence by the sending end device during a process of OOK-modulating the second bit sequence into OOK symbols.

Optionally, the target sequence is obtained by mapping bits having a value of 0 in the second bit sequence by the sending end device during a process of OOK-modulating the second bit sequence into OOK symbols.

In some embodiments, the target sequence is at least one of the following sequences:

· Pseudo-Noise (PN) sequence;
· Zadoff-Chu (ZC) sequence;
· Maximum-length (M) sequence.

Optionally, the target sequence is a PN sequence obtained by mapping bits having a value of 1 in the second bit sequence during a process of OOK-modulating the second bit sequence into OOK symbols. Or, the target sequence is a ZC sequence obtained by mapping bits having a value of 1 in the second bit sequence during a process of OOK-modulating the second bit sequence into OOK symbols. Optionally, the target sequence is an M sequence obtained by mapping bits having a value of 1 in the second bit sequence during a process of OOK-modulating the second bit sequence into OOK symbols.

Optionally, the target sequence is a PN sequence obtained by mapping bits having a value of 0 in the second bit sequence during a process of OOK-modulating the second bit sequence into OOK symbols. Or, the target sequence is a ZC sequence obtained by mapping bits having a value of 0 in the second bit sequence during a process of OOK-modulating the second bit sequence into OOK symbols. Optionally, the target sequence is an M sequence obtained by mapping bits having a value of 0 in the second bit sequence during a process of OOK-modulating the second bit sequence into OOK symbols.

In some embodiments, for the first bit sequence, reference is made to the introduction made in the operation 1124 above.

In some embodiments, the target sequence may also be a target phase randomization sequence used when phase randomization is performed on the second bit sequence or intermediate data during the process of OOK-modulating the second bit sequence into OOK symbols. The intermediate data is intermediate process data generated during the process of OOK-modulating the second bit sequence.

In some embodiments, the target phase randomization sequence is used to indicate the length of at least one repetitive bit.

Optionally, values of the target phase randomization sequence are used to indicate the length of the at least one repetitive bit. That is, the length of the at least one repetitive bit is associated with the values of the target phase randomization sequence.

Optionally, an index of the target phase randomization sequence is used to indicate the length of the at least one repetitive bit. For example, a plurality of target phase randomization sequences have a mapping relationship with the length of at least one repetitive bit. In some embodiments, the mapping relationship may be agreed by a protocol, configured by a network device, or determined by a terminal device.

In some embodiments, in a case where one sequence segment corresponds to M OOK symbols, the length of the repetitive bit(s) may be 1 to M - 1. Then, there are correspondingly M - 1 target phase randomization sequences, and each one of the M - 1 target phase randomization sequences has a one-to-one mapping relationship with the length of at least one repetitive bit.

For example, for the mapping relationship between a plurality of target phase randomization sequences and the length of at least one repetitive bit, reference is made to Table 9 above.

In summary, in the method provided by the present embodiment, by receiving the length indication information for indicating the length of at least one repetitive bit, the receiving end device can distinguish information corresponding to the repetitive bit and information corresponding to the non-repetitive bit, thereby ensuring that the receiving end can accurately parse information corresponding to valid OOK symbols through the length indication information even when a number of the valid OOK symbols to be transmitted is not an integer multiple of M.

In a second type of bit selection, the first number L is greater than the third number L'.

In some embodiments, in a case where the first number L is greater than the third number L', the second bit sequence having the third number L' is obtained by performing truncated selection on the first bit sequence by the sending end device.

In some embodiments, in the case where the first number L is greater than the third number L', a segment of the bit sequence is selected by truncation by the sending end device from the first bit sequence as the second bit sequence having a length of the third number L'. The bit sequence selected by truncation is a subsequence in the first bit sequence, or it is understood that the bit sequence selected by truncation is a sub-sequence in the first bit sequence.

Exemplary, as shown in FIG. 37, assuming that the first bit sequence is {1, 0, 0, 1, 1, 1, 1, 0, 1, 0, 1}, then L = 11; and in the case of M = 4, L is not an integer multiple of M, then truncated selection is performed by the sending end device on the first bit sequence to obtain the second bit sequence {1, 0, 0, 1, 1, 1, 1, 0}, and at this time L' = 8. The second bit sequence selected by truncation is a subsequence in the first bit sequence.

Optionally, the length of the second bit sequence selected by truncation in the first bit sequence is determined based on the second number M.

In some embodiments, M has a plurality of candidate values, for example, M = {1, 2, 4, 6, 8}. Optionally, the length of the second bit sequence selected by truncation in the first bit sequence is determined based on the value of M at the time of communication. Optionally, the length of the second bit sequence selected by truncation in the first bit sequence is determined based on a maximum value of candidate values of M.

**In some embodiments, the apparatus further includes a sending module 6520.**

The sending module 6520 is configured to send indication information used for determining a selection start point for the bit selection.

In some embodiments, the indication information is used to indicate a selection start point for bit selection performed on the first bit sequence.

In some embodiments, the indication information is used to indicate a selection start point for cyclic selection performed by the sending end device on the first bit sequence. For example, the indication information is used to instruct the sending end device to use a target bit position of the first bit sequence as the selection start point for cyclic selection performed on the first bit sequence.

In some embodiments, the indication information is used to indicate a selection start point for truncated selection performed on the first bit sequence. For example, the indication information is used to instruct the sending end device to use a sequence start point of the first bit sequence as the selection start point for truncated selection performed on the first bit sequence.

In summary, in the method provided by the present embodiment, by sending indication information used for determining a selection start point for the bit selection, it is possible to enable the sending end device to perform bit selection on the first bit sequence based on an accurate selection start point.

The sending module 6520 is further configured to send indication information used for indicating the second number M.

The second number M is a number of OOK symbols transmitted in a preset duration. The preset duration is determined by a basic time-domain unit in a cellular communication system or a WiFi system. In some embodiments, the preset duration is t OFDM symbols in which M OOK symbols may be transmitted. M is a number of OOK symbols transmitted in the t OFDM symbols. The value of t is a positive integer. In the embodiment of the disclosure, description is made by taking an example that M OOK symbols are transmitted in 1 OFDM symbol.

In some embodiments, M has a plurality of candidate values, for example, M = {1, 2, 4, 6, 8}.

In some embodiments, the receiving end device sends indication information corresponding to a target value of the second number M to the sending end device. In some embodiments, the receiving end device sends indication information corresponding to a part of candidate values of the second number M to the sending end device. In some embodiments, the receiving end device sends indication information corresponding to all candidate values of the second number M to the sending end device.

In summary, in the method provided by the present embodiment, by sending the indication information used for indicating the second number M, it is possible to enable the sending end device to process the first bit sequence based on the indication information of the second number M in a case where the first number L is not an integer multiple of the second number M.

FIG. 66 shows a structural block diagram of an apparatus for receiving an OOK symbol provided by an exemplary embodiment of the disclosure. The receiving apparatus may be implemented as part of a network device or an AP or an ambient IoT device or a terminal device, and the apparatus includes a receiving module 6610.

**The receiving module 6610 is configured to receive** at least one set of OOK symbols forming sequence(s).

In some embodiments, each set of OOK symbols forming the sequence includes a second number M of OOK symbols.

The second number M is a number of OOK symbols transmitted in a preset duration. The preset duration is determined by a basic time-domain unit in a cellular communication system or a WiFi system. In some embodiments, the preset duration is t OFDM symbols in which M OOK symbols may be transmitted. M is a number of OOK symbols transmitted in the t OFDM symbols. The value of t is a positive integer. In the embodiment of the disclosure, description is made by taking an example that M OOK symbols are transmitted in 1 OFDM symbol.

In some embodiments, M may be agreed by a protocol, configured by a network device, or determined by a terminal device based on a preset mapping relationship.

In some embodiments, M has a plurality of candidate values, for example, M = {1, 2, 4, 6, 8}.

In some embodiments, at least one set of OOK symbols forming sequence(s) corresponds to a first bit sequence having a length of a first number L.

The first number L is a number of bits in the first bit sequence. For example, assuming that the first bit sequence is {1, 0, 1, 1, 1, 1, 1, 0, 1, 0, 1, 0, 1, 0, 1, 0, 1, 0}, then L is 18.

In some embodiments, the first bit sequence is any one of:

· an original bit sequence for which encoding is not required;
· an original bit sequence before encoding;
· an encoded bit sequence after encoding is performed on the original bit sequence; and
· an encoded bit sequence after at least one stage encoding of multi-stage encoding is performed on the original bit sequence.

In some embodiments, for the first bit sequence, reference is made to the introduction made in the operation 220 above.

In some embodiments, a last one among the at least one set of OOK symbols forming sequence(s) includes a third type of symbol, the third type of symbol is an OOK symbol different from a first type of symbol and a second type of symbol, the first type of symbol corresponds to a bit having a first value, and the second type of symbol corresponds to a bit having a second value. Optionally, the third type of symbol is obtained by performing OOK modulation based on a bit sequence having a third value. It should be understood that each of the first type of symbol, the second type of symbol and the third type of symbol corresponds to a same time-domain length. Or, it is understood that a time-domain length corresponding to a bit having the first value is the same as a time-domain length corresponding to a bit sequence having the third value.

In some embodiments, the bit sequence corresponding to the third type of symbol may be agreed by a protocol, configured by a network device, or determined by a terminal device.

In some embodiments, the third type of symbol may be considered as an abnormal type of symbol. In one way of understanding, the abnormal type of symbol can be understood as a symbol of waveform abnormality; and in one way of understanding, the abnormal type of symbol can be understood as a symbol of length abnormality.

In summary, in the method provided by the present embodiment, by receiving the OOK symbol sequence including the third type of symbol, it is possible to accurately receive valid OOK symbols to be transmitted even when the number of the valid OOK symbols to be transmitted is not an integer multiple of M.

FIG. 67 shows a structural block diagram of an apparatus for determining an TBS value provided by an exemplary embodiment of the disclosure. The determining apparatus may be implemented as part of a network device or an AP or an ambient IoT device or a terminal device, and the apparatus includes a sending module 6710.

**The sending module 6710 is configured to send** a TBS mapping relationship.

In some embodiments, the TBS mapping relationship is configured to be provided to a sending end device for determining the TBS value to be a numerical value related to a second number M.

The second number M is a number of OOK symbols transmitted within a preset duration, and the preset duration is determined by a basic time-domain unit in a cellular communication system or a Wireless Fidelity (WiFi) system. In some embodiments, the preset duration is t OFDM symbols in which M OOK symbols may be transmitted. M is a number of OOK symbols transmitted in the t OFDM symbols. The value of t is a positive integer. In the embodiment of the disclosure, description is made by taking an example that M OOK symbols are transmitted in 1 OFDM symbol.

In some embodiments, M may be agreed by a protocol, configured by a network device, or determined by a terminal device based on a preset mapping relationship.

In some embodiments, M has a plurality of candidate values, for example, M = {1, 2, 4, 6, 8}.

In some embodiments, the numerical value related to the second number M includes at least one of the following:

an integer multiple of the second number M;
an integer multiple of one-half of the second number M.

Optionally, the TBS mapping relationship is configured to be provided to a sending end device for determining the TBS value to be an integer multiple of the second number M This ensures that the OOK symbols can be smoothly transmitted even when the number of valid OOK symbols to be transmitted is not an integer multiple of M.

Optionally, in a case where the original bit sequence is encoded using a Manchester encoder, the TBS mapping relationship is configured to be provided to a sending end device for determining the TBS value to be an integer multiple of one-half of the second number M. Exemplarily, as shown in FIG. 12 or FIG. 13, the encoder is the Manchester encoder.

In some embodiments, the TBS mapping relationship includes a first TBS value mapping relationship, and candidate TBS values in the first TBS value mapping relationship are all numerical values related to the second number M.

Optionally, the candidate TBS values in the first TBS value mapping relationship are all an integer multiple of the second number M.

Optionally, the candidate TBS values in the first TBS value mapping relationship are all an integer multiple of one-half of the second number M.

Optionally, the candidate TBS values in the first TBS value mapping relationship are all an integer multiple of one-half of the second number M and an integer multiple of the second number M.

For example, for the first TBS value mapping relationship, reference is made to the Table 10 above.

In some embodiments, the TBS mapping relationship further includes a second TBS value mapping relationship, and not all candidate TBS values in the second TBS value mapping relationship are numerical values related to the second number M.

Optionally, a part of the candidate TBS values in the second TBS value mapping relationship is an integer multiple of the second number M, and another part is a numerical value not related to the second number M.

Optionally, a part of the candidate TBS values in the second TBS value mapping relationship is an integer multiple of one-half of the second number M, and another part is a numerical value not related to the second number M.

Optionally, a part of the candidate TBS values in the second TBS value mapping relationship is an integer multiple of one-half of the second number M and an integer multiple of the second number M, and another part is a numerical value not related to the second number M.

For example, for the second TBS value mapping relationship, reference is made to the Table 11 above.

In some embodiments, the TBS mapping relationship further includes a third TBS value mapping relationship, and not all candidate TBS values in the third TBS value mapping relationship are numerical values related to the second number M.

Optionally, a part of the candidate TBS values in the third TBS value mapping relationship is an integer multiple of the second number M, and another part is a numerical value not related to the second number M.

Optionally, a part of the candidate TBS values in the third TBS value mapping relationship is an integer multiple of the fourth number, and another part is a numerical value not related to the second number M. Optionally, a part of the candidate TBS values in the third TBS value mapping relationship is an integer multiple of one-half of the second number M, and another part is a numerical value not related to the second number M. The fourth number is the quotient of the second number M and the fifth number P, and the fifth number P is related to an encoding mode adopted by the first bit sequence. Exemplarily, assuming that the first bit sequence is encoded by the Manchester coding, thus the fifth number P = 2, and the fourth number $P = \dfrac{M}{2}$, then the TBS value is a minimum integer multiple of $\dfrac{M}{2}$.

Optionally, a part of the candidate TBS values in the third TBS value mapping relationship is an integer multiple of the fourth number and an integer multiple of the second number M, and another part is a numerical value not related to the second number M. Optionally, a part of the candidate TBS values in the third TBS value mapping relationship is an integer multiple of one-half of the second number M and an integer multiple of the second number M, and another part is a numerical value not related to the second number M.

For example, for the third TBS value mapping relationship, reference is made to the Table 12 above.

Optionally, difference numbers M correspond to a same TBS value mapping relationship. For example, both M = 2 and M = 4 correspond to the first TBS value mapping relationship.

Optionally, a part of the different second numbers M corresponds to a same TBS value mapping relationship, and another part of the different second numbers M corresponds to different TBS value mapping relationships. For example, both M = 2 and M = 4 correspond to the first TBS value mapping relationship. M = 6 correspond to the second TBS value mapping relationship. M = 8 correspond to the third TBS value mapping relationship.

Optionally, difference numbers M correspond to different TBS value mapping relationships. For example, M = 2 correspond to the first TBS value mapping relationship. M = 4 correspond to the second TBS value mapping relationship. M = 6 correspond to the third TBS value mapping relationship. By analogy, each second number M corresponds to a respective TBS value mapping relationship.

In summary, in the method provided by the present embodiment, by sneidng the TBS mapping relationship, it is possible to accurately receive valid OOK symbols to be transmitted even when the number of the valid OOK symbols to be transmitted is not an integer multiple of M.

It should be noted that when the apparatus provided in the above embodiment implements its functions, the division of each functional module described above is illustrated only as an example, and in practical application, the functions described above can be allocated to and implemented by different functional modules according to actual needs, that is, the content structure of the apparatus can be divided into different functional modules to implement all or part of the functions described above.

FIG. 68 is a schematic structural diagram of a communication device (ambient IoT device, terminal device, or network device) provided by an embodiment of the disclosure. The communication device may include a processor 6801, a receiver 6802, a transmitter 6803, a memory 6804, and a bus 6805.

The processor 6801 includes one or more processing cores, and executes various functional applications and information processing by running software programs and modules.

The receiver 6802 and the transmitter 6803 may be implemented as a transceiver, which may be a communication chip.

The memory 6804 is connected to the processor 6801 via the bus 6805. The memory 6804 may be configure to store a computer program, and the processor 6801 is configured to execute the computer program to implement various operations performed by the ambient IoT device or the terminal device or the network device in the above-described method embodiments.

Further, the memory 6804 may be implemented by any type of volatile or non-volatile storage device, including, but not limited to, Random Access Memory (RAM) and Read-Only Memory (ROM), Erasable Programmable Read-Only Memory (EPROM), Electrically Erasable Programmable Read-Only Memory (EEPROM), flash memory or other solid state storage technology thereof, Compact Disc Read-Only Memory (CD-ROM), Digital Video Disc (DVD) or other optical storage, magnetic cassette, magnetic tape, magnetic disk storage or other magnetic storage devices, or a combination thereof.

The embodiments of the disclosure provide a computer-readable storage medium having stored thereon a computer program that is executed by a processor of an ambient IoT device or terminal device or network device to perform operations of the method for preprocessing a bit sequence, and/or the method for generating an OOK symbol, and/or the method for transmitting an OOK symbol, and/or the method for determining a TBS value, and/or the method for preprocessing a bit sequence, and/or the method for receiving an OOK symbol, and/or the method for determining a TBS value.

In some embodiments, the computer-readable storage medium may include a Read-Only Memory (ROM), a Random-Access Memory (RAM), a Solid State Drive (SSD), an optical disc, or the like. The RAM may include a Resistance Random Access Memory (ReRAM) and a Dynamic Random Access Memory (DRAM).

The embodiments of the disclosure further provide a chip, including a programmable logic circuit and/or program instructions. When running on a terminal or a network device, the chip is configured to perform operations of the method for preprocessing a bit sequence, and/or the method for generating an OOK symbol, and/or the method for transmitting an OOK symbol, and/or the method for determining a TBS value, and/or the method for preprocessing a bit sequence, and/or the method for receiving an OOK symbol, and/or the method for determining a TBS value.

The embodiments of the disclosure provide a computer program product or a computer program, including computer instructions stored in a computer readable storage medium. A processor of a terminal or network device reads the computer instructions from the computer-readable storage medium and executes the computer instructions to perform operations of the method for preprocessing a bit sequence, and/or the method for generating an OOK symbol, and/or the method for transmitting an OOK symbol, and/or the method for determining a TBS value, and/or the method for preprocessing a bit sequence, and/or the method for receiving an OOK symbol, and/or the method for determining a TBS value.

Those skilled in the art should recognize that in one or more of the examples described above, the functions described in the embodiments of the disclosure may be implemented in hardware, software, firmware, or any combination thereof. When implemented using software, these functions may be stored in a computer readable medium, or transmitted as one or more instructions or codes on a computer readable medium. The computer-readable medium includes a computer storage medium and a communication medium, wherein communication medium includes any medium that facilitates transfer of a computer program from one place to another. The storage medium may be any available medium accessible by a general-purpose or special-purpose computer.

The above describes only exemplary embodiments of the disclosure, and is not intended to limit the disclosure. Any modification, equivalent substitution, improvement and the like made within the spirit and principles of the disclosure should be included within the scope of protection of the disclosure.

**Claims**

1. A method for preprocessing a bit sequence, performed by a sending end device, the method comprising:

   acquiring a first bit sequence having a length of a first number L;
   in a case where the first number L is not an integer multiple of a second number M, processing the first bit sequence into a second bit sequence having a length of a third number L',
   wherein the second bit sequence is configured to be divided into at least one sequence segment having a length of the second number M for On Off Keying (OOK) modulation, to obtain M OOK symbols corresponding to each sequence segment.

2. The method of claim 1, wherein processing the first bit sequence into the second bit sequence having a length of the third number L' comprises:
   performing bit padding on the first bit sequence to obtain the second bit sequence having a length of the third number L'.

3. The method of claim 2, wherein performing bit padding on the first bit sequence to obtain the second bit sequence having a length of the third number L' comprises:
   adding at least one padding bit to a tail of the first bit sequence to obtain the second bit sequence having a length of the third number L'.

4. The method of claim 3, wherein the at least one padding bit comprises any one of:

   a bit sequence having all values of 1;
   a bit sequence having all values of 0;
   a bit sequence having values arranged according to a fixed law, the fixed law comprising at least one bit having a value of 1 and at least one bit having a value of 0; and
   a bit sequence determined based on the second number M.

5. The method of any one of claims 1 to 4, wherein the first bit sequence is any one of:

   an original bit sequence for which encoding is not required;
   an original bit sequence before encoding;
   an encoded bit sequence after encoding is performed on the original bit sequence; and
   an encoded bit sequence after at least one stage encoding of multi-stage encoding is performed on the original bit sequence.

6. The method of any one of claims 3 to 5, further comprising:

   transmitting an OOK symbol corresponding to the at least one padding bit; or,
   transmitting the OOK symbol corresponding to the at least one padding bit, the OOK symbol corresponding to the at least one padding bit being used for determining a Cyclic Prefix (CP); or,
   performing puncturing processing on the OOK symbol corresponding to each padding bit; or,
   performing puncturing processing on the OOK symbol corresponding to each padding bit, the OOK symbol corresponding to each padding bit being not used for determining the CP.

7. The method of any one of claims 3 to 5, further comprising:
   sending length indication information of the at least one padding bit.

8. The method of claim 7, wherein sending the length indication information of the at least one padding bit comprises:

sending a first indication bit sequence, values of the first indication bit sequence being equal to a length of the at least one padding bit; or,

sending a second indication bit sequence, values of the second indication bit sequence having a mapping relationship with the length of the at least one padding bit; or,

sending a first bitmap having a length of the second number M, wherein a number of bits having a first value in the first bitmap is used to indicate the length of the at least one padding bit.

9. The method of claim 8, wherein a position of the bit having the first value in the first bitmap is associated with a position of the at least one padding bit in the second bit sequence.

10. The method of claim 7, wherein sending the length indication information of the at least one padding bit comprises:

during a process of OOK-modulating the second bit sequence into OOK symbols, mapping bits having a first value in the second bit sequence into a target sequence, the target sequence being used to indicate a length of the at least one padding bit; and

sending the OOK symbols corresponding to the second bit sequence.

11. The method of claim 10, wherein

the values of the target sequence are used to indicate the length of the at least one padding bit; or,

an index of the target sequence is used to indicate the length of the at least one padding bit; or,

a cyclic shift value corresponding to the target sequence is used to indicate the length of the at least one padding bit.

12. The method of claim 11, wherein the target sequence is at least one of:

Pseudo-Noise (PN) sequence;

Zadoff-Ch (ZC) sequence; or

Maximum-length (M) sequence.

13. The method of claim 1, wherein processing the first bit sequence into the second bit sequence having a length of the third number L' comprises:

performing bit selection on the first bit sequence to obtain the second bit sequence having a length of the third number L'.

14. The method of claim 13, wherein performing bit selection on the first bit sequence to obtain the second bit sequence having a length of the third number L' comprises:

in a case where the first number L is smaller than the third number L', performing cyclic selection on the first bit sequence to obtain the second bit sequence having a length of the third number L'; and/or

in a case where the first number L is greater than the third number L', performing truncated selection on the first bit sequence to obtain the second bit sequence having a length of the third number L'.

15. The method of claim 14, wherein in the case where the first number L is smaller than the third number L', performing cyclic selection on the first bit sequence to obtain the second bit sequence having a length of the third number L' comprises:

in the case where the first number L is smaller than the third number L', cyclically selecting at least one repetitive bit from the first bit sequence to obtain the second bit sequence having a length of the third number L'.

16. The method of claim 15, further comprising:

transmitting an OOK symbol corresponding to the at least one repetitive bit; or,

transmitting the OOK symbol corresponding to the at least one repetitive bit, the OOK symbol corresponding to the at least one repetitive bit being used for determining a CP; or,

performing puncturing processing on the OOK symbol corresponding to each repetitive bit; or,

performing puncturing processing on the OOK symbol corresponding to each repetitive bit, the OOK symbol corresponding to each repetitive bit being not used for determining the CP.

**17.** The method of claim 16, further comprising:
sending length indication information of the at least one repetitive bit.

**18.** The method of claim 17, wherein sending the length indication information of the at least one repetitive bit comprises:

sending a second indication bit sequence, values of the third indication bit sequence being equal to a length of the at least one repetitive bit; or,
sending a fourth indication bit sequence, values of the fourth indication bit sequence having a mapping relationship with the length of the at least one repetitive bit; or,
sending a second bitmap having a length of the second number M, wherein a number of bits having a first value in the second bitmap is used to indicate the length of the at least one repetitive bit.

**19.** The method of claim 18, wherein a position of the bit having the first value in the second bitmap is associated with a position of the at least one repetitive bit in the second bit sequence.

**20.** The method of claim 17, wherein sending the length indication information of the at least one repetitive bit comprises:

during a process of OOK-modulating the second bit sequence into OOK symbols, mapping bits having a first value in the second bit sequence into a target sequence, the target sequence being used to indicate a length of the at least one repetitive bit; and
sending the OOK symbols corresponding to the second bit sequence.

**21.** The method of claim 20, wherein

the values of the target sequence are used to indicate the length of the at least one repetitive bit; or,
an index of the target sequence is used to indicate the length of the at least one repetitive bit; or,
a cyclic shift value corresponding to the target sequence is used to indicate the length of the at least one repetitive bit.

**22.** The method of claim 21, wherein the target sequence is at least one of:

Pseudo-Noise (PN) sequence;
Zadoff-Chu (ZC) sequence;
Maximum-length (M) sequence.

**23.** The method of any one of claims 13 to 22, further comprising:
determining a selection start point for the bit selection.

**24.** The method of claim 23, wherein determining the selection start point for the bit selection comprises:

determining the selection start point for the bit selection based on indication information of a network device; or,
determining the selection start point for the bit selection based on an agreed rule of a communication protocol.

**25.** A method for generating an On Off Keying (OOK) symbol, performed by a sending end device, the method comprising:

acquiring a first bit sequence having a length of a first number L;
dividing the first bit sequence into at least one sequence segment according to a second number M for OOK modulation to obtain an OOK symbol sequence corresponding to each sequence segment, wherein the OOK symbol sequence comprises a first type of symbol and/or a second type of symbol, the first type of symbol corresponds to a bit having a first value, and the second type of symbol corresponds to a bit having a second value;
in a case where a number of bits in a last sequence segment is smaller than the second number M, adding a third type of symbol to the OOK symbol sequence corresponding to the last sequence segment to enable the OOK symbol sequence corresponding to the last sequence segment to comprise at least M OOK symbols,
wherein the third type of symbol is an OOK symbol different from the first type of symbol and the second type of symbol.

**26.** A method for sending an On Off Keying (OOK) symbol, performed by a sending end device, the method comprising:

sending at least one set of OOK symbols forming sequence(s), wherein each set of OOK symbols forming the sequence comprises a second number M of OOK symbols,

wherein the at least one set of OOK symbols forming sequence(s) corresponds to a first bit sequence, a last one among the at least one set of OOK symbols forming sequence(s) comprises a third type of symbol, the third type of symbol is an OOK symbol different from a first type of symbol and a second type of symbol, the first type of symbol corresponds to a bit having a first value, and the second type of symbol corresponds to a bit having a second value.

27. A method for determining a Transport Block Size (TBS) value, performed by a sending end device, the method comprising:

determining the TBS value to be a numerical value related to a second number M, the second number M being a number of OOK symbols transmitted within a preset duration, and the preset duration being determined by a basic time-domain unit in a cellular communication system or a Wireless Fidelity (WiFi) system.

28. The method of claim 27, wherein determining the TBS value to be the numerical value related to the second number M comprises:

determining the TBS value based on a first TBS value mapping relationship,

wherein candidate TBS values in the first TBS value mapping relationship are all numerical values related to the second number M.

29. The method of claim 27, wherein determining the TBS value to be the numerical value related to the second number M comprises:

determining the TBS value based on a second TBS value mapping relationship, the TBS value being greater than or equal to a first number L, and the TBS value being a minimum integer multiple of the second number M, wherein the first number L is a length of a first bit sequence to be transmitted,

Wherein not all candidate TBS values in the second TBS value mapping relationship are numerical values related to the second number M.

30. The method of claim 27, wherein determining the TBS value to be the numerical value related to the second number M comprises:

determining the TBS value based on a third TBS value mapping relationship, the TBS value being greater than or equal to a first number L, and the TBS value being a minimum integer multiple of a fourth number, wherein the first number L is a length of a first bit sequence to be transmitted, the fourth number is a quotient of the second number M and a fifth number P, and the fifth number P is related to an encoding mode adopted by the first bit sequence, wherein not all candidate TBS values in the third TBS value mapping relationship are numerical values related to the second number M.

31. The method of any one of claims 27 to 30, wherein the numerical value related to the second number M comprises at least one of:

an integer multiple of the second number M; or,
an integer multiple of one-half of the second number M.

32. The method of any one of claims 29 to 31, wherein

difference numbers M correspond to a same TBS value mapping relationship; or,
a part of the different second numbers M corresponds to a same TBS value mapping relationship, and another part of the different second numbers M corresponds to different TBS value mapping relationships; or,
different second numbers M correspond to different TBS value mapping relationships.

33. A method for preprocessing a bit sequence, performed by a receiving end device, the method comprising:

receiving On Off Keying (OOK) symbols corresponding to a second bit sequence having a length of a third number L',
wherein the second bit sequence is obtained by processing, by a sending end device, a first bit sequence in a case where a first number L corresponding to the first bit sequence is not an integer multiple of a second number M, and the second bit sequence is configured to be divided into at least one sequence segment having a length of the second number M for OOK modulation, to obtain M OOK symbols corresponding to each sequence segment.

34. The method of claim 33, wherein the second bit sequence having the third number L' is obtained by performing bit padding on the first bit sequence by the sending end device.

35. The method of claim 34, wherein the second bit sequence having the third number L' is obtained by adding at least one padding bit to a tail of the first bit sequence by the sending end device.

36. The method of claim 35, wherein the first bit sequence is any one of:

an original bit sequence for which encoding is not required;
an original bit sequence before encoding;
an encoded bit sequence after encoding is performed on the original bit sequence; and
an encoded bit sequence after at least one stage encoding of multi-stage encoding is performed on the original bit sequence.

37. The method of claim 35, wherein the at least one padding bit comprises any one of:

a bit sequence having all values of 1;
a bit sequence having all values of 0;
a bit sequence having values arranged according to a fixed law, the fixed law comprising at least one bit having a value of 1 and at least one bit having a value of 0; and
a bit sequence determined based on the second number M.

38. The method of any one of claims 35 to 37, further comprising:
receiving length indication information of the at least one padding bit.

39. The method of claim 38, wherein receiving the length indication information of the at least one padding bit comprises:

receiving a first indication bit sequence, values of the first indication bit sequence being equal to a length of the at least one padding bit; or,
receiving a second indication bit sequence, values of the second indication bit sequence having a mapping relationship with the length of the at least one padding bit; or,
receiving a first bitmap having a length of the second number M, wherein a number of bits having a first value in the first bitmap is used to indicate the length of the at least one padding bit.

40. The method of claim 39, wherein a position of the bit having the first value in the first bitmap is associated with a position of the at least one padding bit in the second bit sequence.

41. The method of claim 38, wherein receiving the length indication information of the at least one padding bit comprises:
receiving a target sequence used to indicate a length of the at least one padding bit, wherein the target sequence is obtained by mapping bits having a first value in the second bit sequence by the sending end device during a process of OOK-modulating the second bit sequence into OOK symbols.

42. The method of claim 41, wherein

the values of the target sequence are used to indicate the length of the at least one padding bit; or,
an index of the target sequence is used to indicate the length of the at least one padding bit; or,
a cyclic shift value corresponding to the target sequence is used to indicate the length of the at least one padding bit.

43. The method of claim 42, wherein the target sequence is at least one of:

Pseudo-Noise (PN) sequence;
Zadoff-Chu (ZC) sequence;
Maximum-length (M) sequence.

44. The method of claim 33, wherein the second bit sequence of the third number L' is obtained by performing bit selection on the first bit sequence by the sending end device.

45. The method of claim 44, wherein

in a case where the first number L is smaller than the third number L', the second bit sequence having the third number L' is obtained by performing cyclic selection on the first bit sequence by the sending end device; and/or in a case where the first number L is greater than the third number L', the second bit sequence having the third number L' is obtained by performing truncated selection on the first bit sequence by the sending end device.

46. The method of claim 45, wherein in the case where the first number L is smaller than the third number L', the second bit sequence having the third number L' is obtained by cyclically selecting at least one repetitive bit from the first bit sequence by the sending end device.

47. The method of claim 46, further comprising:
receiving length indication information of the at least one repetitive bit.

48. The method of claim 47, wherein receiving the length indication information of the at least one repetitive bit comprises:

receiving a second indication bit sequence, values of the third indication bit sequence being equal to a length of the at least one repetitive bit; or, receiving a fourth indication bit sequence, values of the fourth indication bit sequence having a mapping relationship with the length of the at least one repetitive bit; or, receiving a second bitmap having a length of the second number M, wherein a number of bits having a first value in the second bitmap is used to indicate the length of the at least one repetitive bit.

49. The method of claim 48, wherein a position of the bit having the first value in the second bitmap is associated with a position of the at least one repetitive bit in the second bit sequence.

50. The method of claim 47, wherein receiving the length indication information of the at least one repetitive bit comprises:
receiving a target sequence used to indicate a length of the at least one repetitive bit, wherein the target sequence is obtained by mapping bits having a first value in the second bit sequence by the sending end device during a process of OOK-modulating the second bit sequence into OOK symbols.

51. The method of claim 50, wherein

the values of the target sequence are used to indicate the length of the at least one repetitive bit; or, an index of the target sequence is used to indicate the length of the at least one repetitive bit; or, a cyclic shift value corresponding to the target sequence is used to indicate the length of the at least one repetitive bit.

52. The method of claim 51, wherein the target sequence is at least one of:

Pseudo-Noise (PN) sequence;
Zadoff-Chu (ZC) sequence;
Maximum-length (M) sequence.

53. The method of any one of claims 44 to 52, further comprising:
sending indication information used for determining a selection start point for the bit selection.

54. The method of any one of claims 33 to 53, further comprising:
sending indication information used for indicating the second number M.

55. A method for receiving an On Off Keying (OOK) symbol, performed by a receiving end device, the method comprising:

receiving at least one set of OOK symbols forming sequence(s), wherein each set of OOK symbols forming the sequence comprises a second number M of OOK symbols, wherein the at least one set of OOK symbols forming sequence(s) corresponds to a first bit sequence, a last one among the at least one set of OOK symbols forming sequence(s) comprises a third type of symbol, the third type of symbol is an OOK symbol different from a first type of symbol and a second type of symbol, the first type of symbol corresponds to a bit having a first value, and the second type of symbol corresponds to a bit having a second value.

56. A method for determining a Transport Block Size (TBS) value, performed by a receiving end device, the method comprising:

sending a TBS mapping relationship, wherein the TBS mapping relationship is configured to be provided to a sending end device for determining the TBS value to be a numerical value related to a second number M, the second number M being a number of OOK symbols transmitted within a preset duration, and the preset duration being determined by a basic time-domain unit in a cellular communication system or a Wireless Fidelity (WiFi) system.

57. The method of claim 56, wherein the TBS mapping relationship comprises a first TBS value mapping relationship, and candidate TBS values in the first TBS value mapping relationship are all numerical values related to the second number M.

58. The method of claim 56, wherein the TBS mapping relationship further comprises a second TBS value mapping relationship or a third TBS value mapping relationship, and not all candidate TBS values in the second TBS value mapping relationship and the third TBS value mapping relationship are values related to the second number M.

59. The method of any one of claims 56 to 58, wherein the numerical value related to the second number M comprises at least one of:

an integer multiple of the second number M; or,
an integer multiple of one-half of the second number M.

60. The method of any one of claims 56 to 59, wherein

difference numbers M correspond to a same TBS value mapping relationship; or,
a part of the different second numbers M corresponds to a same TBS value mapping relationship, and another part of the different second numbers M corresponds to different TBS value mapping relationships; or,
different second numbers M correspond to different TBS value mapping relationships.

61. An apparatus for preprocessing a bit sequence, comprising:

an acquiring module, configured to acquire a first bit sequence having a length of a first number L;
a processing module, configured to, in a case where the first number L is not an integer multiple of a second number M, process the first bit sequence into a second bit sequence having a length of a third number L', wherein the second bit sequence is configured to be divided into at least one sequence segment having a length of the second number M for On Off Keying (OOK) modulation, to obtain M OOK symbols corresponding to each sequence segment.

62. An apparatus for generating an On Off Keying (OOK) symbol, comprising:

an acquiring module, configured to acquire a first bit sequence having a length of a first number L;
a modulating module, configured to divide the first bit sequence into at least one sequence segment according to a second number M for OOK modulation to obtain an OOK symbol sequence corresponding to each sequence segment, wherein the OOK symbol sequence comprises a first type of symbol and/or a second type of symbol, the first type of symbol corresponds to a bit having a first value, and the second type of symbol corresponds to a bit having a second value; and
an adding module, configured to, in a case where a number of bits in a last sequence segment is smaller than the second number M, add a third type of symbol to the OOK symbol sequence corresponding to the last sequence segment to enable the OOK symbol sequence corresponding to the last sequence segment to comprise at least M OOK symbols,
wherein the third type of symbol is an OOK symbol different from the first type of symbol and the second type of symbol.

63. An apparatus for sending an On Off Keying (OOK) symbol, comprising:

a sending module, configured to send at least one set of OOK symbols forming sequence(s), wherein each set of OOK symbols forming the sequence comprises a second number M of OOK symbols,

wherein the at least one set of OOK symbols forming sequence(s) corresponds to a first bit sequence, a last one among the at least one set of OOK symbols forming sequence(s) comprises a third type of symbol, the third type of symbol is an OOK symbol different from a first type of symbol and a second type of symbol, the first type of symbol corresponds to a bit having a first value, and the second type of symbol corresponds to a bit having a second value.

64. An apparatus for determining a Transport Block Size (TBS) value, comprising:

a determining module, configured to determine the TBS value to be a numerical value related to a second number M, the second number M being a number of OOK symbols transmitted within a preset duration, and the preset duration being determined by a basic time-domain unit in a cellular communication system or a Wireless Fidelity (WiFi) system.

65. An apparatus for preprocessing a bit sequence, comprising:

a receiving module, configured to receive On Off Keying (OOK) symbols corresponding to a second bit sequence having a length of a third number L',

wherein the second bit sequence is obtained by processing, by a sending end device, a first bit sequence in a case where a first number L corresponding to the first bit sequence is not an integer multiple of a second number M, and the second bit sequence is configured to be divided into at least one sequence segment having a length of the second number M for OOK modulation, to obtain M OOK symbols corresponding to each sequence segment.

66. An apparatus for receiving an On Off Keying (OOK) symbol, comprising:

a receiving module, configured to receive at least one set of OOK symbols forming sequence(s), wherein each set of OOK symbols forming the sequence comprises a second number M of OOK symbols,

wherein the at least one set of OOK symbols forming sequence(s) corresponds to a first bit sequence, a last one among the at least one set of OOK symbols forming sequence(s) comprises a third type of symbol, the third type of symbol is an OOK symbol different from a first type of symbol and a second type of symbol, the first type of symbol corresponds to a bit having a first value, and the second type of symbol corresponds to a bit having a second value.

67. An apparatus for determining a Transport Block Size (TBS) value, comprising:

a sending module, configured to send a TBS mapping relationship, wherein the TBS mapping relationship is configured to be provided to a sending end device for determining the TBS value to be a numerical value related to a second number M, the second number M being a number of OOK symbols transmitted within a preset duration, and the preset duration being determined by a basic time-domain unit in a cellular communication system or a Wireless Fidelity (WiFi) system.

68. A terminal, comprising a processor, wherein:

the processor is configured to acquire a first bit sequence having a length of a first number L; and
the processor is further configured to, in a case where the first number L is not an integer multiple of a second number M, process the first bit sequence into a second bit sequence having a length of a third number L',
wherein the second bit sequence is configured to be divided into at least one sequence segment having a length of the second number M for On Off Keying (OOK) modulation, to obtain M OOK symbols corresponding to each sequence segment.

69. A terminal, comprising a processor, wherein:

the processor is configured to acquire a first bit sequence having a length of a first number L; and
the processor is further configured to divide the first bit sequence into at least one sequence segment according to a second number M for OOK modulation to obtain an OOK symbol sequence corresponding to each sequence segment, wherein the OOK symbol sequence comprises a first type of symbol and/or a second type of symbol, the first type of symbol corresponds to a bit having a first value, and the second type of symbol corresponds to a bit having a second value; and
the processor is further configured to, in a case where a number of bits in a last sequence segment is smaller than the second number M, add a third type of symbol to the OOK symbol sequence corresponding to the last sequence segment to enable the OOK symbol sequence corresponding to the last sequence segment to comprise at least M OOK symbols,

wherein the third type of symbol is an OOK symbol different from the first type of symbol and the second type of symbol.

70. A terminal, comprising a processor and a transmitter connected with the processor, wherein:

the transmitter is configured to send at least one set of OOK symbols forming sequence(s), wherein each set of OOK symbols forming the sequence comprises a second number M of OOK symbols,

wherein the at least one set of OOK symbols forming sequence(s) corresponds to a first bit sequence, a last one among the at least one set of OOK symbols forming sequence(s) comprises a third type of symbol, the third type of symbol is an OOK symbol different from a first type of symbol and a second type of symbol, the first type of symbol corresponds to a bit having a first value, and the second type of symbol corresponds to a bit having a second value.

71. A terminal, comprising a processor, wherein:
the processor is configured to determine the TBS value to be a numerical value related to a second number M, the second number M being a number of OOK symbols transmitted within a preset duration, and the preset duration being determined by a basic time-domain unit in a cellular communication system or a Wireless Fidelity (WiFi) system.

72. A network device, comprising a processor and a receiver connected with the processor, wherein:

the receiver is configured to receive On Off Keying (OOK) symbols corresponding to a second bit sequence having a length of a third number L',

wherein the second bit sequence is obtained by processing, by a sending end device, a first bit sequence in a case where a first number L corresponding to the first bit sequence is not an integer multiple of a second number M, and the second bit sequence is configured to be divided into at least one sequence segment having a length of the second number M for OOK modulation, to obtain M OOK symbols corresponding to each sequence segment.

73. A network device, comprising a processor and a receiver connected with the processor, wherein:

the receiver is configured to receive at least one set of OOK symbols forming sequence(s), wherein each set of OOK symbols forming the sequence comprises a second number M of OOK symbols,

wherein the at least one set of OOK symbols forming sequence(s) corresponds to a first bit sequence, a last one among the at least one set of OOK symbols forming sequence(s) comprises a third type of symbol, the third type of symbol is an OOK symbol different from a first type of symbol and a second type of symbol, the first type of symbol corresponds to a bit having a first value, and the second type of symbol corresponds to a bit having a second value.

74. A network device, comprising a processor and a transmitter connected with the processor, wherein:
the transmitter is configured send a TBS mapping relationship, wherein the TBS mapping relationship is configured to be provided to a sending end device for determining the TBS value to be a numerical value related to a second number M, the second number M being a number of OOK symbols transmitted within a preset duration, and the preset duration being determined by a basic time-domain unit in a cellular communication system or a Wireless Fidelity (WiFi) system.

75. A computer-readable storage medium having stored thereon a computer program that is executed by a processor to perform the method for preprocessing a bit sequence of any one of claims 1 to 24, and/or the method for generating an On Off Keying (OOK) symbol of claim 25, and/or the method for transmitting an OOK symbol of claim 26, and/or the method for determining a Transport Block Size (TBS) value of any one of claims 27 to 32, and/or the method for preprocessing a bit sequence of any one of claims 33 to 54, and/or the method for receiving an OOK symbol of claim 55, and/or the method for determining a TBS value of claims 56 to 60.

76. A chip, comprising a programmable logic circuit and/or program instructions, wherein when running on a terminal or a network device, the chip is configured to perform the method for preprocessing a bit sequence of any one of claims 1 to 24, and/or the method for generating an On Off Keying (OOK) symbol of claim 25, and/or the method for transmitting an OOK symbol of claim 26, and/or the method for determining a Transport Block Size (TBS) value of any one of claims 27 to 32, and/or the method for preprocessing a bit sequence of any one of claims 33 to 54, and/or the method for receiving an OOK symbol of claim 55, and/or the method for determining a TBS value of claims 56 to 60.

**77.** A computer program product, comprising computer instructions stored in a computer readable storage medium, wherein a processor of a communication device reads the computer instructions from the computer-readable storage medium and executes the computer instructions to cause the communication device to perform the method for preprocessing a bit sequence of any one of claims 1 to 24, and/or the method for generating an On Off Keying (OOK) symbol of claim 25, and/or the method for transmitting an OOK symbol of claim 26, and/or the method for determining a Transport Block Size (TBS) value of any one of claims 27 to 32, and/or the method for preprocessing a bit sequence of any one of claims 33 to 54, and/or the method for receiving an OOK symbol of claim 55, and/or the method for determining a TBS value of claims 56 to 60.

**78.** A computer program that is executed by a processor of a communication device to perform the method for preprocessing a bit sequence of any one of claims 1 to 24, and/or the method for generating an On Off Keying (OOK) symbol of claim 25, and/or the method for transmitting an OOK symbol of claim 26, and/or the method for determining a Transport Block Size (TBS) value of any one of claims 27 to 32, and/or the method for preprocessing a bit sequence of any one of claims 33 to 54, and/or the method for receiving an OOK symbol of claim 55, and/or the method for determining a TBS value of claims 56 to 60.

Communication system 100

Energy harvesting module 141

Backscatter communication module 142

Low power computing module 143

Sensor module 144

Memory 145

Energy supply/trigger

Network
device 120

Backscatter
communication

Zero-power
device 140

**FIG. 1**

RF

$C$

$+q$

$-q$

$R_L$

**FIG. 2**

Network device 120

Zero-power device 140

Carrier 131

Antenna 146

TX121

AMP122

Logic
processing
module
147

Energy
harvesting
module
141

RX123

LNA124

Reflected signal 132

**FIG. 3**

**FIG. 4**

NRZ coding

1 0 1 1 0 0 1 0 1 0 0 1 0 1 1

Manchester coding

1 0 1 1 0 0 1 0 1 0 0 1 0 1 1

URZ coding

1 0 1 1 0 0 1 0 1 0 0 1 0 1 1

DBP coding

1 0 1 1 0 0 1 0 1 0 0 1 0 1 1

Miller coding

1 0 1 1 0 0 1 0 1 0 0 1 0 1 1

**FIG. 5**

**FIG. 6**

**FIG. 7**

**FIG. 8**

**FIG. 9**

Preprocessing

A first bit sequence having a length of a first number L is acquired — 220

In a case where the first number L is not an integer multiple of a second number M, the first bit sequence is processed into a second bit sequence having a length of a third number L' — 240

OOK modulation

The second bit sequence is divided to obtain at least one sequence segment having a length of a second number M — 260

OOK-modulation is performed on each sequence segment to obtain M OOK symbols corresponding to each sequence segment — 280

**FIG. 10**

Original bit sequence

| Preprocessing | → | OOK modulation | → | OOK symbols | →

**FIG. 11**

Original bit sequence    Encoded bit sequence

| Encoder | → | Preprocessing | → | OOK modulation | → | OOK symbols | →

**FIG. 12**

EP 4 770 026 A1

First-stage encoded bit sequence

Nth-stage encoded bit sequence

First-stage encoder → Second-stage encoder → ...... → Nth-stage encoder → Preprocessing → OOK modulation → OOK symbols →

**FIG. 13**

**Preprocessing**

A first bit sequence having a length of a first number L is acquired — 220

In a case where the first number L is not an integer multiple of a second number M, bit padding is performed on the first bit sequence to obtain the second bit sequence having a length of the third number L' — 241

**OOK modulation**

The second bit sequence is divided to obtain at least one sequence segment having a length of a second number M — 260

OOK-modulation is performed on each sequence segment to obtain M OOK symbols corresponding to each sequence segment — 280

**FIG. 14**

**Preprocessing**

A first bit sequence having a length of a first number L is acquired — 220

In a case where the first number L is not an integer multiple of a second number M, at least one padding bit is added at a tail of the first bit sequence to obtain the second bit sequence having a length of the third number L' — 2411

**OOK modulation**

The second bit sequence is divided to obtain at least one sequence segment having a length of a second number M — 260

OOK-modulation is performed on each sequence segment to obtain M OOK symbols corresponding to each sequence segment — 280

**FIG. 15**

$$1001\,1110\,10\,\overline{[\,11\,]}$$

Sequence segment 1: 1001

Sequence segment 2: 1110

Sequence segment 3: 10 [ 11 ]

**FIG. 16**

| 1 | 0 | 1 | 1 |
|---|---|---|---|
| OOK-on | OOK-off | OOK-on | OOK-on |

**FIG. 17**

| CP | OOK symbol 1 | OOK symbol 2 | OOK symbol 3 | OOK symbol 4 |
|---|---|---|---|---|

CP determination manner 1

| OOK symbol 1 | OOK symbol 2 | OOK symbol 3 | OOK symbol 4 |
|---|---|---|---|

CP determination manner 2

**FIG. 18**

| 1 | 0 | 1 | 1 |
|---|---|---|---|
| OOK-on | OOK-off | OOK-on | OOK-on |

**FIG. 19**

Length indication information of the at least one padding bit is sent    320

**FIG. 20**

M OOK symbols

| Length indication information | | OOK symbol(s) corresponding to padding bit(s) |
|---|---|---|

**FIG. 21**

M OOK symbols

| Length indication information | | OOK symbol(s) corresponding to padding bit(s) |

**FIG. 22**

A first indication bit sequence is sent ⌒321

**FIG. 23**

A second indication bit sequence is sent ⌒322

**FIG. 24**

A first bitmap having a length of a second number M is sent ⌒323

**FIG. 25**

| 1 | ...... | 1 | 0 | | ...... | | OOK symbol 1 | ...... | OOK symbol M-1 | OOK symbol M |

Bitmap

M

**FIG. 26**

During a process of OOK-modulating the second bit sequence into OOK symbols, bits having a first value in the second bit sequence are mapped into a target sequence 324

OOK symbols corresponding to the second bit sequence are sent 325

**FIG. 27**

Preprocessing

A first bit sequence having a length of a first number L is acquired 220

In a case where the first number L is not an integer multiple of a second number M, bit selection is performed on the first bit sequence to obtain the second bit sequence having a length of the third number L' 242

OOK modulation

The second bit sequence is divided to obtain at least one sequence segment having a length of a second number M 260

OOK-modulation is performed on each sequence segment to obtain M OOK symbols corresponding to each sequence segment 280

**FIG. 28**

Preprocessing

A first bit sequence having a length of a first number L is acquired — 220

In a case where the first number L is smaller than the third number L', cyclic selection is performed on the first bit sequence to obtain the second bit sequence having a length of the third number L' — 2421

OOK modulation

The second bit sequence is divided to obtain at least one sequence segment having a length of a second number M — 260

OOK-modulation is performed on each sequence segment to obtain M OOK symbols corresponding to each sequence segment — 280

**FIG. 29**

Second bit sequence

Repetitive bit(s)          Repetitive bit(s)

First bit sequence

**FIG. 30**

Length indication information of at least one repetitive bit is sent — 420

**FIG. 31**

A third indication bit sequence is sent — 421

**FIG. 32**

A fourth indication bit sequence is sent /— 422

**FIG. 33**

A second bitmap having a length of a second number M is sent /— 423

**FIG. 34**

During a process of OOK-modulating the second bit sequence into OOK symbols, bits having a first value in the second bit sequence are mapped into a target sequence /— 424

OOK symbols corresponding to the second bit sequence are sent /— 425

**FIG.35**

Preprocessing

A first bit sequence having a length of a first number L is acquired /— 220

In a case where the first number L is smaller than the third number L', truncated selection is performed on the first bit sequence to obtain the second bit sequence having a length of the third number L' /— 2422

OOK modulation

The second bit sequence is divided to obtain at least one sequence segment having a length of a second number M /— 260

OOK-modulation is performed on each sequence segment to obtain M OOK symbols corresponding to each sequence segment /— 280

**FIG. 36**

First bit sequence

Second bit sequence

**FIG. 37**

A selection start point for the bit selection is determined ⌐520

**FIG. 38**

A first bit sequence having a length of a first number L is acquired ⌐620

The first bit sequence is divided into at least one sequence segment according to a second number M for OOK modulation to obtain an OOK symbol sequence corresponding to each sequence segment ⌐640

In a case where a number of bits in a last sequence segment is smaller than the second number M, a third type of symbol is added to the OOK symbol sequence corresponding to the last sequence segment to enable the OOK symbol sequence corresponding to the last sequence segment to include at least M OOK symbols ⌐660

**FIG. 39**

| 1 | 0 | 1 | 0 | 1 | 0 |
|---|---|---|---|---|---|
| OOK-on | OOK-off | OOK-on,OOK-off | OOK-on,OOK-off |

**FIG. 40**

At least one set of OOK symbols forming sequence(s) is sent ⌐720

**FIG. 41**

A TBS value is determined to be a numerical value related to a second number M ⟋ 820

**FIG. 42**

A TBS value is determined based on a first TBS value mapping relationship ⟋ 821

**FIG. 43**

A TBS value is determined based on a second TBS value mapping relationship ⟋ 822

**FIG. 44**

A TBS value is determined based on a third TBS value mapping relationship ⟋ 823

**FIG. 45**

OOK symbols corresponding to a second bit sequence having a length of a third number L' are received ⟋ 920

**FIG. 46**

Length indication information of at least one padding bit is received ⟋ 1020

**FIG. 47**

A first bit sequence is received ⟋ 1021

**FIG. 48**

A second bit sequence is received — 1022

**FIG. 49**

A first bitmap having a length of a second number M is received — 1023

**FIG. 50**

A target sequence is received — 1024

**FIG. 51**

Length indication information of at least one repetitive bit is received — 1120

**FIG. 52**

A third bit sequence is received — 1121

**FIG. 53**

A fourth bit sequence is received — 1122

**FIG. 54**

A second bitmap having a length of a second number M is received — 1123

**FIG. 55**

A target bit is received — 1124

**FIG. 56**

Indication information used for determining a selection start point for bit selection is sent — 1220

**FIG. 57**

Indication information used for indicating a second number M is sent — 1320

**FIG. 58**

At least one set of OOK symbols forming sequence(s) is received — 1420

**FIG. 59**

A TBS mapping relationship is sent — 1520

**FIG. 60**

```
┌─────────────┐
│  Acquiring  │ ⌐ 6110
│   module    │
└─────────────┘
       │
┌─────────────┐
│ Processing  │ ⌐ 6120
│   module    │
└─────────────┘
       │
┌─────────────┐
│ Modulating  │ ⌐ 6130
│   module    │
└─────────────┘
       │
┌─────────────┐
│Sending module│ ⌐ 6140
└─────────────┘
       │
┌─────────────┐
│ Determining │ ⌐ 6150
│   module    │
└─────────────┘
```

**FIG. 61**

```
┌─────────────┐
│  Acquiring  │ ⌐ 6210
│   module    │
└─────────────┘
       │
       ▼
┌─────────────┐
│ Modulating  │ ⌐ 6220
│   module    │
└─────────────┘
       │
       ▼
┌─────────────┐
│Adding module│ ⌐ 6230
└─────────────┘
```

**FIG. 62**

```
┌─────────────┐
│Sending module│ ⌐ 6310
└─────────────┘
```

**FIG. 63**

Determining
module ⌐6410

**FIG. 64**

Receiving
module ⌐6510

Sending module ⌐6520

**FIG. 65**

Receiving
module ⌐6610

**FIG. 66**

Sending module ⌐6710

**FIG. 67**

Processor ⌐6801    Memory ⌐6804

⌐6805

Bus

Transceiver

Receiver ⌐6802

⌐6806

Transmitter ⌐6803

**FIG. 68**

## INTERNATIONAL SEARCH REPORT

| International application No. |
| --- |
| **PCT/CN2023/128852** |

**A. CLASSIFICATION OF SUBJECT MATTER**

H04L27/26(2006.01)i

According to International Patent Classification (IPC) or to both national classification and IPC

**B. FIELDS SEARCHED**

Minimum documentation searched (classification system followed by classification symbols)

IPC:H04L: H04W

Documentation searched other than minimum documentation to the extent that such documents are included in the fields searched

Electronic data base consulted during the international search (name of data base and, where practicable, search terms used)

3GPP; CNTXT; ENTXT; ENTXTC; DWPI: OOK, 开关键控, 通断键控, 调制, 长度, 数量, 大小, 个数, 序列, 比特, 分段, 分组, 传输块大小, TBS, on off keying, modulation, length, number, size, sequence, bit, segment, group, transport block size

**C. DOCUMENTS CONSIDERED TO BE RELEVANT**

| Category* | Citation of document, with indication, where appropriate, of the relevant passages | Relevant to claim No. |
| --- | --- | --- |
| X | HUAWEI et al. "R1-2302341, Signal Design and Procedure for LP-WUS" *3GPP TSG-RAN WG1 Meeting #112bis-e,* 26 April 2023 (2023-04-26), sections 2.1.1 and 2.1.2, and Appendix | 1-78 |
| A | CN 116916423 A (SAMSUNG ELECTRONICS CO., LTD.) 20 October 2023 (2023-10-20) entire document | 1-78 |
| A | US 2018152333 A1 (QUALCOMM INC.) 31 May 2018 (2018-05-31) entire document | 1-78 |
| A | WO 2018147572 A1 (LG ELECTRONICS INC.) 16 August 2018 (2018-08-16) entire document | 1-78 |
| A | WO 2023122909 A1 (GUANGDONG OPPO MOBILE TELECOMMUNICATIONS CORP., LTD.) 06 July 2023 (2023-07-06) entire document | 1-78 |
| A | CN 113498598 A (IDAC HOLDINGS, INC.) 12 October 2021 (2021-10-12) entire document | 1-78 |

☐ Further documents are listed in the continuation of Box C. ☑ See patent family annex.

| * Special categories of cited documents: | |
| --- | --- |
| "A" document defining the general state of the art which is not considered to be of particular relevance | "T" later document published after the international filing date or priority date and not in conflict with the application but cited to understand the principle or theory underlying the invention |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **09 July 2024** | **17 July 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

| INTERNATIONAL SEARCH REPORT<br>Information on patent family members | | | | International application No.<br>**PCT/CN2023/128852** | | | |
|---|---|---|---|---|---|---|---|
| Patent document<br>cited in search report | | | Publication date<br>(day/month/year) | Patent family member(s) | | | Publication date<br>(day/month/year) |
| CN | 116916423 | A | 20 October 2023 | TW | 202345632 | A | 16 November 2023 |
| | | | | US | 2023337135 | A1 | 19 October 2023 |
| | | | | DE | 102023109139 | A1 | 19 October 2023 |
| | | | | KR | 20230148753 | A | 25 October 2023 |
| US | 2018152333 | A1 | 31 May 2018 | WO | 2018098471 | A1 | 31 May 2018 |
| WO | 2018147572 | A1 | 16 August 2018 | None | | | |
| WO | 2023122909 | A1 | 06 July 2023 | None | | | |
| CN | 113498598 | A | 12 October 2021 | WO | 2020172549 | A1 | 27 August 2020 |
| | | | | BR | 112021016607 | A2 | 03 November 2021 |
| | | | | US | 2022095228 | A1 | 24 March 2022 |
| | | | | EP | 3928482 | A1 | 29 December 2021 |
| | | | | JP | 2022521331 | A | 06 April 2022 |
| | | | | IN | 202117037518 | A | 03 December 2021 |

Form PCT/ISA/210 (patent family annex) (July 2022)